(19) Europäisches Patentamt / European Patent Office / Office européen des brevets

(11) **EP 3 399 683 A1**

(12) **EUROPEAN PATENT APPLICATION**
published in accordance with Art. 153(4) EPC

(43) Date of publication:
**07.11.2018 Bulletin 2018/45**

(51) Int Cl.:
***H04L 1/16*** *(2006.01)*

(21) Application number: **16888829.5**

(22) Date of filing: **05.02.2016**

(86) International application number:
**PCT/CN2016/073684**

(87) International publication number:
**WO 2017/133005 (10.08.2017 Gazette 2017/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **SHI, Jie**
  **Shenzhen**
  **Guangdong 518129 (CN)**

• **ZHANG, Xingwei**
  **Shenzhen**
  **Guangdong 518129 (CN)**
• **LI, Chao**
  **Shenzhen**
  **Guangdong 518129 (CN)**
• **LIU, Zhe**
  **Shenzhen**
  **Guangdong 518129 (CN)**

(74) Representative: **Pfenning, Meinig & Partner mbB**
**Patent- und Rechtsanwälte**
**Theresienhöhe 11a**
**80339 München (DE)**

(54) **FEEDBACK INFORMATION SENDING METHOD AND APPARATUS**

(57) The present invention pertains to the field of communications technologies and discloses a method and an apparatus for sending feedback information. The method includes: receiving a transport block or transport block control information sent by a base station on a first time-frequency resource in a downlink DL; determining a time domain resource of a second time-frequency resource based on a resource location of the first time-frequency resource, duration of a first transmission time interval in the DL, and duration of a second transmission time interval in an uplink UL; and sending feedback information on the second time-frequency resource in the UL, where the feedback information is used to indicate a receiving status of the transport block. In the present invention, because the location of the time-frequency resource for sending the feedback information about the received transport block is agreed, efficiency of data transmission between UE and the base station can be improved, and accuracy of data transmission can be improved. Further, because a time-frequency resource for retransmitting the transport block is agreed, a success rate of receiving retransmitted transport blocks can be improved, and efficiency of data transmission can be further improved.

EP 3 399 683 A1

| Base station | | UE |
|---|---|---|

300. A base station sends second scheduling information in a DL to UE

301. The UE receives the second scheduling information sent by the base station, where the second scheduling information carries first time-frequency resource information

302. The base station sends a transport block or transport block control information on a first time-frequency resource in the downlink DL to the UE

303. The UE receives the transport block or the transport block control information sent by the base station on the first time-frequency resource in the downlink DL

304. The UE determines a time domain resource of a second time-frequency resource according to a resource location of the first time-frequency resource, duration of a first transmission time interval in the DL, and duration of a second transmission time interval in an uplink UL

TO
FIG. 3B

TO
FIG. 3B

FIG. 3A

CONT.
FROM
FIG. 3A

CONT.
FROM
FIG. 3A

305. The UE sends feedback information on the second time-frequency resource in the UL

306. The base station receives the feedback information on the second time-frequency resource in the UL

307. If the feedback information indicates that the transport block is received successfully, the process ends

308. If the feedback information indicates that the transport block is not received successfully, the base station sends third scheduling information to the UE

309. The UE receives the third scheduling information sent by the base station, where the third scheduling information includes at least a third time-frequency resource

310. The base station retransmits the transport block on the third time-frequency resource to the UE

311. The UE receives the transport block retransmitted by the base station on the third time-frequency resource

FIG. 3B

**Description**

**TECHNICAL FIELD**

The present invention relates to the field of communications technologies, and in particular, to a method and an apparatus for sending feedback information.

**BACKGROUND**

Continuous development of communications technologies, and higher requirements of people on communication speeds, reliability, and the like push emergence of LTE (Long Term Evolution, Long Term Evolution technology). During data transmission in an LTE communications system, due to a time-varying characteristic of a channel and a multipath effect of a spatial channel, in the data transmission process, a data packet loss and a data transmission error often occur. Consequently, a data transmission rate and a success rate are reduced. For the foregoing case, in the LTE communications system, the foregoing problem is usually resolved by using a HARQ (Hybrid Automatic Repeat request, hybrid automatic repeat request) technology. The technology is a combination of an ARQ (Automatic Repeat re-Quest, automatic repeat request) technology and an FEC (Forward Error Correction, forward error correction) technology, allowing a receive end to quickly request, when finding that transmitted data is incorrect, retransmission of a data block that is received incorrectly. Retransmission may be quickly requested after each data packet is transmitted. In this way, impact of the incorrectly received data packet on performance of the receive end is minimized.

In an LTE network, signals are transmitted in units of radio frames. Each radio frame is composed of subframes, each subframe includes two timeslots, and each timeslot includes a fixed quantity of OFDM (Orthogonal Frequency Division Multiplexing, orthogonal frequency division multiplexing) symbols. Under a prerequisite that duration of an uplink subframe is the same as duration of a downlink subframe and that granularities of all subframes are 1 ms, a HARQ technology implementing complete and successful data transmission may be as follows: In a DL (DownLink, downlink), an eNB (eNodeB, eNodeB) sends a TB (Transport Block, transport packet) in an $n^{th}$ downlink subframe to UE (User Equipment, user equipment); the UE feeds back ACK/NACK (acknowledgement or negative acknowledgement) information in an uplink $(n+4)^{th}$ subframe to the eNB; if the eNB receives the ACK information, it indicates that the UE successfully decodes the TB sent by the eNB, and in this case, the eNB releases the TB; if the eNB receives the NACK information, the eNB sends the TB or an RV (Redundancy Version, redundancy version) of the TB again to successfully transmit the TB. In a UL (UpLink, uplink), the UE sends a TB in an $n^{th}$ uplink subframe to the eNB; the eNB feeds back ACK/NACK information in an $(n+4)^{th}$ downlink subframe; if the UE receives the ACK information, the UE releases the TB; if the UE receives the NACK information, the UE sends the TB or an RV version of the TB again in a fixed time domain location in an $(n+8)^{th}$ uplink subframe to successfully transmit the TB.

In a process of implementing the present invention, the inventors find that the prior art has at least the following problem:

When the granularities of the subframes are 1 ms, each subframe includes two timeslots, and each timeslot includes seven OFDM symbols. If data transmission is performed based on the foregoing HARQ technology, relatively low efficiency of data transmission is caused.

**SUMMARY**

To improve efficiency of data transmission between UE and a base station and improve accuracy of data transmission, embodiments of the present invention provide a method and an apparatus for sending feedback information. The technical solutions are as follows:

According to a first aspect, a method for sending feedback information is provided, and the method includes:

receiving a transport block or transport block control information sent by a base station on a first time-frequency resource in a downlink DL;

determining a time domain resource of a second time-frequency resource based on a resource location of the first time-frequency resource, duration of a first transmission time interval in the DL, and duration of a second transmission time interval in an uplink UL; and

sending feedback information on the second time-frequency resource in the UL, where the feedback information is used to indicate a receiving status of the transport block.

In a first possible implementation of the first aspect of the present invention, after the receiving transport block control information sent by a base station on a first time-frequency resource in a downlink DL, the method further includes:

receiving, on a time-frequency resource indicated by the transport block control information, the transport block sent by the base station, where

the transport block control information includes at least transmission location information of the transport block or information of a physical layer downlink control channel PDCCH related to the transport block.

In a second possible implementation of the first aspect of the present invention, the determining a time domain resource of a second time-frequency resource based on a resource location of the first time-frequency resource, duration of a first transmission time interval in the DL, and duration of a second transmission time interval in an uplink UL includes:

determining duration of any second transmission time interval frame in an $(n+k)^{th}$ subframe location corresponding to the DL, in the UL as the time domain resource of the second time-frequency resource; or
determining duration of any second transmission time interval frame other than a first second transmission time interval frame and/or a last second transmission time interval frame in an $(n+k)^{th}$ subframe location corresponding to the DL, in the UL as the time domain resource of the second time-frequency resource; or
determining duration of a second transmission time interval frame specified in an $(n+k)^{th}$ subframe location corresponding to the DL, in the UL as the time domain resource of the second time-frequency resource; or
determining duration of an $m^{th}$ second transmission time interval frame after a $[k*(TTI\_DL/TTI\_UL)]^{th}$ second transmission time interval frame after an $n^{th}$ subframe in the UL as the time domain resource of the second time-frequency resource, where "[ ]" indicates a rounding operator, TTI_DL and TTI_UL respectively indicate duration of one transmission time interval in the DL and duration of one transmission time interval in the UL, and m is a natural number; where
n indicates a subframe number of a subframe in which the first time-frequency resource is located.

In a third possible implementation of the first aspect of the present invention, the method further includes:
receiving second transmission time interval frame configuration information, and determining the time domain resource of the second time-frequency resource according to the second transmission time interval configuration information, where the second transmission time interval frame configuration information carries time domain resource information of the second time-frequency resource.

In a fourth possible implementation of the first aspect of the present invention, the time domain resource information of the second time-frequency resource is time domain resource information corresponding to a second transmission time interval frame specified in an $(n+k)^{th}$ subframe location corresponding to the DL, in the UL; or
the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, where "[ ]" indicates a rounding operator, TTI_DL and TTI_UL respectively indicate duration of one transmission time interval in the DL and duration of one transmission time interval in the UL, and m is a natural number; where
n indicates a subframe number of a subframe in which the first time-frequency resource is located.

In a fifth possible implementation of the first aspect of the present invention, the receiving second transmission time interval frame configuration information includes:

receiving information carried on a PDCCH and sent by the base station, where the information carried on the PDCCH includes at least the second transmission time interval frame configuration information; or
receiving Medium Access Control layer MAC signaling sent by the base station, where the MAC signaling carries the second transmission time interval frame configuration information; or
receiving radio resource control protocol layer RRC signaling sent by the base station, where the RRC signaling carries the second transmission time interval frame configuration information; or
receiving the second transmission time interval frame configuration information with reference to at least two of the foregoing three methods.

In a sixth possible implementation of the first aspect of the present invention, the second time-frequency resource information is indicated by a subframe number of the network system and a subframe number of a second transmission time interval frame in the UL in a subframe of the network system; or
the time domain resource information of the second time-frequency resource is indicated by an absolute time; or
the time domain resource information of the second time-frequency resource is indicated by an absolute number of a second transmission time interval frame in the UL; or
the time domain resource information of the second time-frequency resource is indicated by an index value of a second transmission time interval frame in the UL; or
the time domain resource information of the second time-frequency resource is indicated by a subframe number of the network system and an index value of a second transmission time interval frame in the UL.

In a seventh possible implementation of the first aspect of the present invention, the method further includes: receiving first scheduling information sent by the base station, where the first scheduling information carries the time domain resource information of the second time-frequency resource.

In an eighth possible implementation of the first aspect of the present invention, if the transport block is cross-subframe scheduled, the first time-frequency resource is a location in a subframe used for the base station to send a transport block carried in a downlink shared channel PDSCH; or

the first time-frequency resource is a location in a subframe used for the base station to send information carried on a PDCCH.

In a ninth possible implementation of the first aspect of the present invention, the method further includes:

when the duration of the first transmission time interval in the DL is shorter than or equal to the duration of the second transmission time interval in the UL, if a plurality of transport blocks sent by the base station are received in a subframe in the DL, sending, on the second time-frequency resource, a plurality of pieces of feedback information carried in a PUCCH about the plurality of transport blocks; or

when the duration of the first transmission time interval in the DL is shorter than or equal to the duration of the second transmission time interval in the UL, if a finite quantity of transport blocks sent by the base station are received in a subframe in the DL, sending, on the second time-frequency resource, a finite quantity of pieces of feedback information carried in the PUCCH about the finite quantity of transport blocks.

In a tenth possible implementation of the first aspect of the present invention, before the sending, on the second time-frequency resource, a plurality of pieces of feedback information carried in a PUCCH about the plurality of transport blocks, the method further includes:

receiving second scheduling information sent by the base station, where the second scheduling information carries the first time-frequency resource information, and the first time-frequency resource information includes a time-frequency resource location of a first transmission time interval frame.

In an eleventh possible implementation of the first aspect of the present invention, the receiving second scheduling information sent by the base station includes:

receiving information carried on a PDCCH and sent by the base station, where the information carried on the PDCCH carries the second scheduling information; or

receiving MAC signaling sent by the base station, where the MAC signaling carries the second scheduling information; or

receiving RRC signaling sent by the base station, where the RRC signaling carries the second scheduling information; or

receiving the second scheduling information with reference to at least two of the foregoing three methods.

In a twelfth possible implementation of the first aspect of the present invention, the method further includes:

if a feedback bit is used to indicate the plurality of pieces of feedback information, when the plurality of transport blocks are all received correctly, the feedback bit is 1; or

when at least one of the plurality of transport blocks is not received correctly, the feedback bit is 0.

In a thirteenth possible implementation of the first aspect of the present invention, a time domain resource of the first time-frequency resource is a time domain resource corresponding to an $m^{th}$ first transmission time interval frame of an $n^{th}$ subframe in the DL.

In a fourteenth possible implementation of the first aspect of the present invention, the method further includes:

receiving the information carried on the PDCCH and sent by the base station, where the information carried on the PDCCH includes at least a value of m; or

receiving Medium Access Control layer MAC signaling sent by the base station, where the MAC signaling carries a value of m; or

receiving radio resource control protocol layer RRC signaling sent by the base station, where the RRC signaling carries a value of m; or

receiving a value of m with reference to at least two of the foregoing three methods.

In a fifteenth possible implementation of the first aspect of the present invention, after the plurality of pieces of feedback information carried in the PUCCH about the plurality of transport blocks or the finite quantity of pieces of feedback information carried in the PUCCH about the finite quantity of transport blocks are sent on the second time-frequency resource, the method further includes:

receiving third scheduling information sent by the base station, where the third scheduling information includes at least the third time-frequency resource; and
receiving the transport block retransmitted by the base station on the third time-frequency resource.

In a sixteenth possible implementation of the first aspect of the present invention, a time domain resource of the third time-frequency resource is a time domain resource corresponding to an $m'^{th}$ first transmission time interval frame of an $(n+k+k')^{th}$ subframe in the DL, where k' is a natural number, and m' is a natural number.

In a seventeenth possible implementation of the first aspect of the present invention, the method further includes:

receiving fourth scheduling information sent by the base station, where the fourth scheduling information carries a value of m'; or
receiving fifth scheduling information sent by the base station, and determining a value of m' according to the fifth scheduling information.

In an eighteenth possible implementation of the first aspect of the present invention, before the sending, on the second time-frequency resource, a plurality of pieces of feedback information carried in a PUCCH about the plurality of transport blocks, the method further includes:
receiving, in a subframe in the DL, information carried in a plurality of short transmission time interval frames on a shared channel PDSCH and sent by the base station, where the information carried in the plurality of short transmission time interval frames includes at least the plurality of transport blocks.

In a nineteenth possible implementation of the first aspect of the present invention, the method further includes:

determining a time domain resource in which information carried in a first short transmission time interval frame in the plurality of short transmission time interval frames is located, as a time domain resource of the first time-frequency resource; or
determining a time domain resource in which information carried in a short transmission time interval frame specified in the plurality of short transmission time interval frames is located, as a time domain resource of the first time-frequency resource; or
determining a time domain resource in which control information corresponding to the plurality of short transmission time interval frames is located, as a time domain resource of the first time-frequency resource.

In a twentieth possible implementation of the first aspect of the present invention, a value of k is 4 and/or a natural number less than 4.

In a twenty-first possible implementation of the first aspect of the present invention, duration of each time interval frame in the UL and the DL is shorter than or equal to 0.5 ms, and each time interval frame includes Z OFDM symbols, where Z is any integer that is greater than or equal to 1 and less than or equal to 7.

According to a second aspect, a method for sending feedback information is provided, and the method includes:

receiving a transport block sent by user equipment UE on a first time-frequency resource in an uplink UL;
determining a time domain resource of a second time-frequency resource according to a location of the first time-frequency resource, duration of a first transmission time interval in a downlink DL, and duration of a second transmission time interval in the UL; and
sending feedback information on the second time-frequency resource in the DL, where the feedback information is used to indicate a receiving status of the transport block.

In a first possible implementation of the second aspect of the present invention, before the receiving a transport block sent by user equipment UE on a first time-frequency resource in an uplink UL, the method further includes:
sending physical layer downlink control signaling to the UE, so that the UE determines the first time-frequency resource in the UL according to the physical layer downlink control signaling.

In a second possible implementation of the second aspect of the present invention, a time domain resource of the first time-frequency resource is a time domain resource corresponding to any second transmission time interval frame in an $n^{th}$ subframe location in the UL; or
a time domain resource of the first time-frequency resource is a time domain resource corresponding to any second transmission time interval frame other than a first second transmission time interval frame and/or a last second transmission time interval frame in an $n^{th}$ subframe location in the UL; or

a time domain resource of the first time-frequency resource is a time domain resource corresponding to an mth second transmission time interval frame in an nth subframe location in the UL, where m is a natural number; where
n indicates a subframe number of a subframe in which the first time-frequency resource is located.

In a third possible implementation of the second aspect of the present invention, the determining a time domain resource of a second time-frequency resource according to a location of the first time-frequency resource, duration of a first transmission time interval in a downlink DL, and duration of a second transmission time interval in the UL includes:

determining duration of any second transmission time interval frame in an (n+k)th subframe location corresponding to the UL, in the DL as the time domain resource of the second time-frequency resource; or

determining duration of any second transmission time interval frame other than a first second transmission time interval frame and/or a last second transmission time interval frame in an (n+k)th subframe location corresponding to the UL, in the DL as the time domain resource of the second time-frequency resource; or

determining duration of a second transmission time interval frame specified in an (n+k)th subframe location corresponding to the UL, in the DL as the time domain resource of the second time-frequency resource; or

determining duration of an mth second transmission time interval frame after a [k*(TTI_DL/TTI_UL)][th] second transmission time interval frame after an nth subframe in the DL as the time domain resource of the second time-frequency resource, where "[ ]" indicates a rounding operator, TTI_DL and TTI_UL respectively indicate duration of one transmission time interval in the DL and duration of one transmission time interval in the UL, and m is greater than or equal to 1 and less than or equal to a quantity of second transmission time interval frames included in a subframe in the UL; where
n indicates a subframe number of a subframe in which the first time-frequency resource is located.

In a fourth possible implementation of the second aspect of the present invention, the method further includes: sending second transmission time interval frame configuration information to the UE, where the second transmission time interval frame configuration information carries the time domain resource of the second time-frequency resource, and the second transmission time interval frame configuration information is used to instruct the UE to receive, on the second time-frequency resource, the feedback information sent by a base station.

In a fifth possible implementation of the second aspect of the present invention, time domain resource information of the second time-frequency resource is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or
time domain resource information of the second time-frequency resource is indicated by an index value of a second transmission time interval frame in the DL; or
time domain resource information of the second time-frequency resource is indicated by a subframe number of the network system and an index value of a second transmission time interval frame in the DL.

In a sixth possible implementation of the second aspect of the present invention, after the determining a time domain resource of a second time-frequency resource according to a location of the first time-frequency resource, duration of a first transmission time interval in a downlink DL, and duration of a second transmission time interval in the UL, the method further includes:
sending the second time-frequency resource information to the UE.

In a seventh possible implementation of the second aspect of the present invention, the second time-frequency resource information is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or
time domain resource information of the second time-frequency resource is indicated by an index value of a second transmission time interval frame in the DL; or
time domain resource information of the second time-frequency resource is indicated by a subframe number of the network system and an index value of a second transmission time interval frame in the UL.

In an eighth possible implementation of the second aspect of the present invention, the sending second transmission time interval frame configuration information to the UE includes:

sending information carried on a PDCCH to the UE, where the information carried on the PDCCH carries at least the second time-frequency resource information; or
sending first scheduling information to the UE, where the first scheduling information carries at least the second transmission time interval frame configuration information, so that the UE determines the second time-frequency resource according to the second transmission time interval frame configuration information.

In a ninth possible implementation of the second aspect of the present invention, the PDCCH further carries the first time-frequency resource used for instructing the UE to send information carried in a physical layer uplink shared channel PUSCH, and the PUSCH carries at least the transport block.

In a tenth possible implementation of the second aspect of the present invention, the sending feedback information on the second time-frequency resource in the DL includes:

determining a resource location of a physical hybrid repeat indicator channel PHICH of the UE based on a resource location of a physical layer uplink shared channel PUSCH of the UE; and
sending the PHICH on the second time-frequency resource in the DL, where the PHICH carries the feedback information.

In an eleventh possible implementation of the second aspect of the present invention, if the duration of the first transmission time interval in the DL is longer than the duration of the second transmission time interval in the UL, and transport blocks received in a subframe in the UL are a plurality of transport blocks, and frequency domain resources occupied by the plurality of transport blocks are different from each other, the sending feedback information on the second time-frequency resource in the DL includes:

sending feedback information about the plurality of transport blocks on the second time-frequency resource in the DL.

In a twelfth possible implementation of the second aspect of the present invention, before the sending feedback information on the second time-frequency resource in the DL, the method further includes:

when the duration of the first transmission time interval in the DL is longer than the duration of the second transmission time interval in the UL, receiving, in a subframe in the DL, a plurality of transport blocks sent by the UE, where frequency domain resources occupied by the plurality of transport blocks are different from each other.

In a thirteenth possible implementation of the second aspect of the present invention, the method further includes: when the duration of the first transmission time interval in the DL is longer than the duration of the second transmission time interval in the UL, if a plurality of transport blocks sent by the UE are received in a subframe in the DL, and frequency domain resources occupied by the plurality of transport blocks are the same, for feedback information about the plurality of transport blocks, performing the step of determining a resource location of a physical hybrid repeat indicator channel PHICH of the UE based on a resource location of a PUSCH of the UE.

In a fourteenth possible implementation of the second aspect of the present invention, the determining a resource location of a physical hybrid repeat indicator channel PHICH of the UE based on a resource location of a PUSCH of the UE includes:

according to formulas:

$$n_{PHICH}^{group} = (N_{PRB}^{UL} * (m-1) + I_{PRB\_RA} + n_{DMRS}) \bmod N_{PHICH}^{group} + I_{PHICH} N_{PHICH}^{group}$$

and

$$n_{PHICH}^{seq} = ([(N_{PRB}^{UL} * (m-1) + I_{PRB\_RA}) / N_{PHICH}^{group}] + n_{DMRS}) \bmod 2N_{SF}^{PHICH},$$

where m indicates any one of the plurality of transport blocks sent by the UE in an $m^{th}$ second transmission time interval frame after an $n^{th}$ subframe in the UL, $N_{SF}^{PHICH} = 4$, $n_{PHICH}^{group}$ indicates a group number of the PHICH, $n_{PHICH}^{seq}$ indicates a sequence number of the PHICH, $n_{DMRS}$ indicates a numeric value related to a DMRS, $N_{PHICH}^{group}$ indicates a group number of the PHICH, $I_{PHICH}$ is used to indicate a spreading factor for PHICH modulation, and $N_{PRB}^{UL}$ is an index value of data in a minimum frequency block in a frequency domain.

In a fifteenth possible implementation of the second aspect of the present invention, after the sending feedback information on the second time-frequency resource in the DL, the method further includes:

sending second scheduling information to the UE, where the second scheduling information includes at least the third time-frequency resource; and

receiving the transport block retransmitted by the UE on the third time-frequency resource.

In a sixteenth possible implementation of the second aspect of the present invention, a time interval between the third time-frequency resource and the second time-frequency resource is different from a time interval between the second time-frequency resource and the first time-frequency resource.

In a seventeenth possible implementation of the second aspect of the present invention, a value of k is 4 and/or a natural number less than 4.

In an eighteenth possible implementation of the second aspect of the present invention, duration of each time interval frame in the UL and the DL is shorter than or equal to 0.5 ms, and each time interval frame includes Z OFDM symbols, where Z is any integer that is greater than or equal to 1 and less than or equal to 7.

According to a third aspect, a method for sending feedback information is provided, and the method includes:

receiving, by UE, a transport block sent by a base station, and when a first time-frequency resource in a UL on which the UE sends a DMRS collides with a time-frequency resource in the UL on which the UE sends feedback information about the transport block, determining a second time-frequency resource in the UL according to the first time-frequency resource in the UL; and

sending the feedback information on the second time-frequency resource in the UL to the base station, where the feedback information is used to indicate a transmission status of the transport block.

In a first possible implementation of the third aspect of the present invention, the determining a second time-frequency resource in the UL according to the first time-frequency resource in the UL includes:

determining a time-frequency resource that is nearest to the first time-frequency resource in a time domain and in which a PUCCH is located, as the second time-frequency resource; or

determining a time-frequency resource that is specified with the first time-frequency resource in a time domain and in which a PUCCH is located, as the second time-frequency resource; or

determining either of two time-frequency resources adjacent to the first time-frequency resource, as the second time-frequency resource; or

determining a time-frequency resource specified in two time-frequency resources adjacent to the first time-frequency resource, as the second time-frequency resource; or

determining a time-frequency resource in a fixed location previous or next to the first time-frequency resource, as the second time-frequency resource.

In a second possible implementation of the third aspect of the present invention, the method further includes: receiving, by the UE, at least two transport blocks sent within a same transmission time interval or adjacent or contiguous transmission time intervals, and when a time-frequency resource for sending feedback information about one transport block in the at least two data blocks collides with the first time-frequency resource, combining the feedback information about the transport block with feedback information about other transport blocks in the at least two transport blocks.

In a third possible implementation of the third aspect of the present invention, the method further includes: determining a specified time-frequency resource in which a PUCCH is located, as the second time-frequency resource.

In a fourth possible implementation of the third aspect of the present invention, the method further includes: sending, on the first time-frequency resource in the UL, the feedback information to the base station by carrying the feedback information in the DMRS.

In a fifth possible implementation of the third aspect of the present invention, the sending, on the first time-frequency resource in the UL, the feedback information to the base station by carrying the feedback information in the DMRS includes:

sending, on the first time-frequency resource in the UL, the DMRS carrying the feedback information in a form of bit information or a form of reference signal amplitude information to the base station.

In a sixth possible implementation of the third aspect of the present invention, a transmission time interval in the UL is an OFDM symbol.

According to a fourth aspect, a method for sending feedback information is provided, and the method includes:

sending a transport block or transport block control information on a first time-frequency resource in a DL to UE; and

receiving feedback information sent by the UE on a second time-frequency resource, where the feedback information is used to indicate a receiving status of the transport block.

In a first possible implementation of the fourth aspect of the present invention, after the sending transport block control information on a first time-frequency resource in a DL to UE, the method further includes:
sending the transport block on a time-frequency resource indicated by the transport block control information to the UE, where the transport block control information includes at least transmission location information of the transport block or information of a physical layer downlink control channel PDCCH related to the transport block.

In a second possible implementation of the fourth aspect of the present invention, the method further includes:
sending second transmission time interval frame configuration information to the UE, so that the UE determines a time domain resource of the second time-frequency resource according to the second transmission time interval configuration information, where the second transmission time interval frame configuration information carries time domain resource information of the second time-frequency resource.

In a third possible implementation of the fourth aspect of the present invention, the second transmission time interval frame configuration information includes:

the time domain resource information of the second time-frequency resource, where the time domain resource information of the second time-frequency resource is time domain resource information corresponding to a second transmission time interval frame specified in an $(n+k)^{th}$ subframe location corresponding to the DL, in the UL; or
the time domain resource information of the second time-frequency resource, where the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, where "[ ]" indicates a rounding operator, TTI_DL and TTI_UL respectively indicate duration of one transmission time interval in the DL and duration of one transmission time interval in the UL, and m is a natural number; where
n indicates a subframe number of a subframe in which the first time-frequency resource is located.

In a fourth possible implementation of the fourth aspect of the present invention, the sending second transmission time interval frame configuration information to the UE includes:

sending information carried on a PDCCH to the UE, where the information carried on the PDCCH includes at least the second transmission time interval frame configuration information; or
sending Medium Access Control layer MAC signaling to the UE, where the MAC signaling carries the second transmission time interval frame configuration information; or
sending radio resource control protocol layer RRC signaling to the UE, where the RRC signaling carries the second transmission time interval frame configuration information; or
sending the second transmission time interval frame configuration information with reference to at least two of the foregoing three methods.

In a fifth possible implementation of the fourth aspect of the present invention, the second time-frequency resource information is indicated by a subframe number of the network system and a subframe number of a second transmission time interval frame in the UL in a subframe of the network system; or
the time domain resource information of the second time-frequency resource is indicated by an absolute time; or
the time domain resource information of the second time-frequency resource is indicated by an absolute number of a second transmission time interval frame in the UL; or
the time domain resource information of the second time-frequency resource is indicated by an index value of a second transmission time interval frame in the UL; or
the time domain resource information of the second time-frequency resource is indicated by a subframe number of the network system and an index value of a second transmission time interval frame in the UL.

In a sixth possible implementation of the fourth aspect of the present invention, the method further includes:
sending first scheduling information to the UE, where the first scheduling information carries the time domain resource information of the second time-frequency resource.

In a seventh possible implementation of the fourth aspect of the present invention, if the transport block is cross-subframe scheduled, the first time-frequency resource is a location in a subframe used for sending a transport block carried in a downlink shared channel PDSCH; or
the first time-frequency resource is a location in a subframe used for sending information carried on a PDCCH.

In an eighth possible implementation of the fourth aspect of the present invention, the method further includes:

when duration of a first transmission time interval in the DL is shorter than or equal to duration of a second transmission time interval in the UL, if a base station sends a plurality of transport blocks in a subframe in the DL, receiving, on the second time-frequency resource, a plurality of pieces of feedback information carried in a PUCCH about the plurality of transport blocks and sent by the UE; or
when duration of a first transmission time interval in the DL is shorter than or equal to duration of a second transmission time interval in the UL, if the base station sends a finite quantity of transport blocks in a subframe in the DL, receiving, on the second time-frequency resource, a finite quantity of pieces of feedback information carried in the PUCCH about the finite quantity of transport blocks and sent by the UE.

In a ninth possible implementation of the fourth aspect of the present invention, before the receiving feedback information sent by the UE on a second time-frequency resource, the method further includes:
sending second scheduling information to the UE, where the second scheduling information carries the first time-frequency resource information, and the first time-frequency resource information includes a time-frequency resource location of a first transmission time interval frame.
In a tenth possible implementation of the fourth aspect of the present invention, the sending second scheduling information to the UE includes:

sending information carried on a PDCCH to the UE, where the information carried on the PDCCH includes at least the second transmission time interval frame configuration information; or
sending Medium Access Control layer MAC signaling to the UE, where the MAC signaling carries the second transmission time interval frame configuration information; or
sending radio resource control protocol layer RRC signaling to the UE, where the RRC signaling carries the second transmission time interval frame configuration information; or
sending the second transmission time interval frame configuration information with reference to at least two of the foregoing three methods.

In an eleventh possible implementation of the fourth aspect of the present invention, a time domain resource of the first time-frequency resource is a time domain resource corresponding to an $m^{th}$ first transmission time interval frame of an $n^{th}$ subframe in the DL.
In a twelfth possible implementation of the fourth aspect of the present invention, the method further includes:

sending information carried on a PDCCH to the UE, where the information carried on the PDCCH includes at least a value of m; or
sending Medium Access Control layer MAC signaling to the UE, where the MAC signaling carries a value of m; or
sending radio resource control protocol layer RRC signaling to the UE, where the RRC signaling carries a value of m; or
sending a value of m with reference to at least two of the foregoing three methods.

In a thirteenth possible implementation of the fourth aspect of the present invention, after the receiving feedback information sent by the UE on a second time-frequency resource, or after receiving a finite quantity of pieces of feedback information about a finite quantity of transport blocks, the method further includes:

sending third scheduling information to the UE, where the third scheduling information includes at least the third time-frequency resource; and
retransmitting the transport block on the third time-frequency resource to the UE.

In a fourteenth possible implementation of the fourth aspect of the present invention, a time domain resource of the third time-frequency resource is a time domain resource corresponding to an $m'^{th}$ first transmission time interval frame of an $(n+k+k')^{th}$ subframe in the DL, where k' is a natural number, and m' is a natural number.
In a fifteenth possible implementation of the fourth aspect of the present invention, the method further includes:

sending fourth scheduling information to the UE, where the fourth scheduling information carries a value of m'; or
sending fifth scheduling information to the UE, so that the UE determines a value of m' according to the fifth scheduling information.

In a sixteenth possible implementation of the fourth aspect of the present invention, before the receiving, on the second time-frequency resource, a plurality of pieces of feedback information carried in a PUCCH about the plurality of transport blocks and sent by the UE, the method further includes:
sending, in a subframe in the DL, information carried in a plurality of short transmission time interval frames on a shared channel PDSCH to the UE, where the information carried in the plurality of short transmission time interval frames includes at least the plurality of transport blocks.
In a seventeenth possible implementation of the fourth aspect of the present invention, a value of k is 4 and/or a natural number less than 4.

In an eighteenth possible implementation of the fourth aspect of the present invention, duration of each time interval frame in the UL and the DL is shorter than or equal to 0.5 ms, and each time interval frame includes Z OFDM symbols, where Z is any integer that is greater than or equal to 1 and less than or equal to 7.

According to a fifth aspect, a method for sending feedback information is provided, and the method includes:

sending a transport block on a first time-frequency resource in a UL to a base station; and
receiving feedback information sent by the base station on a second time-frequency resource in a DL, where the feedback information is used to indicate a receiving status of the transport block.

In a first possible implementation of the fifth aspect of the present invention, before the sending a transport block on a first time-frequency resource in a UL to a base station, the method further includes:
receiving physical layer downlink control signaling sent by the base station, and determining the first time-frequency resource in the UL according to the physical layer downlink control signaling.

In a second possible implementation of the fifth aspect of the present invention, a time domain resource of the first time-frequency resource is a time domain resource corresponding to any second transmission time interval frame in an $n^{th}$ subframe location in the UL; or
a time domain resource of the first time-frequency resource is a time domain resource corresponding to any second transmission time interval frame other than a first second transmission time interval frame and/or a last second transmission time interval frame in an $n^{th}$ subframe location in the UL; or
a time domain resource of the first time-frequency resource is a time domain resource corresponding to an $m^{th}$ second transmission time interval frame in an $n^{th}$ subframe location in the UL, where m is a natural number; where
n indicates a subframe number of a subframe in which the first time-frequency resource is located.

In a third possible implementation of the fifth aspect of the present invention, the method further includes:
receiving second transmission time interval frame configuration information sent by the base station, where the second transmission time interval frame configuration information carries a time domain resource of the second time-frequency resource, and the second transmission time interval frame configuration information is used to instruct UE to receive, on the second time-frequency resource, the feedback information sent by the base station.

In a fourth possible implementation of the fifth aspect of the present invention, time domain resource information of the second time-frequency resource is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or
time domain resource information of the second time-frequency resource is indicated by an index value of a second transmission time interval frame in the DL; or
time domain resource information of the second time-frequency resource is indicated by a subframe number of the network system and an index value of a second transmission time interval frame in the DL.

In a fifth possible implementation of the fifth aspect of the present invention, before the receiving feedback information sent by the base station on a second time-frequency resource in a DL, the method further includes:
receiving second time-frequency resource information sent by the base station.

In a sixth possible implementation of the fifth aspect of the present invention, the second time-frequency resource information is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or
time domain resource information of the second time-frequency resource is indicated by an index value of a second transmission time interval frame in the DL; or
time domain resource information of the second time-frequency resource is indicated by a subframe number of the network system and an index value of a second transmission time interval frame in the DL.

In a seventh possible implementation of the fifth aspect of the present invention, the receiving second transmission time interval frame configuration information sent by the base station includes:

receiving information carried on a PDCCH and sent by the base station, where the information carried on the PDCCH carries at least the second time-frequency resource information; or
receiving first scheduling information sent by the base station, where the first scheduling information carries at least the second transmission time interval frame configuration information, and determining the second time-frequency resource according to the second transmission time interval frame configuration information.

In an eighth possible implementation of the fifth aspect of the present invention, the PDCCH further carries the first time-frequency resource used for instructing the UE to send information carried in a physical layer uplink shared channel PUSCH, and the PUSCH carries at least the transport block.

In a ninth possible implementation of the fifth aspect of the present invention, the receiving feedback information sent by the base station on a second time-frequency resource in a DL includes:
receiving a PHICH sent by the base station on the second time-frequency resource in the DL, where the PHICH carries the feedback information.

In a tenth possible implementation of the fifth aspect of the present invention, if duration of a first transmission time interval in the DL is longer than duration of a second transmission time interval in the UL, and transport blocks sent in a subframe in the UL are a plurality of transport blocks, and frequency domain resources occupied by the plurality of transport blocks are different from each other, the sending feedback information on the second time-frequency resource in the DL includes:
receiving feedback information about the plurality of transport blocks that is sent by the base station on the second time-frequency resource in the DL.

In an eleventh possible implementation of the fifth aspect of the present invention, before the receiving feedback information sent by the base station on a second time-frequency resource in a DL, the method further includes:
when duration of a first transmission time interval in the DL is longer than duration of a second transmission time interval in the UL, sending a plurality of transport blocks in a subframe in the DL to the base station, where frequency domain resources occupied by the plurality of transport blocks are different from each other.

In a twelfth possible implementation of the fifth aspect of the present invention, after the receiving feedback information sent by the base station on a second time-frequency resource in a DL, the method further includes:

> receiving second scheduling information sent by the base station, where the second scheduling information includes at least the third time-frequency resource; and
> retransmitting the transport block on the third time-frequency resource to the base station.

In a thirteenth possible implementation of the fifth aspect of the present invention, a time interval between the third time-frequency resource and the second time-frequency resource is different from a time interval between the second time-frequency resource and the first time-frequency resource.

In a fourteenth possible implementation of the fifth aspect of the present invention, duration of each time interval frame in the UL and the DL is shorter than or equal to 0.5 ms, and each time interval frame includes Z OFDM symbols, where Z is any integer that is greater than or equal to 1 and less than or equal to 7.

According to a sixth aspect, a method for sending feedback information is provided, and the method includes:

> sending a transport block to UE; and
> receiving feedback information sent by the UE on a second time-frequency resource in a UL, where the feedback information is used to indicate a transmission status of the transport block.

In a first possible implementation of the sixth aspect of the present invention, the sending a transport block to UE includes:
sending at least two transport blocks within a same transmission time interval or adjacent or contiguous transmission time intervals.

In a second possible implementation of the sixth aspect of the present invention, the method further includes:
receiving, on a first time-frequency resource in the UL, a DMRS sent by the UE, where the DMRS carries the feedback information.

In a third possible implementation of the sixth aspect of the present invention, that the DMRS carries the feedback information includes:
the DMRS carries the feedback information in a form of bit information or a form of reference signal amplitude information.

In a fourth possible implementation of the sixth aspect of the present invention, a transmission time interval in the UL is an OFDM symbol.

According to a seventh aspect, an apparatus for sending feedback information is provided, and the apparatus includes:

> a receiving module, configured to receive a transport block or transport block control information sent by a base station on a first time-frequency resource in a downlink DL;
> a determining module, configured to determine a time domain resource of a second time-frequency resource based on a resource location of the first time-frequency resource, duration of a first transmission time interval in the DL, and duration of a second transmission time interval in an uplink UL; and

a sending module, configured to send feedback information on the second time-frequency resource that is in the UL and is determined by the determining module, where the feedback information is used to indicate a receiving status of the transport block.

In a first possible implementation of the seventh aspect of the present invention, the receiving module is further configured to receive, on a time-frequency resource indicated by the transport block control information, the transport block sent by the base station, where the transport block control information includes at least transmission location information of the transport block or information of a physical layer downlink control channel PDCCH related to the transport block.

In a second possible implementation of the seventh aspect of the present invention, the determining module is configured to:

determine duration of any second transmission time interval frame in an $(n+k)^{th}$ subframe location corresponding to the DL, in the UL as the time domain resource of the second time-frequency resource; or

determine duration of any second transmission time interval frame other than a first second transmission time interval frame and/or a last second transmission time interval frame in an $(n+k)^{th}$ subframe location corresponding to the DL, in the UL as the time domain resource of the second time-frequency resource; or

determine duration of a second transmission time interval frame specified in an $(n+k)^{th}$ subframe location corresponding to the DL, in the UL as the time domain resource of the second time-frequency resource; or

determine duration of an $m^{th}$ second transmission time interval frame after a $[k*(TTLDL/TTLUL)]^{th}$ second transmission time interval frame after an $n^{th}$ subframe in the UL as the time domain resource of the second time-frequency resource, where "[ ]" indicates a rounding operator, TTI_DL and TTI_UL respectively indicate duration of one transmission time interval in the DL and duration of one transmission time interval in the UL, and m is a natural number; where

n indicates a subframe number of a subframe in which the first time-frequency resource is located.

In a third possible implementation of the seventh aspect of the present invention, the receiving module is further configured to receive second transmission time interval frame configuration information, and determine the time domain resource of the second time-frequency resource according to the second transmission time interval configuration information, where the second transmission time interval frame configuration information carries time domain resource information of the second time-frequency resource.

In a fourth possible implementation of the seventh aspect of the present invention, the time domain resource information of the second time-frequency resource is time domain resource information corresponding to a second transmission time interval frame specified in an $(n+k)^{th}$ subframe location corresponding to the DL, in the UL; or

the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, where "[ ]" indicates a rounding operator, TTI_DL and TTI_UL respectively indicate duration of one transmission time interval in the DL and duration of one transmission time interval in the UL, and m is a natural number; where

n indicates a subframe number of a subframe in which the first time-frequency resource is located.

In a fifth possible implementation of the seventh aspect of the present invention, the receiving module is further configured to:

receive information carried on a PDCCH and sent by the base station, where the information carried on the PDCCH includes at least the second transmission time interval frame configuration information; or

receive Medium Access Control layer MAC signaling sent by the base station, where the MAC signaling carries the second transmission time interval frame configuration information; or

receive radio resource control protocol layer RRC signaling sent by the base station, where the RRC signaling carries the second transmission time interval frame configuration information; or

receive the second transmission time interval frame configuration information with reference to at least two of the foregoing three methods.

In a sixth possible implementation of the seventh aspect of the present invention, the second time-frequency resource information is indicated by a subframe number of the network system and a subframe number of a second transmission time interval frame in the UL in a subframe of the network system; or

the time domain resource information of the second time-frequency resource is indicated by an absolute time; or

the time domain resource information of the second time-frequency resource is indicated by an absolute number of a second transmission time interval frame in the UL; or

the time domain resource information of the second time-frequency resource is indicated by an index value of a second transmission time interval frame in the UL; or

the time domain resource information of the second time-frequency resource is indicated by a subframe number of the network system and an index value of a second transmission time interval frame in the UL.

In a seventh possible implementation of the seventh aspect of the present invention, the receiving module is further configured to:

receive first scheduling information sent by the base station, where the first scheduling information carries the time domain resource information of the second time-frequency resource.

In an eighth possible implementation of the seventh aspect of the present invention, if the transport block is cross-subframe scheduled, the first time-frequency resource is a location in a subframe used for the base station to send a transport block carried in a downlink shared channel PDSCH; or

the first time-frequency resource is a location in a subframe used for the base station to send information carried on a PDCCH.

In a ninth possible implementation of the seventh aspect of the present invention, the sending module is further configured to:

when the duration of the first transmission time interval in the DL is shorter than or equal to the duration of the second transmission time interval in the UL, if a plurality of transport blocks sent by the base station are received in a subframe in the DL, send, on the second time-frequency resource, a plurality of pieces of feedback information carried in a PUCCH about the plurality of transport blocks; or

when the duration of the first transmission time interval in the DL is shorter than or equal to the duration of the second transmission time interval in the UL, if a finite quantity of transport blocks sent by the base station are received in a subframe in the DL, send, on the second time-frequency resource, a finite quantity of pieces of feedback information carried in the PUCCH about the finite quantity of transport blocks.

In a tenth possible implementation of the seventh aspect of the present invention, the receiving module is further configured to:

receive second scheduling information sent by the base station, where the second scheduling information carries the first time-frequency resource information, and the first time-frequency resource information includes a time-frequency resource location of a first transmission time interval frame.

In an eleventh possible implementation of the seventh aspect of the present invention, that the receiving module is further configured to receive second scheduling information sent by the base station includes:

receiving information carried on a PDCCH and sent by the base station, where the information carried on the PDCCH carries the second scheduling information; or

receiving MAC signaling sent by the base station, where the MAC signaling carries the second scheduling information; or

receiving RRC signaling sent by the base station, where the RRC signaling carries the second scheduling information; or

receiving the second scheduling information with reference to at least two of the foregoing three methods.

In a twelfth possible implementation of the seventh aspect of the present invention, if a feedback bit is used to indicate the plurality of pieces of feedback information, when the plurality of transport blocks are all received correctly, the feedback bit is 1; or

when at least one of the plurality of transport blocks is not received correctly, the feedback bit is 0.

In a thirteenth possible implementation of the seventh aspect of the present invention, a time domain resource of the first time-frequency resource is a time domain resource corresponding to an $m^{th}$ first transmission time interval frame of an $n^{th}$ subframe in the DL.

In a fourteenth possible implementation of the seventh aspect of the present invention, the receiving module is further configured to:

receive the information carried on the PDCCH and sent by the base station, where the information carried on the PDCCH includes at least a value of m; or

receive Medium Access Control layer MAC signaling sent by the base station, where the MAC signaling carries a value of m; or

receive radio resource control protocol layer RRC signaling sent by the base station, where the RRC signaling carries a value of m; or
receive a value of m with reference to at least two of the foregoing three methods.

In a fifteenth possible implementation of the seventh aspect of the present invention, the receiving module is further configured to:

receive third scheduling information sent by the base station, where the third scheduling information includes at least the third time-frequency resource; and
receive the transport block retransmitted by the base station on the third time-frequency resource.

In a sixteenth possible implementation of the seventh aspect of the present invention, a time domain resource of the third time-frequency resource is a time domain resource corresponding to an $m'^{th}$ first transmission time interval frame of an $(n+k+k')^{th}$ subframe in the DL, where k' is a natural number, and m' is a natural number.

In a seventeenth possible implementation of the seventh aspect of the present invention, the receiving module is further configured to:

receive fourth scheduling information sent by the base station, where the fourth scheduling information carries a value of m'; or
receive fifth scheduling information sent by the base station, and determine a value of m' according to the fifth scheduling information.

In an eighteenth possible implementation of the seventh aspect of the present invention, the receiving module is further configured to:
receive, in a subframe in the DL, information carried in a plurality of short transmission time interval frames on a shared channel PDSCH and sent by the base station, where the information carried in the plurality of short transmission time interval frames includes at least the plurality of transport blocks.

In a nineteenth possible implementation of the seventh aspect of the present invention, the apparatus further includes a first time-frequency resource determining module, where the first time-frequency resource determining module is configured to:

determine a time domain resource in which information carried in a first short transmission time interval frame in the plurality of short transmission time interval frames is located, as a time domain resource of the first time-frequency resource; or
determine a time domain resource in which information carried in a short transmission time interval frame specified in the plurality of short transmission time interval frames is located, as a time domain resource of the first time-frequency resource; or
determine a time domain resource in which control information corresponding to the plurality of short transmission time interval frames is located, as a time domain resource of the first time-frequency resource.

In a twentieth possible implementation of the seventh aspect of the present invention, a value of k is 4 and/or a natural number less than 4.

In a twenty-first possible implementation of the seventh aspect of the present invention, duration of each time interval frame in the UL and the DL is shorter than or equal to 0.5 ms, and each time interval frame includes Z OFDM symbols, where Z is any integer that is greater than or equal to 1 and less than or equal to 7.

According to an eighth aspect, an apparatus for sending feedback information is provided, and the apparatus includes:

a receiving module, configured to receive a transport block sent by user equipment UE on a first time-frequency resource in an uplink UL;
a determining module, configured to determine a time domain resource of a second time-frequency resource according to a location of the first time-frequency resource, duration of a first transmission time interval in a downlink DL, and duration of a second transmission time interval in the UL; and
a sending module, configured to send feedback information on the second time-frequency resource that is in the DL and is determined by the determining module, where the feedback information is used to indicate a receiving status of the transport block.

In a first possible implementation of the eighth aspect of the present invention, the sending module is further configured to:

send physical layer downlink control signaling to the UE, so that the UE determines the first time-frequency resource in the UL according to the physical layer downlink control signaling.

In a second possible implementation of the eighth aspect of the present invention, a time domain resource of the first time-frequency resource is a time domain resource corresponding to any second transmission time interval frame in an $n^{th}$ subframe location in the UL; or

a time domain resource of the first time-frequency resource is a time domain resource corresponding to any second transmission time interval frame other than a first second transmission time interval frame and/or a last second transmission time interval frame in an $n^{th}$ subframe location in the UL; or

a time domain resource of the first time-frequency resource is a time domain resource corresponding to an $m^{th}$ second transmission time interval frame in an $n^{th}$ subframe location in the UL, where m is a natural number; where

n indicates a subframe number of a subframe in which the first time-frequency resource is located.

In a third possible implementation of the eighth aspect of the present invention, the determining module is configured to:

determine duration of any second transmission time interval frame in an $(n+k)^{th}$ subframe location corresponding to the UL, in the DL as the time domain resource of the second time-frequency resource; or

determine duration of any second transmission time interval frame other than a first second transmission time interval frame and/or a last second transmission time interval frame in an $(n+k)^{th}$ subframe location corresponding to the UL, in the DL as the time domain resource of the second time-frequency resource; or

determine duration of a second transmission time interval frame specified in an $(n+k)^{th}$ subframe location corresponding to the UL, in the DL as the time domain resource of the second time-frequency resource; or

determine duration of an $m^{th}$ second transmission time interval frame after a $[k*(TTLDL/TTLUL)]^{th}$ second transmission time interval frame after an $n^{th}$ subframe in the DL as the time domain resource of the second time-frequency resource, where "[ ]" indicates a rounding operator, TTI_DL and TTI_UL respectively indicate duration of one transmission time interval in the DL and duration of one transmission time interval in the UL, and m is greater than or equal to 1 and less than or equal to a quantity of second transmission time interval frames included in a subframe in the UL; where

n indicates a subframe number of a subframe in which the first time-frequency resource is located.

In a fourth possible implementation of the eighth aspect of the present invention, the sending module is further configured to:

send second transmission time interval frame configuration information to the UE, where the second transmission time interval frame configuration information carries the time domain resource of the second time-frequency resource, and the second transmission time interval frame configuration information is used to instruct the UE to receive, on the second time-frequency resource, the feedback information sent by a base station.

In a fifth possible implementation of the eighth aspect of the present invention, time domain resource information of the second time-frequency resource is indicated by a subframe number of the network system and a frame number of a second transmission time interval frame in the DL in a subframe of the network system; or

time domain resource information of the second time-frequency resource is indicated by an absolute time; or

time domain resource information of the second time-frequency resource is indicated by an absolute number of a second transmission time interval frame in the DL; or

time domain resource information of the second time-frequency resource is indicated by an index value of a second transmission time interval frame in the DL; or

time domain resource information of the second time-frequency resource is indicated by a subframe number of the network system and an index value of a second transmission time interval frame in the DL.

In a sixth possible implementation of the eighth aspect of the present invention, the sending module is further configured to:

send the second time-frequency resource information to the UE.

In a seventh possible implementation of the eighth aspect of the present invention, the second time-frequency resource information is indicated by a subframe number of the network system and a frame number of a second transmission time interval frame in the DL in a subframe of the network system; or

time domain resource information of the second time-frequency resource is indicated by an absolute time; or

time domain resource information of the second time-frequency resource is indicated by an absolute number of a second transmission time interval frame in the DL; or

time domain resource information of the second time-frequency resource is indicated by an index value of a second transmission time interval frame in the DL; or

time domain resource information of the second time-frequency resource is indicated by a subframe number of the network system and an index value of a second transmission time interval frame in the DL.

In an eighth possible implementation of the eighth aspect of the present invention, the sending module is further configured to:

send information carried on a PDCCH to the UE, where the information carried on the PDCCH carries at least the second time-frequency resource information; or
send first scheduling information to the UE, where the first scheduling information carries at least the second transmission time interval frame configuration information, so that the UE determines the second time-frequency resource according to the second transmission time interval frame configuration information.

In a ninth possible implementation of the eighth aspect of the present invention, the PDCCH further carries the first time-frequency resource used for instructing the UE to send information carried in a physical layer uplink shared channel PUSCH, and the PUSCH carries at least the transport block.
In a tenth possible implementation of the eighth aspect of the present invention, the sending module is configured to:

determine a resource location of a physical hybrid repeat indicator channel PHICH of the UE based on a resource location of a physical layer uplink shared channel PUSCH of the UE; and
send the PHICH on the second time-frequency resource in the DL, where the PHICH carries the feedback information.

In an eleventh possible implementation of the eighth aspect of the present invention, if the duration of the first transmission time interval in the DL is longer than the duration of the second transmission time interval in the UL, and transport blocks received in a subframe in the UL are a plurality of transport blocks, and frequency domain resources occupied by the plurality of transport blocks are different from each other, the sending module is configured to send feedback information about the plurality of transport blocks on the second time-frequency resource in the DL.
In a twelfth possible implementation of the eighth aspect of the present invention, the sending module is further configured to:
when the duration of the first transmission time interval in the DL is longer than the duration of the second transmission time interval in the UL, receive, in a subframe in the DL, a plurality of transport blocks sent by the UE, where frequency domain resources occupied by the plurality of transport blocks are different from each other.
In a thirteenth possible implementation of the eighth aspect of the present invention, the apparatus further includes a processing module, where the processing module is configured to: when the duration of the first transmission time interval in the DL is longer than the duration of the second transmission time interval in the UL, if a plurality of transport blocks sent by the UE are received in a subframe in the DL, and frequency domain resources occupied by the plurality of transport blocks are the same, for feedback information about the plurality of transport blocks, perform the step of determining a resource location of a physical hybrid repeat indicator channel PHICH of the UE based on a resource location of a PUSCH of the UE.
In a fourteenth possible implementation of the eighth aspect of the present invention, the sending module is configured to:

according to formulas:

$$n_{PHICH}^{group} = (N_{PRB}^{UL} * (m-1) + I_{PRB\_RA} + n_{DMRS}) \bmod N_{PHICH}^{group} + I_{PHICH} N_{PHICH}^{group}$$

and

$$n_{PHICH}^{seq} = ([(N_{PRB}^{UL} * (m-1) + I_{PRB\_RA}) / N_{PHICH}^{group}] + n_{DMRS}) \bmod 2N_{SF}^{PHICH},$$

where m indicates any one of the plurality of transport blocks sent by the UE in an $m^{th}$ second transmission time interval frame after an $n^{th}$ subframe in the UL, $N_{SF}^{PHICH} = 4,$ $n_{PHICH}^{group}$ indicates a group number of the PHICH, $n_{PHICH}^{seq}$ indicates a sequence number of the PHICH, $n_{DMRS}$ indicates a numeric value related to a DMRS, $N_{PHICH}^{group}$ indicates a group number of the PHICH, $I_{PHICH}$ is used to indicate a spreading factor for PHICH modulation, and $N_{PRB}^{UL}$ is an index value of data in a minimum frequency block in a frequency domain.

In a fifteenth possible implementation of the eighth aspect of the present invention, the sending module is further configured to send second scheduling information to the UE, where the second scheduling information includes at least the third time-frequency resource; and

the receiving module is further configured to receive the transport block retransmitted by the UE on the third time-frequency resource.

In a sixteenth possible implementation of the eighth aspect of the present invention, a time interval between the third time-frequency resource and the second time-frequency resource is different from a time interval between the second time-frequency resource and the first time-frequency resource.

In a seventeenth possible implementation of the eighth aspect of the present invention, a value of k is 4 and/or a natural number less than 4.

In an eighteenth possible implementation of the eighth aspect of the present invention, duration of each time interval frame in the UL and the DL is shorter than or equal to 0.5 ms, and each time interval frame includes Z OFDM symbols, where Z is any integer that is greater than or equal to 1 and less than or equal to 7.

According to a ninth aspect, an apparatus for sending feedback information is provided, and the apparatus includes:

a determining module, configured to receive, by UE, a transport block sent by a base station, and when a first time-frequency resource in a UL on which the UE sends a DMRS collides with a time-frequency resource in the UL on which the UE sends feedback information about the transport block, determine a second time-frequency resource in the UL according to the first time-frequency resource in the UL; and

a sending module, configured to send the feedback information on the second time-frequency resource that is in the UL and is determined by the determining module to the base station, where the feedback information is used to indicate a transmission status of the transport block.

In a first possible implementation of the ninth aspect of the present invention, the determining module is configured to:

determine a time-frequency resource that is nearest to the first time-frequency resource in a time domain and in which a PUCCH is located, as the second time-frequency resource; or

determine a time-frequency resource that is specified with the first time-frequency resource in a time domain and in which a PUCCH is located, as the second time-frequency resource; or

determine either of two time-frequency resources adjacent to the first time-frequency resource, as the second time-frequency resource; or

determine a time-frequency resource specified in two time-frequency resources adjacent to the first time-frequency resource, as the second time-frequency resource; or

determine a time-frequency resource in a fixed location previous or next to the first time-frequency resource, as the second time-frequency resource.

In a second possible implementation of the ninth aspect of the present invention, the apparatus further includes: a feedback information combining module, configured to receive, by the UE, at least two transport blocks sent within a same transmission time interval or adjacent or contiguous transmission time intervals, and when a time-frequency resource for sending feedback information about one transport block in the at least two data blocks collides with the first time-frequency resource, combine the feedback information about the transport block with feedback information about other transport blocks in the at least two transport blocks.

In a third possible implementation of the ninth aspect of the present invention, the determining module is further configured to:
determine a specified time-frequency resource in which a PUCCH is located, as the second time-frequency resource.

In a fourth possible implementation of the ninth aspect of the present invention, the sending module is further configured to:
send, on the first time-frequency resource in the UL, the feedback information to the base station by carrying the feedback information in the DMRS.

In a fifth possible implementation of the ninth aspect of the present invention, the sending module is further configured to:
send, on the first time-frequency resource in the UL, the DMRS carrying the feedback information in a form of bit information or a form of reference signal amplitude information to the base station.

In a sixth possible implementation of the ninth aspect of the present invention, a transmission time interval in the UL is an OFDM symbol.

According to a tenth aspect, an apparatus for sending feedback information is provided, and the apparatus includes:

a sending module, configured to send a transport block or transport block control information on a first time-frequency resource in a DL to UE; and

a receiving module, configured to receive feedback information sent by the UE on a second time-frequency resource, where the feedback information is used to indicate a receiving status of the transport block sent by the sending module.

In a first possible implementation of the tenth aspect of the present invention, the sending module is further configured to:

send the transport block on a time-frequency resource indicated by the transport block control information to the UE, where the transport block control information includes at least transmission location information of the transport block or information of a physical layer downlink control channel PDCCH related to the transport block.

In a second possible implementation of the tenth aspect of the present invention, the sending module is further configured to:

send second transmission time interval frame configuration information to the UE, so that the UE determines a time domain resource of the second time-frequency resource according to the second transmission time interval configuration information, where the second transmission time interval frame configuration information carries time domain resource information of the second time-frequency resource.

In a third possible implementation of the tenth aspect of the present invention, the second transmission time interval frame configuration information includes:

the time domain resource information of the second time-frequency resource, where the time domain resource information of the second time-frequency resource is time domain resource information corresponding to a second transmission time interval frame specified in an $(n+k)^{th}$ subframe location corresponding to the DL, in the UL; or

the time domain resource information of the second time-frequency resource, where the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, where "[ ]" indicates a rounding operator, TTI_DL and TTI_UL respectively indicate duration of one transmission time interval in the DL and duration of one transmission time interval in the UL, and m is a natural number; where

n indicates a subframe number of a subframe in which the first time-frequency resource is located.

In a fourth possible implementation of the tenth aspect of the present invention, the sending module is further configured to:

send information carried on a PDCCH to the UE, where the information carried on the PDCCH includes at least the second transmission time interval frame configuration information; or

send Medium Access Control layer MAC signaling to the UE, where the MAC signaling carries the second transmission time interval frame configuration information; or

send radio resource control protocol layer RRC signaling to the UE, where the RRC signaling carries the second transmission time interval frame configuration information; or

send the second transmission time interval frame configuration information with reference to at least two of the foregoing three methods.

In a fifth possible implementation of the tenth aspect of the present invention, the second time-frequency resource information is indicated by a subframe number of the network system and a subframe number of a second transmission time interval frame in the UL in a subframe of the network system; or

the time domain resource information of the second time-frequency resource is indicated by an absolute time; or

the time domain resource information of the second time-frequency resource is indicated by an absolute number of a second transmission time interval frame in the UL; or

the time domain resource information of the second time-frequency resource is indicated by an index value of a second transmission time interval frame in the UL; or

the time domain resource information of the second time-frequency resource is indicated by a subframe number of the network system and an index value of a second transmission time interval frame in the UL.

In a sixth possible implementation of the tenth aspect of the present invention, the sending module is further configured to:

send first scheduling information to the UE, where the first scheduling information carries the time domain resource information of the second time-frequency resource.

In a seventh possible implementation of the tenth aspect of the present invention, if the transport block is cross-subframe scheduled, the first time-frequency resource is a location in a subframe used for sending a transport block carried in a downlink shared channel PDSCH; or

the first time-frequency resource is a location in a subframe used for sending information carried on a PDCCH.

In an eighth possible implementation of the tenth aspect of the present invention, the receiving module is further configured to:

when duration of a first transmission time interval in the DL is shorter than or equal to duration of a second transmission time interval in the UL, if a base station sends a plurality of transport blocks in a subframe in the DL, receive, on the second time-frequency resource, a plurality of pieces of feedback information carried in a PUCCH about the plurality of transport blocks and sent by the UE; or

when duration of a first transmission time interval in the DL is shorter than or equal to duration of a second transmission time interval in the UL, if the base station sends a finite quantity of transport blocks in a subframe in the DL, receive, on the second time-frequency resource, a finite quantity of pieces of feedback information carried in the PUCCH about the finite quantity of transport blocks and sent by the UE.

In a ninth possible implementation of the tenth aspect of the present invention, the sending module is further configured to:

send second scheduling information to the UE, where the second scheduling information carries the first time-frequency resource information, and the first time-frequency resource information includes a time-frequency resource location of a first transmission time interval frame.

In a tenth possible implementation of the tenth aspect of the present invention, the sending module is further configured to:

send information carried on a PDCCH to the UE, where the information carried on the PDCCH includes at least the second transmission time interval frame configuration information; or

send Medium Access Control layer MAC signaling to the UE, where the MAC signaling carries the second transmission time interval frame configuration information; or

send radio resource control protocol layer RRC signaling to the UE, where the RRC signaling carries the second transmission time interval frame configuration information; or

send the second transmission time interval frame configuration information with reference to at least two of the foregoing three methods.

In an eleventh possible implementation of the tenth aspect of the present invention, a time domain resource of the first time-frequency resource is a time domain resource corresponding to an $m^{th}$ first transmission time interval frame of an $n^{th}$ subframe in the DL.

In a twelfth possible implementation of the tenth aspect of the present invention, the sending module is further configured to:

send information carried on a PDCCH to the UE, where the information carried on the PDCCH includes at least a value of m; or

send Medium Access Control layer MAC signaling to the UE, where the MAC signaling carries a value of m; or

send radio resource control protocol layer RRC signaling to the UE, where the RRC signaling carries a value of m; or

send a value of m with reference to at least two of the foregoing three methods.

In a thirteenth possible implementation of the tenth aspect of the present invention, the sending module is further configured to:

send third scheduling information to the UE, where the third scheduling information includes at least the third time-frequency resource; and

retransmit the transport block on the third time-frequency resource to the UE.

In a fourteenth possible implementation of the tenth aspect of the present invention, a time domain resource of the third time-frequency resource is a time domain resource corresponding to an $m'^{th}$ first transmission time interval frame of an $(n+k+k')^{th}$ subframe in the DL, where k' is a natural number, and m' is a natural number.

In a fifteenth possible implementation of the tenth aspect of the present invention, the sending module is further configured to:

send fourth scheduling information to the UE, where the fourth scheduling information carries a value of m'; or
send fifth scheduling information to the UE, so that the UE determines a value of m' according to the fifth scheduling information.

In a sixteenth possible implementation of the tenth aspect of the present invention, the sending module is further configured to send, in a subframe in the DL, information carried in a plurality of short transmission time interval frames on a shared channel PDSCH to the UE, where the information carried in the plurality of short transmission time interval frames includes at least the plurality of transport blocks.

In a seventeenth possible implementation of the tenth aspect of the present invention, a value of k is 4 and/or a natural number less than 4.

In an eighteenth possible implementation of the tenth aspect of the present invention, duration of each time interval frame in the UL and the DL is shorter than or equal to 0.5 ms, and each time interval frame includes Z OFDM symbols, where Z is any integer that is greater than or equal to 1 and less than or equal to 7.

According to an eleventh aspect, an apparatus for sending feedback information is provided, and the apparatus includes:

a sending module, configured to send a transport block on a first time-frequency resource in a UL to a base station; and
a receiving module, configured to receive feedback information sent by the base station on a second time-frequency resource in a DL, where the feedback information is used to indicate a receiving status of the transport block sent by the sending module.

In a first possible implementation of the eleventh aspect of the present invention, the receiving module is further configured to:
receive physical layer downlink control signaling sent by the base station, and determine the first time-frequency resource in the UL according to the physical layer downlink control signaling.

In a second possible implementation of the eleventh aspect of the present invention, a time domain resource of the first time-frequency resource is a time domain resource corresponding to any second transmission time interval frame in an $n^{th}$ subframe location in the UL; or
a time domain resource of the first time-frequency resource is a time domain resource corresponding to any second transmission time interval frame other than a first second transmission time interval frame and/or a last second transmission time interval frame in an $n^{th}$ subframe location in the UL; or
a time domain resource of the first time-frequency resource is a time domain resource corresponding to an $m^{th}$ second transmission time interval frame in an $n^{th}$ subframe location in the UL, where m is a natural number; where
n indicates a subframe number of a subframe in which the first time-frequency resource is located.

In a third possible implementation of the eleventh aspect of the present invention, the receiving module is further configured to:
receive second transmission time interval frame configuration information sent by the base station, where the second transmission time interval frame configuration information carries a time domain resource of the second time-frequency resource, and the second transmission time interval frame configuration information is used to instruct UE to receive, on the second time-frequency resource, the feedback information sent by the base station.

In a fourth possible implementation of the eleventh aspect of the present invention, time domain resource information of the second time-frequency resource is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or
time domain resource information of the second time-frequency resource is indicated by an index value of a second transmission time interval frame in the DL; or
time domain resource information of the second time-frequency resource is indicated by a subframe number of the network system and an index value of a second transmission time interval frame in the DL.

In a fifth possible implementation of the eleventh aspect of the present invention, the receiving module is further configured to:
receive second time-frequency resource information sent by the base station.

In a sixth possible implementation of the eleventh aspect of the present invention, the second time-frequency resource information is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or

time domain resource information of the second time-frequency resource is indicated by an index value of a second transmission time interval frame in the DL; or

time domain resource information of the second time-frequency resource is indicated by a subframe number of the network system and an index value of a second transmission time interval frame in the DL.

In a seventh possible implementation of the eleventh aspect of the present invention, the receiving module is further configured to:

receive information carried on a PDCCH and sent by the base station, where the information carried on the PDCCH carries at least the second time-frequency resource information; or

receive first scheduling information sent by the base station, where the first scheduling information carries at least the second transmission time interval frame configuration information, and determine the second time-frequency resource according to the second transmission time interval frame configuration information.

In an eighth possible implementation of the eleventh aspect of the present invention, the PDCCH further carries the first time-frequency resource used for instructing the UE to send information carried in a physical layer uplink shared channel PUSCH, and the PUSCH carries at least the transport block.

In a ninth possible implementation of the eleventh aspect of the present invention, the receiving module is configured to:

receive a PHICH sent by the base station on the second time-frequency resource in the DL, where the PHICH carries the feedback information.

In a tenth possible implementation of the eleventh aspect of the present invention, the receiving module is configured to:

receive feedback information about the plurality of transport blocks that is sent by the base station on the second time-frequency resource in the DL.

In an eleventh possible implementation of the eleventh aspect of the present invention, the sending module is further configured to: when duration of a first transmission time interval in the DL is longer than duration of a second transmission time interval in the UL, send a plurality of transport blocks in a subframe in the DL to the base station, where frequency domain resources occupied by the plurality of transport blocks are different from each other.

In a twelfth possible implementation of the eleventh aspect of the present invention, the receiving module is further configured to receive second scheduling information sent by the base station, where the second scheduling information includes at least the third time-frequency resource; and

the sending module is further configured to retransmit the transport block on the third time-frequency resource to the base station.

In a thirteenth possible implementation of the eleventh aspect of the present invention, a time interval between the third time-frequency resource and the second time-frequency resource is different from a time interval between the second time-frequency resource and the first time-frequency resource.

In a fourteenth possible implementation of the eleventh aspect of the present invention, duration of each time interval frame in the UL and the DL is shorter than or equal to 0.5 ms, and each time interval frame includes Z OFDM symbols, where Z is any integer that is greater than or equal to 1 and less than or equal to 7.

According to a twelfth aspect, an apparatus for sending feedback information is provided, and the apparatus includes:

a sending module, configured to send a transport block to UE; and

a receiving module, configured to receive feedback information sent by the UE on a second time-frequency resource in a UL, where the feedback information is used to indicate a transmission status of the transport block sent by the sending module.

In a first possible implementation of the twelfth aspect of the present invention, the sending module is configured to:

send at least two transport blocks within a same transmission time interval or adjacent or contiguous transmission time intervals.

In a second possible implementation of the twelfth aspect of the present invention, the receiving module is further configured to:

receive, on a first time-frequency resource in the UL, a DMRS sent by the UE, where the DMRS carries the feedback information.

In a third possible implementation of the twelfth aspect of the present invention, the receiving module is further configured to:

receive the DMRS, where the DMRS carries the feedback information in a form of bit information or a form of reference signal amplitude information.

In a fourth possible implementation of the twelfth aspect of the present invention, a transmission time interval in the UL is an OFDM symbol.

According to a thirteenth aspect, an embodiment of the present invention provides user equipment. The user equipment includes a transmitter, a receiver, and a processor connected to the transmitter and the receiver respectively. Certainly, the user equipment may further include a universal component such as a memory or an antenna. This is not limited herein in this embodiment of the present invention. The processor is configured to perform the method in any one of the foregoing possible implementations of the first aspect, the third aspect, or the fifth aspect.

According to a fourteenth aspect, an embodiment of the present invention further provides a base station. The base station includes a transmitter, a receiver, and a processor connected to the transmitter and the receiver respectively. Certainly, the base station may further include a universal component such as a memory, an antenna, a baseband processing component, an intermediate radio frequency processing component, or an input and output apparatus. This is not limited herein in this embodiment of the present invention. The processor is configured to perform the method in any one of the foregoing possible implementations of the second aspect, the fourth aspect, or the sixth aspect.

The technical solutions provided by the embodiments of the present invention have the following beneficial effects:

Because the location of the time-frequency resource for sending the feedback information about the received transport block is agreed, efficiency of data transmission between the UE and the base station can be improved, and accuracy of data transmission can be improved. Further, because the time-frequency resource for retransmitting the transport block is agreed, a success rate of receiving retransmitted transport blocks can be improved, and efficiency of data transmission can be further improved.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of LTE network communication according to an embodiment of the present invention;
FIG. 2A is a flowchart of a method for sending feedback information according to an embodiment of the present invention;
FIG. 2B is a schematic diagram of a time-frequency resource according to an embodiment of the present invention;
FIG. 2C is a schematic diagram of a time-frequency resource of a time interval frame according to an embodiment of the present invention;
FIG. 3A and FIG. 3B are a flowchart of a method for sending feedback information according to an embodiment of the present invention;
FIG. 4A and FIG. 4B are a flowchart of a method for sending feedback information according to an embodiment of the present invention;
FIG. 5A and FIG. 5B are a flowchart of a method for sending feedback information according to an embodiment of the present invention;
FIG. 6 is a flowchart of a method for sending feedback information according to an embodiment of the present invention;
FIG. 7 is a schematic structural diagram of an apparatus for sending feedback information according to an embodiment of the present invention;
FIG. 8 is a schematic structural diagram of an apparatus for sending feedback information according to an embodiment of the present invention;
FIG. 9 is a schematic structural diagram of an apparatus for sending feedback information according to an embodiment of the present invention;
FIG. 10 is a schematic structural diagram of an apparatus for sending feedback information according to an embodiment of the present invention;
FIG. 11 is a schematic structural diagram of an apparatus for sending feedback information according to an embodiment of the present invention;
FIG. 12 is a schematic structural diagram of an apparatus for sending feedback information according to an embodiment of the present invention;
FIG. 13 is a schematic structural diagram of user equipment UE according to an embodiment of the present invention; and

FIG. 14 is a schematic structural diagram of a base station according to an embodiment of the present invention.

**DESCRIPTION OF EMBODIMENTS**

To make the objectives, technical solutions, and advantages of the present invention clearer, the following further describes the embodiments of the present invention in detail with reference to the accompanying drawings.

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with the present invention. On the contrary, they are only examples of apparatuses and methods that are described in the appended claims in detail and that are consistent with some aspects of the present invention.

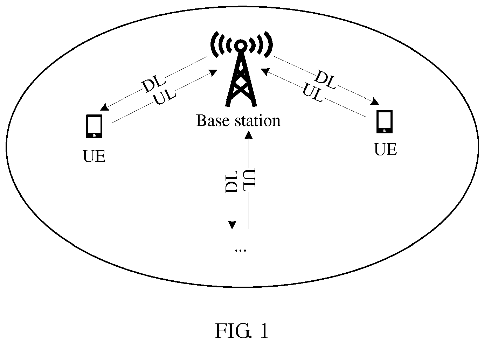

FIG. 1 is a schematic diagram of LTE network communication according to an embodiment of the present invention. In an LTE communications system, a DL (DownLink, downlink) is a physical channel for a signal from a base station to UE, and a UL (Uplink, uplink) is a physical channel for a signal from the UE to the base station. In FIG. 1, "..." denotes more other UEs that establish communication connections with the base station.

Data is transmitted between the base station and the UE in units of radio frames. In the DL, each radio frame includes subframes, each subframe includes two timeslots, and each timeslot includes a fixed quantity of OFDM symbols. Correspondingly, in the UL, the UE sends data to the base station based on a timeslot. During data transmission between the UE and the base station, a data loss and a data transmission error often occur in the data transmission process. Currently, the foregoing data transmission problem can be resolved by using a HARQ technology. The HARQ technology is applicable to a case in which duration of an uplink or downlink frame is 1 ms in a conventional LTE system.

On one hand, as service types of the UE increase, a size of data transmitted by the UE to the base station also varies greatly, and correspondingly sizes of time-frequency resources occupied in the UL also vary. For example, when the UE sends a web page load request, data transmitted between the UE and the base station is relatively small, and therefore the UE can use few time-frequency resources in the UL to perform data transmission. On the other hand, to support a UL coverage rate, duration of a TTI (Transmission Time Interval, transmission time interval) in the UL needs to be longer than duration of a TTI in the DL. Consequently, in view of the foregoing requirement, a conventional LTE subframe structure changes, and duration of transmission time intervals forming the UL and the DL may also vary. Therefore, duration of an uplink frame and duration of a downlink frame are asymmetric. For example, a transmission time interval may be reduced from a composition unit of four OFDM symbols in 1 ms to a composition unit of two OFDM symbols, or even shorter. That is, when TTI levels in the UL and DL for the UE to send data become short TTIs (short TTI), OFDM symbols occupied by transport blocks of the UE and control information of the transport blocks are reduced from originally 14 OFDM symbols in a subframe to fewer OFDM symbols.

To ensure that accurate and high-efficient data transmission between the UE and the base station can still be implemented when uplink and downlink transmission time intervals are shortened and asymmetric due to the change of the LTE subframe structure, the present invention provides a method for sending feedback data. According to different senders and recipients of transport blocks and different duration of UL_TTIs and DL_TTIs, the method for sending feedback data according to the present invention is described in detail by using the following four embodiments separately.

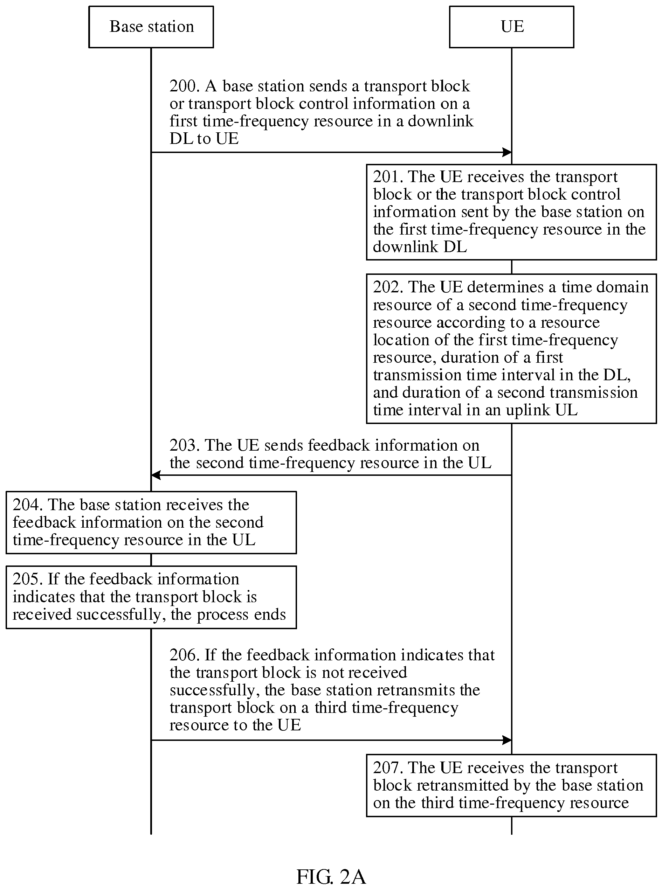

FIG. 2A is a flowchart of a method for sending feedback information according to an embodiment of the present invention. In this embodiment, a first transmission time interval in a DL may be longer than or equal to a second transmission time interval in a UL, a base station is used as a sender, and UE is used as a recipient, to implement data transmission between the base station and the UE. Specifically, the method includes the following steps.

200. A base station sends a transport block or transport block control information on a first time-frequency resource in a downlink DL to UE.

A time domain resource of the first time-frequency resource is a time domain resource corresponding to an $m^{th}$ first transmission time interval frame of an $n^{th}$ subframe in the DL. Specifically, information carried on a PDCCH and sent by the base station is received, where the information carried on the PDCCH includes at least a value of m; or Medium Access Control layer MAC signaling sent by the base station is received, where the MAC signaling carries a value of m; or radio resource control protocol layer RRC signaling sent by the base station is received, where the RRC signaling carries a value of m; or a value of m is received with reference to at least two of the foregoing three methods.

The first time-frequency resource may also be described or indicated in another manner. This is not limited in this embodiment of the present invention. The transport block control information includes at least transmission location information of the transport block or information of the physical layer downlink control channel PDCCH related to the transport block.

201. The UE receives the transport block or the transport block control information sent by the base station on the first time-frequency resource in the downlink DL.

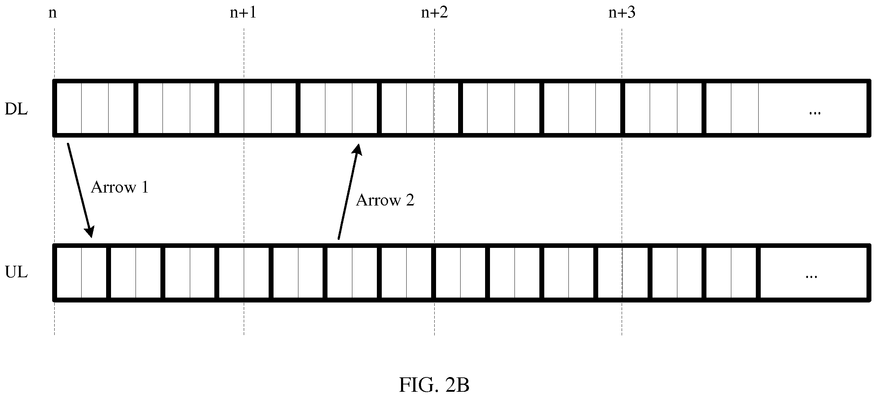

The base station sends the transport block to the UE by using the DL and using a DL_TTI as a unit. The location of the first time-frequency resource may be indicated by a subframe number of a subframe in which the transport block is located. As shown in FIG. 2B, the location of the first time-frequency resource in the figure is a location of a time-frequency resource in the DL to which an arrow 1 points, where the location may be indicated by a subframe number n in the DL.

In another embodiment of the present invention, the first time-frequency resource may be indicated in different manners according to different transmission modes of the transport block. Specifically, if the transport block is cross-subframe scheduled, the first time-frequency resource is a location in a subframe used for the base station to send a transport block carried in a downlink shared channel PDSCH; or the first time-frequency resource is a location in a subframe used for the base station to send information carried on the PDCCH. The PDSCH carries the transport block sent by the base station to the UE, and the PDCCH is used to indicate the location of the time-frequency resource in which the transport block is located.

A method for indicating the first time-frequency resource may be any one of the foregoing methods, or the first time-frequency resource may be indicated by using another method. This is not limited in this embodiment of the present invention.

In still another embodiment of the present invention, duration of each time interval frame in the UL and the DL is shorter than or equal to 0.5 ms, and each time interval frame includes Z OFDM symbols, where Z is any integer that is greater than or equal to 1 and less than or equal to 7. Efficiency of data transmission between the UE and the base station can be improved by reducing the duration of each time interval frame in the UL and the DL.

In another embodiment of the present invention, after the UE receives the transport block control information sent by the base station on the first time-frequency resource in the downlink DL, the UE receives, on a time-frequency resource indicated by the transport block control information, the transport block sent by the base station, and the transport block control information includes the at least transmission location information of the transport block or the information of the physical layer downlink control channel PDCCH related to the transport block.

202. The UE determines a time domain resource of a second time-frequency resource based on a resource location of the first time-frequency resource, duration of a first transmission time interval in the DL, and duration of a second transmission time interval in an uplink UL.

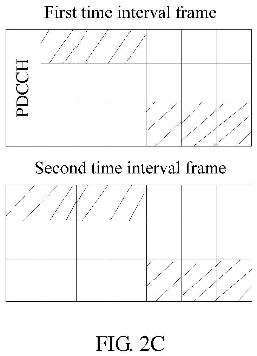

The first transmission time interval in the DL is a time interval of a short TTI in the DL, and correspondingly, the second transmission time interval in the UL is a time interval of a short TTI in the UL. Alternatively, the first transmission time interval in the DL is a time interval used by a transport block in the DL, and correspondingly, the second transmission time interval in the UL is a time interval used by a transport block in the UL. A first transmission time interval frame in the DL is a frame occupying the first transmission time interval. Optionally, some frequency bands of a system in a frequency domain may be occupied in the first transmission time interval frame. A second transmission time interval frame in the UL is a frame occupying the second transmission time interval. Optionally, some frequency bands of the system in the frequency domain may be occupied in the second transmission time interval frame. FIG. 2C is a schematic diagram of a time-frequency resource of a time interval frame according to an embodiment of the present invention. In FIG. 2C, an upper figure indicates a schematic diagram of a time-frequency resource of a first time interval frame, and a lower figure indicates a schematic diagram of a time-frequency resource of a second time interval frame.

The UE may determine the time domain resource of the second time-frequency resource according to the location of the first time-frequency resource on which the transport block is sent, the duration of the first transmission time interval in the DL, and the duration of the second transmission time interval in the UL by using the following five methods.

**First determining method:** determining duration of any second transmission time interval frame in an $(n+k)^{th}$ subframe location corresponding to the DL, in the UL as the time domain resource of the second time-frequency resource, where n indicates a subframe number of a subframe in which the first time-frequency resource is located, and a value of k may be determined according to a scheduling status and a network status or may be any fixed value, or a value of k may be determined by using another method. This is not limited in the present invention.

For example, when the value of k is 4, as can be learned from FIG. 2B, a location of a time-frequency resource of the second time-frequency resource is a subframe location in the UL and corresponding to an $(n+4)^{th}$ subframe in the DL, that is, a location to which an arrow 2 in FIG. 2B points. From a perspective of the UL, the location of the time-frequency resource of the second time-frequency resource may also be described as a location of an $(n+6)^{th}$ first transmission time interval frame in the UL.

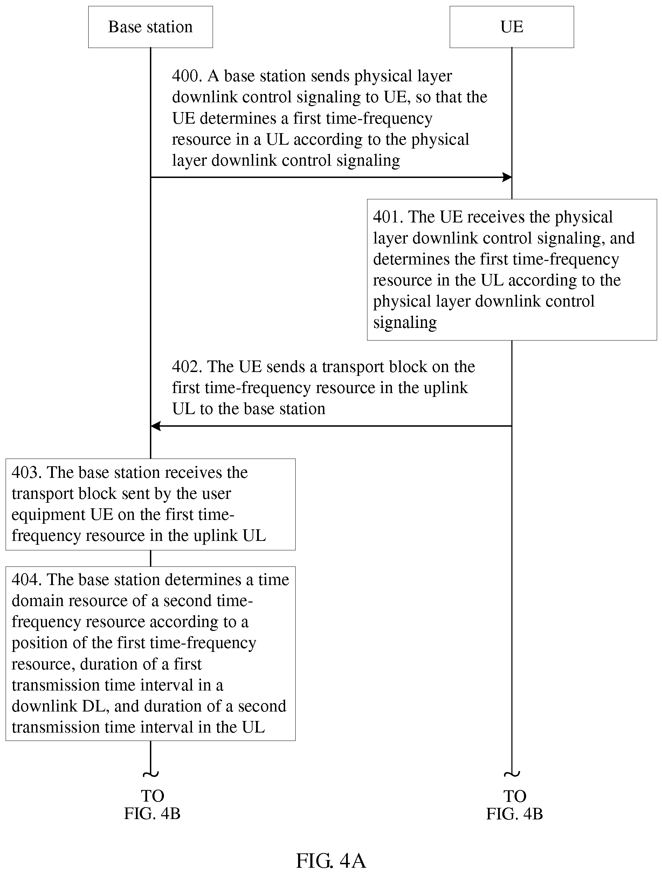

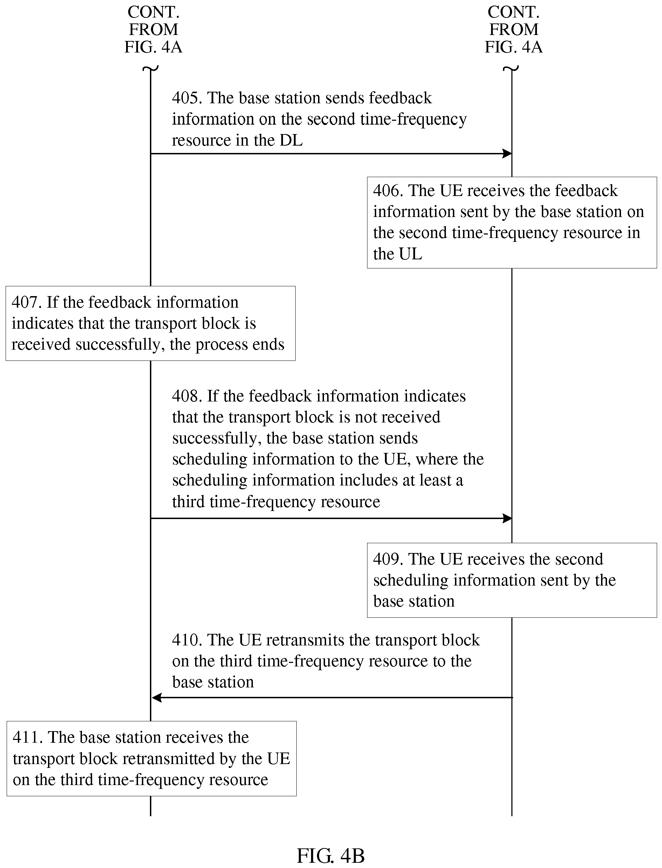

It should be noted that, in FIG. 4B, a dashed line and a corresponding reference number at a top of the dashed line indicate a subframe number corresponding to a dashed-line part when a transmission time interval is 1 ms and 14 OFDM symbols are included. In the figure, each dashed-line block indicates an OFDM symbol, and each solid-line block indicates a time interval frame. To be specific, in the DL in FIG. 2B, a time interval frame includes three OFDM symbols; and in the UL, a time interval frame includes two OFDM symbols.

The foregoing determining method can improve efficiency of data transmission, and reduce duration of intervals for data transmission and sending feedback data, on a basis of ensuring correct data transmission.

**Second determining method:** determining duration of any second transmission time interval frame other than a first second transmission time interval frame and/or a last second transmission time interval frame in an $(n+k)^{th}$ subframe location corresponding to the DL, in the UL as the time domain resource of the second time-frequency resource. Methods for indicating and determining n and k are similar to the first determining method, and are not further described herein.

In another embodiment of the present disclosure, if each subframe in the UL includes only one or two second transmission time intervals, the first method is used to determine the location of the time-frequency resource of the second time-frequency resource.

**Third determining method:** determining duration of a second transmission time interval frame specified in an $(n+k)^{th}$ subframe location corresponding to the DL, in the UL as the time domain resource of the second time-frequency resource. Methods for indicating and determining n and k are similar to the first determining method, and are not further described herein.

**Fourth determining method:** determining duration of an $m^{th}$ second transmission time interval frame after a $[k*(TTI\_DL/TTI\_UL)]^{th}$ second transmission time interval frame after an $n^{th}$ subframe in the UL as the time domain resource of the second time-frequency resource, where "[ ]" indicates a rounding operator, TTI\_DL and TTI\_UL respectively indicate duration of one transmission time interval in the DL and duration of one transmission time interval in the UL, and m is a natural number. Methods for indicating and determining n and k are similar to the first determining method, and are not further described herein. It should be noted that, m is greater than or equal to 1 and less than or equal to a quantity of second transmission time interval frames included in a subframe in the UL. A value of m may be sent by the base station to the UE, or may be determined according to a preset standard, so that the UE can determine the location of the time domain resource of the second time-frequency resource according to the value of m. This is not limited in this embodiment of the present invention.

For example, as can be learned from FIG. 2B, TTI\_DL/TTI\_UL = 1.5. When k is 4, in the UL, the location of the time domain resource of the second time-frequency resource is an $(n+6)^{th}$ subframe, that is, the location to which the arrow 2 in FIG. 4B points.

**Fifth determining method:** receiving second transmission time interval frame configuration information, and determining the time domain resource of the second time-frequency resource according to the second transmission time interval configuration information, where the second transmission time interval frame configuration information carries time domain resource information of the second time-frequency resource.

The time domain resource information of the second time-frequency resource is time domain resource information corresponding to a second transmission time interval frame specified in an $(n+k)^{th}$ subframe location corresponding to the DL, in the UL; or the time domain resource information of the second time-frequency resource is time domain resource information corresponding to an $m^{th}$ second transmission time interval frame after a $[k*(TTLDL/TTLUL)]^{th}$ second transmission time interval frame after an $n^{th}$ subframe in the UL, where "[ ]" indicates a rounding operator, TTI\_DL and TTI\_UL respectively indicate duration of one transmission time interval in the DL and duration of one transmission time interval in the UL, and m is greater than or equal to 1 and less than or equal to a quantity of second transmission time interval frames included in a subframe in the UL, where n indicates a subframe number of a subframe in which the first time-frequency resource is located, and a value of k is 4 and/or a natural number less than 4.

Specifically, the base station may send the second transmission time interval frame configuration information to the UE when performing step 200, so that the UE can receive the second transmission time interval frame configuration information when receiving the transport block sent by the base station or receive the second transmission time interval frame configuration information before performing step 202. This is not limited in this embodiment of the present invention. The second transmission time interval frame configuration information may be sent by the base station in different manners. In other words, the UE may receive the second transmission time interval frame configuration information by using the following four methods:

First method: receiving the information carried on the PDCCH and sent by the base station, where the information carried on the PDCCH includes at least the second transmission time interval frame configuration information.
Second method: receiving Medium Access Control layer MAC signaling sent by the base station, where the MAC signaling carries the second transmission time interval frame configuration information.
Third method: receiving radio resource control protocol layer RRC signaling sent by the base station, where the RRC signaling carries the second transmission time interval frame configuration information.
Fourth method: The time domain resource information of the second time-frequency resource is indicated by a subframe number of the network system and an index value of a second transmission time interval frame in the UL.

It should be noted that, when the second transmission time interval frame configuration information is obtained by using any one of the foregoing three methods, information used for determining the time domain resource of the second time-frequency resource may be notified to the UE in an explicit or implicit manner, that is, the information used for determining the time domain resource of the second time-frequency resource is sent to the UE in a form of a specific time domain resource location, or a determining rule may be sent to the UE. Certainly, the information may also be notified to the UE in another manner. This is not limited in this embodiment of the present invention.

The second transmission time interval frame configuration information may be obtained by using any one of the foregoing three methods, or the second transmission time interval frame configuration information may be received with reference to at least two of the foregoing four methods, or when the base station performs sending by using another method, the UE may also perform receiving by using another corresponding method. This is not limited in this embodiment of the present invention.

In another embodiment of the present invention, the method for determining the time domain resource of the second time-frequency resource may also be: the base station sends an absolute location of the time domain resource of the second time-frequency resource to the UE. Specifically, the absolute location may be described in the following four manners: (1) The second time-frequency resource information is indicated by a subframe number of the network system and a subframe number of a second transmission time interval frame in the UL in a subframe of the network system. (2) The time domain resource information of the second time-frequency resource is indicated by an absolute time. (3) The time domain resource information of the second time-frequency resource is indicated by an absolute number of a second transmission time interval frame in the UL. (4) The time domain resource information of the second time-frequency resource is indicated by an index value of a second transmission time interval frame in the UL. The index value is numbering performed by using a subframe as a unit, that is, numbering is started in a subframe. Alternatively, numbering is performed by using a subframe numbered 0 in a radio frame numbered 0 as a start value. Alternatively, numbering is performed by using one HARQ process RTT (Round Trip Time, round trip time) as a unit.

It should be noted that, when the time domain resource of the second time-frequency resource is determined by using the foregoing method, the UE may receive scheduling information sent by the base station, and obtain, from the scheduling information, the time domain resource of the second time-frequency resource described in any one of the foregoing four description manners, for example, receive first scheduling information sent by the base station, where the first scheduling information carries the time domain resource information of the second time-frequency resource. The foregoing method for determining the second time-frequency resource has features of being simple and intuitive, and avoids data sending confusion caused by a calculation error.

By determining the time domain resource of the second time-frequency resource, the UE can make preparations in advance for sending feedback information about the transport block on the second time-frequency resource. This can improve efficiency of transmitting feedback information, and further improve efficiency of data transmission between the UE and the base station.

203. The UE sends feedback information on the second time-frequency resource in the UL, where the feedback information is used to indicate a receiving status of the transport block.

The feedback information may be ACK/NACK information. When the UE does not receive the transport block successfully, the feedback information is a NACK; or when the UE receives the transport block successfully, the feedback information is an ACK. The feedback information may also be indicated by other information. This is not limited in this embodiment of the present invention.

204. The base station receives the feedback information on the second time-frequency resource in the UL.

The base station performs different steps according to received different feedback information. When the feedback information indicates that the transport block is received successfully, step 205 is performed; or when the feedback information indicates that the transport block is not received successfully, step 206 is performed.

205. If the feedback information indicates that the transport block is received successfully, the process ends.
206. If the feedback information indicates that the transport block is not received successfully, the base station retransmits the transport block on a third time-frequency resource to the UE.

If the feedback information sent by the UE indicates that the transport block is not received successfully, the base station retransmits the transport block on the third time-frequency resource, or may retransmit a redundancy version of the transport block, so that the UE successfully receives the transport block. If the feedback information sent by the UE indicates that the transport block is received successfully, the base station releases the cached transport block.

207. The UE receives the transport block retransmitted by the base station on the third time-frequency resource.

In another embodiment of the present invention, before retransmitting the transport block, the base station may further send, to the UE, a location of the third time-frequency resource used for retransmitting the transport block, so that the UE makes preparations for reception. The method can improve a success rate of retransmission, and avoid a case in which the retransmitted transport block cannot be received successfully again.

It should be noted that, the foregoing method for sending feedback information can be not only applicable to a case in which an uplink transmission time interval and a downlink transmission time interval are the same, but also applicable to a case in which an uplink transmission time interval and a downlink transmission time interval are different.

In the method provided by this embodiment of the present invention, because the location of the time-frequency resource for sending the feedback information about the received transport block by the UE is agreed, efficiency of data transmission between the UE and the base station can be improved, and accuracy of data transmission can be improved. Further, because the time-frequency resource for retransmitting the transport block is agreed, the UE can make preparations for reception, a success rate of receiving retransmitted transport blocks can be improved, and efficiency of data transmission can be further improved.

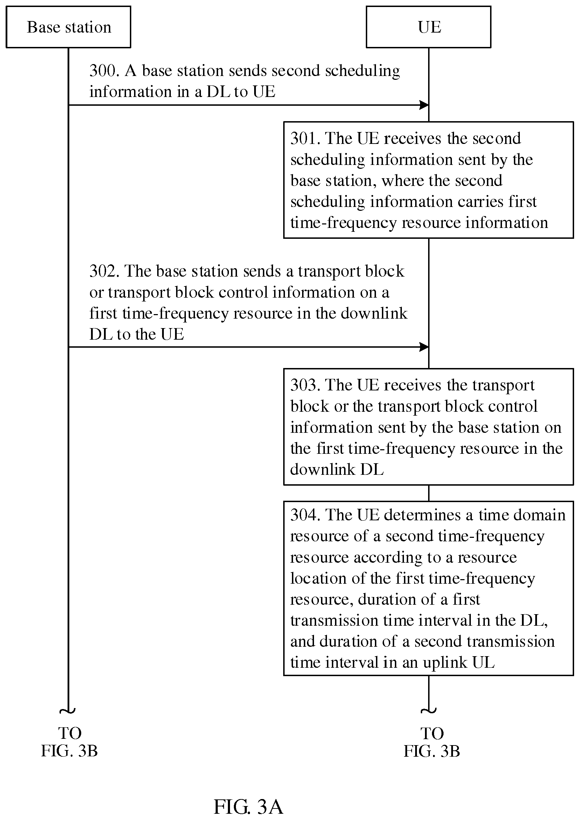

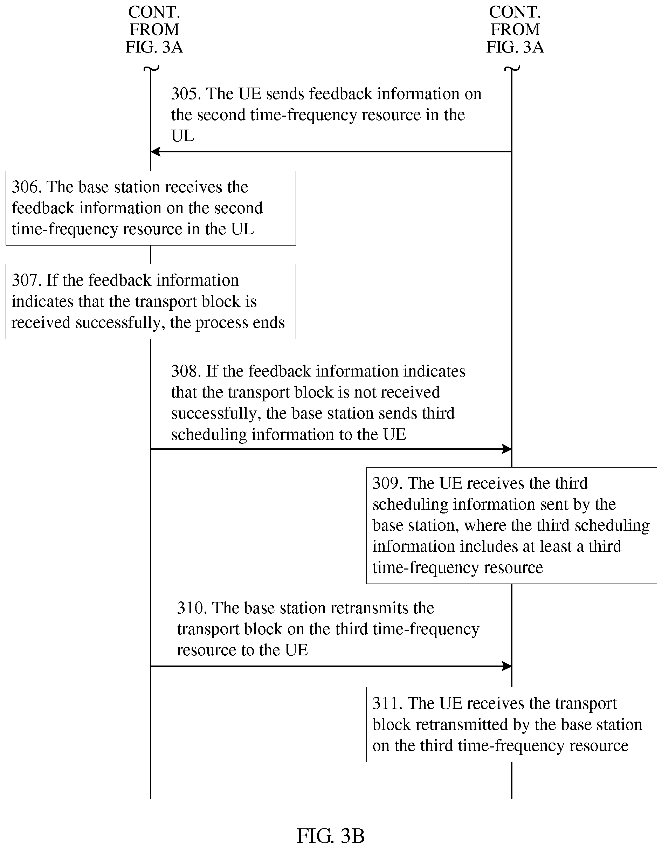

FIG. 3A and FIG. 3B are a flowchart of a method for sending feedback information according to an embodiment of the present invention. In this embodiment, a first transmission time interval in a DL may be shorter than a second transmission time interval in a UL, a base station is used as a sender, and UE is used as a recipient, to implement data transmission between the base station and the UE. Specifically, the method includes the following steps.

300. A base station sends second scheduling information in a DL to UE.

301. Receive the second scheduling information sent by the base station, where the second scheduling information carries the first time-frequency resource information, and the first time-frequency resource information includes a time-frequency resource location of a first transmission time interval frame.

In this embodiment of the present invention, duration of each subframe in the UL and the DL is shorter than or equal to 0.5 ms, each subframe includes Z time interval frames, and each time interval frame is an OFDM symbol, where Z is any integer that is greater than or equal to 1 and less than or equal to 7. The method for receiving the second scheduling information by the UE is the same as the method for receiving the second transmission time interval frame configuration information in step 202. Details are not further described herein.

302. The base station sends a transport block or transport block control information on a first time-frequency resource in the DL to the UE.

303. The UE receives the transport block or the transport block control information sent by the base station on the first time-frequency resource in the downlink DL.

The method for describing the first time-frequency resource is the same as the method for describing the first time-frequency resource in step 201. Details are not further described herein.

In another embodiment of the present invention, the base station can send only one transport block within a transmission time interval in the DL. However, when a first transmission time interval in the DL is shorter than a second transmission time interval in the UL, and when duration of the second transmission time interval in the UL is longer than or equal to twice duration of the first transmission time interval in the DL, a plurality of transport blocks sent by the base station on the first time-frequency resource in the DL may be received in a UL location corresponding to a time domain resource of the first time-frequency resource in the DL. To be specific, information carried in a plurality of short transmission time interval frames on a shared channel PDSCH and sent by the base station is received in a subframe in the DL, and the information carried in the plurality of short transmission time interval frames includes at least the plurality of transport blocks.

It should be noted that, in this embodiment of the present invention, the short transmission time interval frame has a same physical meaning as the first time interval frame and the second time interval frame. Details are not further described herein.

Correspondingly, the following three methods may be available for determining the time domain resource of the first time-frequency resource: 1. determining a time domain resource in which information carried in a first short transmission time interval frame in the plurality of short transmission time interval frames is located, as the time domain resource of the first time-frequency resource; 2. determining a time domain resource in which information carried in a short transmission time interval frame specified in the plurality of short transmission time interval frames is located, as the time domain resource of the first time-frequency resource; and 3. determining a time domain resource in which control information corresponding to the plurality of short transmission time interval frames is located, as the time domain resource of the first time-frequency resource, where the control information corresponding to the plurality of short transmission time interval frames may be control information corresponding to the first short time interval frame, or may be control information corresponding to a short transmission time interval frame specified in the plurality of short transmission time interval frames, and is not limited in this embodiment of the present invention.

The method for determining the time domain resource of the first time-frequency resource may be any one of the foregoing three methods, or the time domain resource of the first time-frequency resource may be determined by using another method. This is not limited in this embodiment of the present invention.

304. The UE determines a time domain resource of a second time-frequency resource based on a resource location of the first time-frequency resource, duration of a first transmission time interval in the DL, and duration of a second transmission time interval in an uplink UL.

The method for determining the time domain resource of the second time-frequency resource is similar to the method for determining the time domain resource of the second time-frequency resource in step 202. Details are not further described herein.

305. The UE sends feedback information on the second time-frequency resource in the UL, where the feedback information is used to indicate a receiving status of the transport block.

The method for indicating the feedback information is similar to the method for indicating the feedback information in step 203. Details are not further described herein.

In another embodiment of the present invention, if a plurality of transport blocks sent by the base station on the first time-frequency resource in the DL are received in the UL location corresponding to the time domain resource of the first time-frequency resource in the DL, when the UE sends feedback information about the plurality of transport blocks, the UE may expand a capacity of a PUCCH, so that the PUCCH carries the feedback information about the plurality of transport blocks carried in a PSDSCH.

A specific method for sending the feedback information about the plurality of transport blocks may be: when the duration of the first transmission time interval in the DL is shorter than or equal to the duration of the second transmission time interval in the UL, if the plurality of transport blocks sent by the base station are received in a subframe in the DL, sending, on the second time-frequency resource, a plurality of pieces of feedback information carried in the PUCCH about the plurality of transport blocks. It should be noted that, the plurality of transport blocks may be same transport blocks, or may be different transport blocks. This is not limited in this embodiment of the present invention. A quantity of the plurality of pieces of feedback information about the plurality of transport blocks may also be the same as or different from a quantity of the plurality of transport blocks. This is also not limited in this embodiment of the present invention.

For example, the PUCCH may include seven bits, and the seven bits can respectively indicate feedback information about seven transport blocks. If a feedback bit is used to indicate the plurality of pieces of feedback information, when the plurality of transport blocks are all received correctly, the feedback bit is 1; or when at least one of the plurality of transport blocks is not received correctly, the feedback bit is 0. That is, when the feedback information about the plurality of transport blocks is 0, it is considered that at least one of the plurality of transport blocks is not received correctly; or when the feedback information is 1, it is considered that the plurality of transport blocks are all received successfully.

In another embodiment of the present invention, when the duration of the first transmission time interval in the DL is shorter than or equal to the duration of the second transmission time interval in the UL, if a finite quantity of transport blocks sent by the base station are received in a subframe in the DL, a finite quantity of pieces of feedback information carried in the PUCCH about the finite quantity of transport blocks are sent on the second time-frequency resource. Likewise, the finite quantity of transport blocks may be the same or different. This is not limited in this embodiment of the present invention. The finite quantity of pieces of feedback information may be the same or different from the finite quantity of transport blocks. This is also not limited in this embodiment of the present invention. In this embodiment of the present invention, the finite quantity is one, that is, it is agreed that only one transport block carried in the PUCCH is sent on the second time-frequency resource.

306. The base station receives the feedback information on the second time-frequency resource in the UL.

The base station performs different steps according to received different feedback information. For example, when the feedback information is an ACK, step 307 is performed; or when the feedback information is a NACK, step 308 is performed.

307. If the feedback information indicates that the transport block is received successfully, the process ends.

308. If the feedback information indicates that the transport block is not received successfully, the base station sends third scheduling information to the UE.

309. The UE receives the third scheduling information sent by the base station, where the third scheduling information includes at least the third time-frequency resource.

The method for receiving the third scheduling information is similar to step 301 in which the UE receives the second scheduling information sent by the base station. Details are not further described herein.

310. The base station retransmits the transport block on the third time-frequency resource to the UE.

311. The UE receives the transport block retransmitted by the base station on the third time-frequency resource.

A time domain resource of the third time-frequency resource is a time domain resource corresponding to an $m'^{th}$ first transmission time interval frame of an $(n+k+k')^{th}$ subframe in the DL, where k' is a natural number, and m' is a natural number. In this embodiment of the present invention, m is greater than or equal to 1 and less than or equal to a quantity of first transmission time interval frames included in a subframe in the DL.

It should be noted that, a value of m' may be the same or different from the value of m of the second time-frequency resource described in step 202. This is not limited in this embodiment of the present invention. The UE may receive the value of m' by using the following two methods: 1. receiving fourth scheduling information sent by the base station, where the fourth scheduling information carries the value of m'; and 2. receiving fifth scheduling information sent by the base station, and determining the value of m' according to the fifth scheduling information. The fourth scheduling information and the fifth scheduling information may further include other information. This is not limited in this embodiment of the present invention.

When the UE receives, in a subframe, only one transport block sent by the base station, the method for retransmitting the transport block is similar to step 206. Details are not further described herein.

When the UE receives, in a subframe, a plurality of transport blocks sent by the base station, if all the transport blocks are received successfully, the base station releases cached transport blocks; or if at least one of the plurality of transport blocks is not received successfully, the plurality of transport blocks are retransmitted on the third time-frequency resource.

In another embodiment of the present invention, if at least one of the plurality of transport blocks is not received successfully, the transport block that is not received successfully may be determined, and only the transport block that is not received successfully is retransmitted according to identifier information of the transport block. Because only the transport block that is not received successfully is retransmitted, transmission load can be reduced, and efficiency of data transmission can be improved.

It should be noted that, for the base station, a location of the first transmission time interval for sending the transport block in the DL, in a subframe corresponding to the first time-frequency resource, may be the same as or different from a location of a third transmission time interval for retransmitting the transport block in the DL, in a subframe corresponding to the third time-frequency resource, and may be determined according to different configuration relationships, or may be determined from the scheduling information sent by the base station. This is not limited in the present invention.

It should be noted that, the foregoing method for sending feedback information can be not only applicable to a case in which an uplink transmission time interval and a downlink transmission time interval are the same, but also applicable to a case in which an uplink transmission time interval and a downlink transmission time interval are different.

In the method provided by this embodiment of the present invention, the first time-frequency resource and the third time-frequency resource are agreed, and the time domain resource of the second time-frequency resource is determined according to the location of the first time-frequency resource, the duration of the first transmission time interval in the downlink DL, and the duration of the second transmission time interval in the UL. Therefore, a data transmission rate can be improved, and efficiency of data transmission between the UE and the base station can be improved. When the first transmission time interval in the DL is relatively short, the UE can receive, in a subframe, a plurality of transport blocks sent by the base station, and the UE can feed back feedback information about the plurality of transport blocks in a TTI in the UL. Therefore, efficiency of sending feedback data can be improved, and efficiency and accuracy of data transmission between the base station and the UE can be further improved.

FIG. 4A and FIG. 4B are a flowchart of a method for sending feedback information according to an embodiment of the present invention. In this embodiment, a first transmission time interval in a DL may be longer than a second transmission time interval in a UL, UE is used as a sender, and a base station is used as a recipient, to implement data transmission between the base station and the UE. Specifically, the method includes the following steps.

400. A base station sends physical layer downlink control signaling to the UE, so that the UE determines a first time-frequency resource in the UL according to the physical layer downlink control signaling.

A time domain resource of the first time-frequency resource is a time domain resource corresponding to an $m^{th}$ second transmission time interval frame in an $n^{th}$ subframe location in the UL, where m is greater than or equal to 1 and less than or equal to a quantity of second transmission time interval frames included in a subframe in the UL; or a time domain resource of the first time-frequency resource is a time domain resource corresponding to any second transmission time interval frame other than a first second transmission time interval frame and/or a last second transmission time interval frame in an $n^{th}$ subframe location in the UL, where n indicates a subframe number of a subframe in which the first time-frequency resource is located. The method for obtaining a value of m is similar to the method for obtaining transmission time interval frame configuration information in step 202. Details are not further described herein.

In another embodiment of the present invention, the base station sends a PDCCH to the UE, where the PDCCH further carries the first time-frequency resource used for instructing the UE to send information carried in a physical layer downlink shared channel PUSCH, and the PUSCH carries at least the transport block. That is, the UE may obtain, from the PDCCH, a location of the first time-frequency resource used for sending the transport block.

> 401. The UE receives the physical layer downlink control signaling, and determines the first time-frequency resource in the UL according to the physical layer downlink control signaling.
> 402. The UE sends a transport block to the base station on the first time-frequency resource in the uplink UL.
> 403. The base station receives the transport block sent by the user equipment UE on the first time-frequency resource in the uplink UL.

The UE can send only one transport block within a transmission time interval in the UL. Therefore, when a first transmission time interval in a DL is longer than a second transmission time interval in the UL, if duration of the first transmission time interval in the DL is shorter than twice duration of the second transmission time interval in the UL, a PDSCH is received in a subframe in the DL, where the PDSCH carries a transport block; or if duration of the first transmission time interval in the DL is longer than or equal to twice duration of the second transmission time interval in the UL, a plurality of transport blocks sent by the UE on the first time-frequency resource in the DL may be received in a DL location corresponding to the time domain resource of the first time-frequency resource in the UL.

> 404. The base station determines a time domain resource of a second time-frequency resource according to a location of the first time-frequency resource, duration of a first transmission time interval in a downlink DL, and duration of a second transmission time interval in the UL.

The method for determining the time domain resource of the second time-frequency resource is similar to the method for determining the time domain resource of the second time-frequency resource in step 202. Details are not further described herein. In addition, scheduling information sent by the base station may be directly obtained, and the second time-frequency resource is obtained from the scheduling information. Specifically, the base station may send information carried on the PDCCH to the UE, where the information carried on the PDCCH carries at least the second time-frequency resource information, or may send first scheduling information to the UE, where the first scheduling information carries at least the second transmission time interval frame configuration information, so that the UE determines the second time-frequency resource according to the second transmission time interval frame configuration information.

The resource used for sending feedback information about the transport block is directly obtained from the scheduling information sent by the base station. Therefore, the UE can send the feedback information about the transport block to the base station quickly and accurately in the determined location of the second time-frequency resource, and the UE can make preparations in advance for sending the feedback information.

In another embodiment of the present invention, after the time domain resource of the second time-frequency resource is determined according to the location of the first time-frequency resource, the duration of the first transmission time interval in the downlink DL, and the duration of the second transmission time interval in the UL, the second time-frequency resource information is sent to the UE. Therefore, the UE makes preparations for receiving the feedback information sent by the base station on the second time-frequency resource in the DL. This can further improve a success rate of receiving the feedback information.

> 405. The base station sends feedback information on the second time-frequency resource in the DL, where the feedback information is used to indicate a receiving status of the transport block.

The manner of indicating the feedback information is similar to the method for indicating the feedback information in step 203. Details are not further described herein. The specific method for sending the feedback information on the second time-frequency resource in the DL may be: determining a resource location of a physical hybrid repeat indicator channel PHICH of the UE based on a resource location of the physical layer uplink shared channel PUSCH of the UE; and sending the PHICH on the second time-frequency resource in the DL, where the PHICH carries the feedback information.

According to different quantities of transport blocks received by the base station in a subframe in the DL and whether locations of frequency domain resources occupied by the transport blocks are the same, the determining a resource location of a physical hybrid repeat indicator channel PHICH of the UE may include two cases. The following describes the two cases separately.

First case: When a quantity of transport blocks received by the base station in a subframe in the DL is 1, or when a quantity of transport blocks received by the base station in a subframe in the DL is at least 2, and frequency domain resources occupied by the transport blocks are different, the determining a resource location of a physical hybrid repeat indicator channel PHICH of the UE based on a resource location of the physical layer uplink shared channel PUSCH of the UE includes:

according to formulas:

$$n_{PHICH}^{group} = (I_{PRB\_RA} + n_{DMRS}) \bmod N_{PHICH}^{group} + I_{PHICH} N_{PHICH}^{group}$$

and

$$n_{PHICH}^{seq} = ([I_{PRB\_RA} / N_{PHICH}^{group}] + n_{DMRS}) \bmod 2 N_{SF}^{PHICH},$$

where $N_{SF}^{PHICH} = 4$, $n_{PHICH}^{group}$ indicates a group number of the PHICH, $n_{PHICH}^{seq}$ indicates a sequence number of the PHICH, $I_{PRB\_RA}$ indicates a minimum index value of a physical layer resource block, $n_{DMRS}$ indicates a numeric value related to a DMRS, $N_{PHICH}^{group}$ indicates a group number of the PHICH, and $I_{PHICH}$ is used to indicate a spreading factor for PHICH modulation.

Second case: When the duration of the first transmission time interval in the DL is longer than the duration of the second transmission time interval in the UL, if a plurality of transport blocks sent by the UE are received in a subframe in the DL, and frequency domain resources occupied by the plurality of transport blocks are the same, for feedback information about the plurality of transport blocks, a specific method for determining a resource location of a physical hybrid repeat indicator channel PHICH of the UE based on a resource location of the PUSCH of the UE may be:

according to formulas:

$$n_{PHICH}^{group} = (N_{PRB}^{UL} * (m-1) + I_{PRB\_RA} + n_{DMRS}) \bmod N_{PHICH}^{group} + I_{PHICH} N_{PHICH}^{group}$$

and

$$n_{PHICH}^{seq} = ([(N_{PRB}^{UL} * (m-1) + I_{PRB\_RA}) / N_{PHICH}^{group}] + n_{DMRS}) \bmod 2 N_{SF}^{PHICH},$$

where m indicates any one of the plurality of transport blocks sent by the UE in an mth second transmission time interval frame after an nth subframe in the UL, $N_{SF}^{PHICH} = 4$, $n_{PHICH}^{group}$ indicates a group number of the PHICH, $n_{PHICH}^{seq}$ indicates a sequence number of the PHICH, $n_{DMRS}$ indicates a numeric value related to a DMRS, $N_{PHICH}^{group}$ indicates a group number of the PHICH, $I_{PHICH}$ is used to indicate a spreading factor for PHICH modulation, and $N_{PRB}^{UL}$ is an index value of data in a minimum frequency block in a frequency domain.

In another embodiment of the present invention, if the duration of the first transmission time interval in the DL is longer than the duration of the second transmission time interval in the UL, and transport blocks received in a subframe in the DL are a plurality of transport blocks, and frequency domain resources occupied by the plurality of transport blocks are different from each other, the sending feedback information on the second time-frequency resource in the DL includes: sending feedback information about the plurality of transport blocks on the second time-frequency resource in the DL. It should be noted that, the feedback information about the plurality of transport blocks may be sent by the base station after being combined, or may be sent separately. This is not limited in this embodiment of the present invention.

406. The UE receives the feedback information sent by the base station on the second time-frequency resource in the UL.

The UE performs different steps according to received different feedback information. To be specific, when the feedback information indicates that the transport block is received successfully, step 407 is performed; or when the feedback information indicates that the transport block is not received successfully, step 408 is performed.

407. If the feedback information indicates that the transport block is received successfully, the process ends.

408. If the feedback information indicates that the transport block is not received successfully, the base station sends second scheduling information to the UE, where the second scheduling information includes at least the third time-frequency resource.

The method for sending the scheduling information corresponds to the method for receiving the second scheduling information in step 301. Details are not further described herein.

It should be noted that, a time interval between the third time-frequency resource and the second time-frequency resource is different from a time interval between the second time-frequency resource and the first time-frequency resource.

409. The UE receives the second scheduling information sent by the base station, where the second scheduling information includes at least the third time-frequency resource.

410. The UE retransmits the transport block on the third time-frequency resource to the base station.

411. The base station receives the transport block retransmitted by the UE on the third time-frequency resource.

According to different quantities of transport blocks received by the base station, the method for receiving the transport block retransmitted by the UE on the third time-frequency resource is similar to step 310. Details are not further described herein.

It should be noted that, the foregoing method for sending feedback information can be not only applicable to a case in which an uplink transmission time interval and a downlink transmission time interval are the same, but also applicable to a case in which an uplink transmission time interval and a downlink transmission time interval are different.

Because the time domain resource of the second time-frequency resource is determined according to the location of the first time-frequency resource, the duration of the first transmission time interval in the downlink DL, and the duration of the second transmission time interval in the UL, efficiency of data transmission can be improved. Further, by using the method of adding the PHICH to send feedback information, the feedback information about the received plurality of transport blocks can be sent at one time, and efficiency of sending feedback data can be improved. Because the location of the first time-frequency resource for sending the transport block by the UE is agreed, and when the transport block sent by the UE is not received successfully, the location of the third time-frequency resource for retransmitting the transport block by the UE is agreed, efficiency and accuracy of data transmission can be further improved.

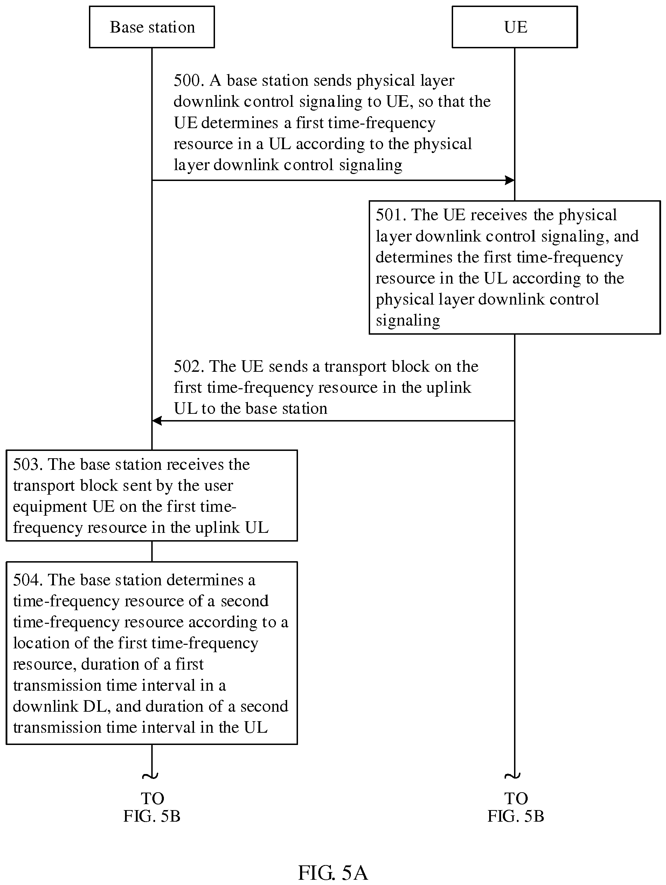

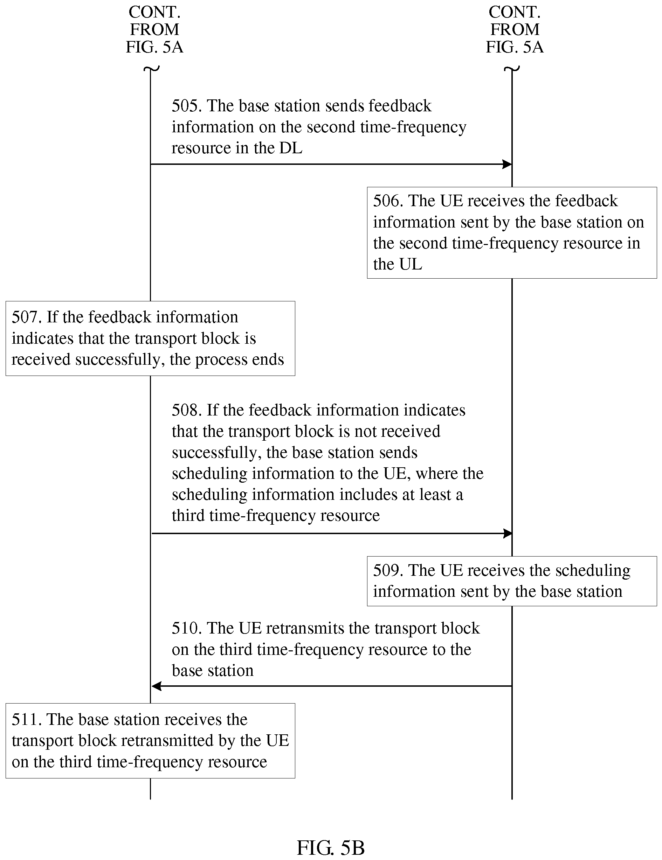

FIG. 5A and FIG. 5B are a flowchart of a method for sending feedback information according to an embodiment of the present invention. In this embodiment, a first transmission time interval in a DL may be shorter than a second transmission time interval in a UL, UE is used as a sender, and a base station is used as a recipient, to implement data transmission between the base station and the UE. Specifically, the method includes the following steps.

500. A base station sends physical layer downlink control signaling to the UE, so that the UE determines a first time-frequency resource in the UL according to the physical layer downlink control signaling.

The definition of the first time-frequency resource and the method for obtaining the first time-frequency resource are similar to those in step 400. Details are not further described herein.

501. The UE receives the physical layer downlink control signaling, and determines the first time-frequency resource in the UL according to the physical layer downlink control signaling.

502. The UE sends a transport block to the base station on the first time-frequency resource in the uplink UL.

503. The base station receives the transport block sent by the user equipment UE on the first time-frequency resource in the uplink UL.

Because the UE can send only one transport block within a transmission time interval in the UL, and a first transmission time interval in a DL is shorter than a second transmission time interval in the UL, the base station can receive, in a subframe in the DL, only one transport block sent by the UE. That is, the base station receives a PDSCH in a subframe in the DL, where the PDSCH carries one transport block.

504. The base station determines a time domain resource of a second time-frequency resource according to a location of the first time-frequency resource, duration of a first transmission time interval in a downlink DL, and duration of a second transmission time interval in the UL.

The method for determining the time domain resource of the second time-frequency resource is similar to the method for determining the time domain resource of the second time-frequency resource in step 404. Details are not further described herein.

505. The base station sends feedback information on the second time-frequency resource in the DL, where the feedback information is used to indicate a receiving status of the transport block.

The manner of indicating the feedback information is similar to the method for indicating the feedback information in step 203. Details are not further described herein. The method for determining a resource location of a physical hybrid repeat indicator channel PHICH of the UE is similar to determining a resource location of a physical hybrid repeat indicator channel PHICH of the UE in the first case. Details are not further described herein.
In another embodiment of the present invention, the second time-frequency resource is sent to the UE by using scheduling information, so that the UE makes preparations in advance for receiving the feedback information sent by the base station.

506. The UE receives the feedback information sent by the base station on the second time-frequency resource in the UL.

The UE performs different steps according to received different feedback information. To be specific, when the feedback information indicates that the transport block is received successfully, step 507 is performed; or when the feedback information indicates that the transport block is not received successfully, step 508 is performed.

507. If the feedback information indicates that the transport block is received successfully, the process ends.
508. If the feedback information indicates that the transport block is not received successfully, the base station sends scheduling information to the UE, where the scheduling information includes at least the third time-frequency resource.

The method for sending the scheduling information corresponds to the method for receiving the second scheduling information in step 301. Details are not further described herein.

509. The UE receives the scheduling information sent by the base station.
510. The UE retransmits the transport block on the third time-frequency resource to the base station.
511. The base station receives the transport block retransmitted by the UE on the third time-frequency resource.

According to different quantities of transport blocks received by the base station, the method for receiving the transport block retransmitted by the UE on the third time-frequency resource is similar to step 310. Details are not further described herein.
It should be noted that, the foregoing method for sending feedback information can be not only applicable to a case in which an uplink transmission time interval and a downlink transmission time interval are the same, but also applicable to a case in which an uplink transmission time interval and a downlink transmission time interval are different.
Because the time domain resource of the second time-frequency resource is determined according to the location of the first time-frequency resource, the duration of the first transmission time interval in the downlink DL, and the duration of the second transmission time interval in the UL, efficiency of data transmission can be improved. Further, because the location of the second time-frequency resource for sending the feedback information by the base station is determined, and the location of the second time-frequency resource is sent to the UE, the UE can make preparations in advance for receiving the feedback information.

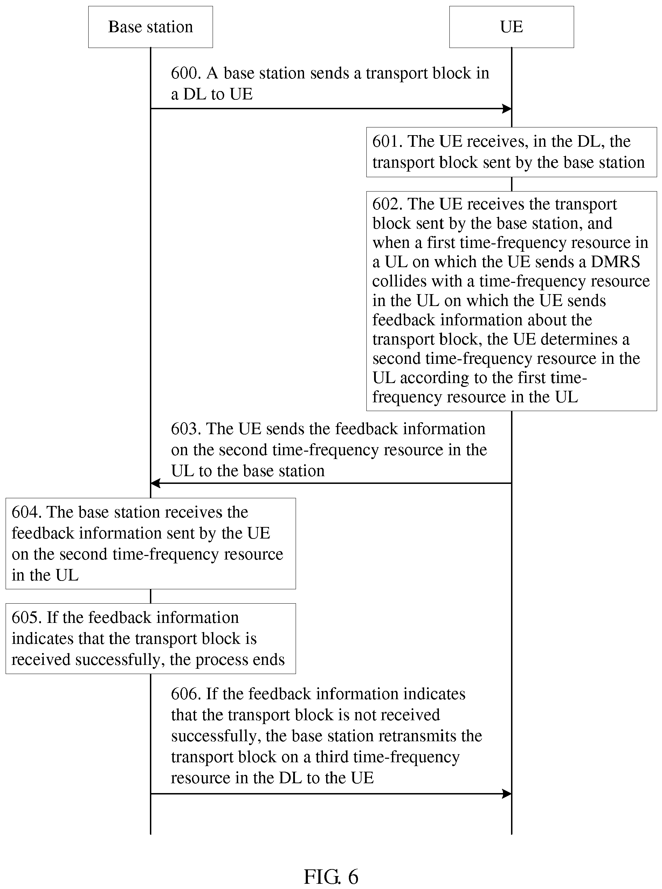

FIG. 6 is a flowchart of a method for sending feedback information according to an embodiment of the present invention. In a process in which a base station sends a transport block and UE sends feedback information about the transport block, a time-frequency resource occupied by the UE for sending the feedback information may collide with a time-frequency resource occupied by the UE for sending a DMRS. To avoid the foregoing case, the time-frequency resource for sending the feedback information by the UE needs to be restricted. The method specifically includes the following steps.

600. A base station sends a transport block in a DL to UE.

601. The UE receives, in the DL, the transport block sent by the base station.

602. The UE receives the transport block sent by the base station, and when a first time-frequency resource in a UL on which the UE sends a DMRS collides with a time-frequency resource in the UL on which the UE sends feedback information about the transport block, the UE determines a second time-frequency resource in the UL according to the first time-frequency resource in the UL.

That a first time-frequency resource in a UL on which the UE sends a DMRS collides with a time-frequency resource in the UL on which the UE sends feedback information about the transport block means that the time-frequency resource used by the UE to send the DMRS overlaps the time-frequency resource on which the UE sends the feedback information about the transport block, and a data transmission error is caused. To ensure successful transmission of the DMRS and the feedback information, the second time-frequency resource used for sending the feedback information needs to be agreed.

The method for determining the second time-frequency resource in the UL according to the first time-frequency resource in the UL may be any one of the following five methods: 1. determining a time-frequency resource that is nearest to the first time-frequency resource in a time domain and in which a PUCCH is located, as the second time-frequency resource; 2. determining a time-frequency resource that is specified with the first time-frequency resource in a time domain and in which a PUCCH is located, as the second time-frequency resource; 3. determining either of two time-frequency resources adjacent to the first time-frequency resource, as the second time-frequency resource; 4. determining a time-frequency resource specified in two time-frequency resources adjacent to the first time-frequency resource, as the second time-frequency resource; and 5. determining a time-frequency resource in a fixed location previous or next to the first time-frequency resource, as the second time-frequency resource.

The method for determining the second time-frequency resource in the UL according to the first time-frequency resource in the UL may be any one of the foregoing five methods, or a specified time-frequency resource in which a PUCCH is located may be determined as the second time-frequency resource. Certainly, the second time-frequency resource may be determined by using another method. This is not limited in this embodiment of the present invention.

When the first time-frequency resource in the UL on which the UE sends the DMRS collides with the time-frequency resource in the UL on which the UE sends the feedback information about the transport block, the second time-frequency resource in the UL is determined according to the first time-frequency resource in the UL. This can avoid a case in which the DMRS and the feedback information cannot be transmitted successfully due to collision of the time-frequency resources.

603. The UE sends the feedback information on the second time-frequency resource in the UL to the base station, where the feedback information is used to indicate a transmission status of the data block.

The UE sends the feedback information on the second time-frequency resource in the UL to the base station, and sends the DMRS on a time-frequency resource other than the second time-frequency resource in the UL to the base station. This can avoid the case in which the DMRS and the feedback information cannot be transmitted successfully because the first time-frequency resource in the UL on which the UE sends the DMRS collides with the time-frequency resource in the UL on which the UE sends the feedback information about the transport block.

In another embodiment of the present invention, the feedback information is carried in the DMRS, and the feedback information is sent on the first time-frequency resource in the UL to the base station. Specifically, the feedback information is carried in the DMRS in a form of bit information or a form of reference signal amplitude information and sent on the first time-frequency resource in the UL to the base station.

For example, when a numeric value indicated by the bit information is a first numeric value, it is considered that the transport block is received successfully, or when a numeric value indicated by the bit information is a second numeric value, it is considered that the transport block is not received successfully. Likewise, when a numeric value indicated by the reference signal amplitude information is a first numeric value, it is considered that the transport block is received successfully, or when a numeric value indicated by the reference signal amplitude information is a second numeric value, it is considered that the transport block is not received successfully.

In another embodiment of the present invention, the UE receives at least two transport blocks sent within a same transmission time interval or adjacent or contiguous transmission time intervals, and when a time-frequency resource for sending feedback information about one transport block in the at least two data blocks collides with the first time-frequency resource, the UE combines the feedback information about the transport block with feedback information about other transport blocks in the at least two transport blocks. The transmission time interval in the UL is an OFDM symbol.

Assuming that feedback information about two transport blocks is combined, the method for combining the feedback information about the two transport blocks may be: using one binary number to indicate feedback information about either of the two transport blocks, and using two binary numbers to indicate combined feedback information. For example, when the combined feedback information is 00, it indicates that neither of the two transport blocks is transmitted successfully; when the combined feedback information is 01, it indicates that a first transport block in the two transport blocks is not transmitted successfully and that a second transport block is transmitted successfully; when the combined feedback information is 10, it indicates that a first transport block in the two transport blocks is transmitted successfully and that a second transport block is not transmitted successfully; or when the combined feedback information is 11, it indicates that both the two transport blocks are transmitted successfully. The first transport block in the two transport blocks is a transport block that is sent earlier in the two transport blocks; and correspondingly, the second transport block is a transport block that is sent later in the two transport blocks.

When a time-frequency resource for sending feedback information about one transport block in the at least two data blocks collides with the first time-frequency resource, the UE combines the feedback information about the transport block with feedback information about other transport blocks in the at least two transport blocks. This can not only avoid a case in which the feedback information cannot be transmitted successfully due to collision of the time-frequency resources, but also save the time-frequency resources occupied by the feedback information.

604. The base station receives the feedback information sent by the UE on the second time-frequency resource in the UL.

The UE performs different steps according to received different feedback information. To be specific, when the feedback information indicates that the transport block is received successfully, step 605 is performed; or when the feedback information indicates that the transport block is not received successfully, step 606 is performed.

605. If the feedback information indicates that the transport block is received successfully, the process ends.

606. If the feedback information indicates that the transport block is not received successfully, the base station retransmits the transport block on a third time-frequency resource in the DL to the UE.

It should be noted that, the foregoing method for sending feedback information can be not only applicable to a case in which an uplink transmission time interval and a downlink transmission time interval are the same, but also applicable to a case in which an uplink transmission time interval and a downlink transmission time interval are different.

When the first time-frequency resource in the UL on which the UE sends the DMRS collides with the time-frequency resource in the UL on which the UE sends the feedback information about the transport block, the second time-frequency resource in the UL is determined according to the first time-frequency resource in the UL. This can avoid the case in which the DMRS and the feedback information cannot be transmitted successfully due to collision of the time-frequency resources. When the time-frequency resource on which the UE sends the feedback information about one transport block in the at least two data blocks collides with the first time-frequency resource, the feedback information about the transport block is combined with the feedback information about the other transport blocks in the at least two transport blocks. This can not only avoid the case in which the feedback information cannot be transmitted successfully due to collision of the time-frequency resources, but also save the time-frequency resources occupied by the feedback information.

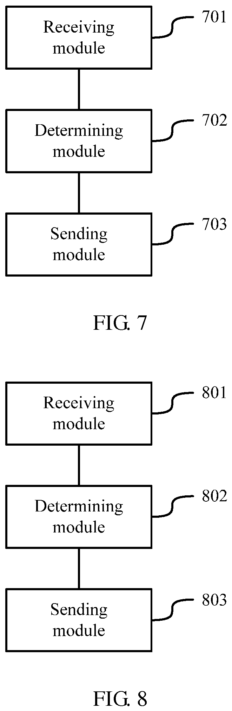

FIG. 7 is a schematic structural diagram of an apparatus for sending feedback information according to an embodiment of the present invention. The apparatus includes a receiving module 701, a determining module 702, and a sending module 703.

The receiving module 701 is configured to receive a transport block or transport block control information sent by a base station on a first time-frequency resource in a downlink DL.

The determining module 702 is configured to determine a time domain resource of a second time-frequency resource based on a resource location of the first time-frequency resource, duration of a first transmission time interval in the DL, and duration of a second transmission time interval in an uplink UL.

The sending module 703 is configured to send feedback information on the second time-frequency resource that is in the UL and is determined by the determining module 702, where the feedback information is used to indicate a receiving status of the transport block.

In a first possible implementation provided by the present invention, the receiving module 701 is further configured to receive, on a time-frequency resource indicated by the transport block control information, the transport block sent by the base station, where the transport block control information includes at least transmission location information of the transport block or information of a physical layer downlink control channel PDCCH related to the transport block.

In a second possible implementation provided by the present invention, the determining module 702 is configured to:

determine duration of any second transmission time interval frame in an $(n+k)^{th}$ subframe location corresponding to the DL, in the UL as the time domain resource of the second time-frequency resource; or

determine duration of any second transmission time interval frame other than a first second transmission time interval frame and/or a last second transmission time interval frame in an $(n+k)^{th}$ subframe location corresponding to the DL, in the UL as the time domain resource of the second time-frequency resource; or

determine duration of a second transmission time interval frame specified in an $(n+k)^{th}$ subframe location corresponding to the DL, in the UL as the time domain resource of the second time-frequency resource; or

determine duration of an $m^{th}$ second transmission time interval frame after a $[k*(TTI\_DL/TTI\_UL)]^{th}$ second transmission time interval frame after an $n^{th}$ subframe in the UL as the time domain resource of the second time-frequency resource, where "[ ]" indicates a rounding operator, TTI_DL and TTI_UL respectively indicate duration of one transmission time interval in the DL and duration of one transmission time interval in the UL, and m is a natural number; where

n indicates a subframe number of a subframe in which the first time-frequency resource is located.

In a third possible implementation provided by the present invention, the receiving module 701 is further configured to receive second transmission time interval frame configuration information, and determine the time domain resource of the second time-frequency resource according to the second transmission time interval configuration information, where the second transmission time interval frame configuration information carries time domain resource information of the second time-frequency resource.

In a fourth possible implementation provided by the present invention, the time domain resource information of the second time-frequency resource is time domain resource information corresponding to a second transmission time interval frame specified in an $(n+k)^{th}$ subframe location corresponding to the DL, in the UL; or

the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, where "[ ]" indicates a rounding operator, TTI_DL and TTI_UL respectively indicate duration of one transmission time interval in the DL and duration of one transmission time interval in the UL, and m is a natural number; where

n indicates a subframe number of a subframe in which the first time-frequency resource is located.

In a fifth possible implementation provided by the present invention, the receiving module 701 is further configured to:

receive information carried on a PDCCH and sent by the base station, where the information carried on the PDCCH includes at least the second transmission time interval frame configuration information; or

receive Medium Access Control layer MAC signaling sent by the base station, where the MAC signaling carries the second transmission time interval frame configuration information; or

receive radio resource control protocol layer RRC signaling sent by the base station, where the RRC signaling carries the second transmission time interval frame configuration information; or

receive the second transmission time interval frame configuration information with reference to at least two of the foregoing three methods.

In a sixth possible implementation provided by the present invention, the second time-frequency resource information is indicated by a subframe number of the network system and a subframe number of a second transmission time interval frame in the UL in a subframe of the network system; or

the time domain resource information of the second time-frequency resource is indicated by an absolute time; or

the time domain resource information of the second time-frequency resource is indicated by an absolute number of a second transmission time interval frame in the UL; or

the time domain resource information of the second time-frequency resource is indicated by an index value of a second transmission time interval frame in the UL; or

the time domain resource information of the second time-frequency resource is indicated by a subframe number of the network system and an index value of a second transmission time interval frame in the UL.

In a seventh possible implementation provided by the present invention, the receiving module 701 is further configured to:

receive first scheduling information sent by the base station, where the first scheduling information carries the time domain resource information of the second time-frequency resource.

In an eighth possible implementation provided by the present invention, if the transport block is cross-subframe scheduled, the first time-frequency resource is a location in a subframe used for the base station to send a transport block carried in a downlink shared channel PDSCH; or

the first time-frequency resource is a location in a subframe used for the base station to send information carried on a PDCCH.

In a ninth possible implementation provided by the present invention, the sending module 703 is further configured to:

when the duration of the first transmission time interval in the DL is shorter than or equal to the duration of the second transmission time interval in the UL, if a plurality of transport blocks sent by the base station are received in a subframe in the DL, send, on the second time-frequency resource, a plurality of pieces of feedback information carried in a PUCCH about the plurality of transport blocks; or

when the duration of the first transmission time interval in the DL is shorter than or equal to the duration of the second transmission time interval in the UL, if a finite quantity of transport blocks sent by the base station are received in a subframe in the DL, send, on the second time-frequency resource, a finite quantity of pieces of feedback information carried in the PUCCH about the finite quantity of transport blocks.

In a tenth possible implementation provided by the present invention, the receiving module 701 is further configured to:

receive second scheduling information sent by the base station, where the second scheduling information carries the first time-frequency resource information, and the first time-frequency resource information includes a time-frequency resource location of a first transmission time interval frame.

In an eleventh possible implementation of the seventh aspect of the present invention, that the receiving module 701 is further configured to receive second scheduling information sent by the base station includes:

receiving information carried on a PDCCH and sent by the base station, where the information carried on the PDCCH carries the second scheduling information; or

receiving MAC signaling sent by the base station, where the MAC signaling carries the second scheduling information; or

receiving RRC signaling sent by the base station, where the RRC signaling carries the second scheduling information; or

receiving the second scheduling information with reference to at least two of the foregoing three methods.

In a twelfth possible implementation provided by the present invention, if a feedback bit is used to indicate the plurality of pieces of feedback information, when the plurality of transport blocks are all received correctly, the feedback bit is 1; or

when at least one of the plurality of transport blocks is not received correctly, the feedback bit is 0.

In a thirteenth possible implementation provided by the present invention, a time domain resource of the first time-frequency resource is a time domain resource corresponding to an $m^{th}$ first transmission time interval frame of an $n^{th}$ subframe in the DL.

In a fourteenth possible implementation provided by the present invention, the receiving module 701 is further configured to:

receive the information carried on the PDCCH and sent by the base station, where the information carried on the PDCCH includes at least a value of m; or

receive Medium Access Control layer MAC signaling sent by the base station, where the MAC signaling carries a value of m; or

receive radio resource control protocol layer RRC signaling sent by the base station, where the RRC signaling carries a value of m; or

receive a value of m with reference to at least two of the foregoing three methods.

In a fifteenth possible implementation provided by the present invention, the receiving module 701 is further configured to:

receive third scheduling information sent by the base station, where the third scheduling information includes at least the third time-frequency resource; and

receive the transport block retransmitted by the base station on the third time-frequency resource.

In a sixteenth possible implementation provided by the present invention, a time domain resource of the third time-frequency resource is a time domain resource corresponding to an $m'^{th}$ first transmission time interval frame of an $(n+k+k')^{th}$ subframe in the DL, where k' is a natural number, and m' is a natural number.

In a seventeenth possible implementation provided by the present invention, the receiving module 701 is further configured to:

receive fourth scheduling information sent by the base station, where the fourth scheduling information carries a value of m'; or

receive fifth scheduling information sent by the base station, and determine a value of m' according to the fifth scheduling information.

In an eighteenth possible implementation provided by the present invention, the receiving module 701 is further configured to:

receive, in a subframe in the DL, information carried in a plurality of short transmission time interval frames on a shared channel PDSCH and sent by the base station, where the information carried in the plurality of short transmission time interval frames includes at least the plurality of transport blocks.

In a nineteenth possible implementation provided by the present invention, the apparatus further includes a first time-frequency resource determining module, where the first time-frequency resource determining module is configured to:

determine a time domain resource in which information carried in a first short transmission time interval frame in the plurality of short transmission time interval frames is located, as a time domain resource of the first time-frequency resource; or

determine a time domain resource in which information carried in a short transmission time interval frame specified in the plurality of short transmission time interval frames is located, as a time domain resource of the first time-frequency resource; or

determine a time domain resource in which control information corresponding to the plurality of short transmission time interval frames is located, as a time domain resource of the first time-frequency resource.

In a twentieth possible implementation provided by the present invention, a value of k is 4 and/or a natural number less than 4.

In a twenty-first possible implementation provided by the present invention, duration of each time interval frame in the UL and the DL is shorter than or equal to 0.5 ms, and each time interval frame includes Z OFDM symbols, where Z is any integer that is greater than or equal to 1 and less than or equal to 7.

FIG. 8 is a schematic structural diagram of an apparatus for sending feedback information according to an embodiment of the present invention. The apparatus includes a receiving module 801, a determining module 802, and a sending module 803.

The receiving module 801 is configured to receive a transport block sent by user equipment UE on a first time-frequency resource in an uplink UL.

The determining module 802 is configured to determine a time domain resource of a second time-frequency resource according to a location of the first time-frequency resource, duration of a first transmission time interval in a downlink DL, and duration of a second transmission time interval in the UL.

The sending module 803 is configured to send feedback information on the second time-frequency resource that is in the DL and is determined by the determining module 802, where the feedback information is used to indicate a receiving status of the transport block.

In a first possible implementation provided by the present invention, the sending module 803 is further configured to:

send physical layer downlink control signaling to the UE, so that the UE determines the first time-frequency resource in the UL according to the physical layer downlink control signaling.

In a second possible implementation provided by the present invention, a time domain resource of the first time-frequency resource is a time domain resource corresponding to any second transmission time interval frame in an $n^{th}$ subframe location in the UL; or

a time domain resource of the first time-frequency resource is a time domain resource corresponding to any second transmission time interval frame other than a first second transmission time interval frame and/or a last second transmission time interval frame in an $n^{th}$ subframe location in the UL; or

a time domain resource of the first time-frequency resource is a time domain resource corresponding to an $m^{th}$ second transmission time interval frame in an $n^{th}$ subframe location in the UL, where m is a natural number; where

n indicates a subframe number of a subframe in which the first time-frequency resource is located.

In a third possible implementation provided by the present invention, the determining module 802 is configured to:

determine duration of any second transmission time interval frame in an $(n+k)^{th}$ subframe location corresponding to the UL, in the DL as the time domain resource of the second time-frequency resource; or

determine duration of any second transmission time interval frame other than a first second transmission time interval frame and/or a last second transmission time interval frame in an $(n+k)^{th}$ subframe location corresponding to the UL, in the DL as the time domain resource of the second time-frequency resource; or

determine duration of a second transmission time interval frame specified in an $(n+k)^{th}$ subframe location corresponding to the UL, in the DL as the time domain resource of the second time-frequency resource; or

determine duration of an $m^{th}$ second transmission time interval frame after a $[k*(TTI\_DL/TTI\_UL)]^{th}$ second transmission time interval frame after an $n^{th}$ subframe in the DL as the time domain resource of the second time-frequency resource, where "[ ]" indicates a rounding operator, TTI_DL and TTI_UL respectively indicate duration of one transmission time interval in the DL and duration of one transmission time interval in the UL, and m is greater than or equal to 1 and less than or equal to a quantity of second transmission time interval frames included in a subframe in the UL; where

n indicates a subframe number of a subframe in which the first time-frequency resource is located.

In a fourth possible implementation provided by the present invention, the sending module 803 is further configured to:

send second transmission time interval frame configuration information to the UE, where the second transmission time interval frame configuration information carries the time domain resource of the second time-frequency resource, and the second transmission time interval frame configuration information is used to instruct the UE to receive, on the second time-frequency resource, the feedback information sent by a base station.

In a fifth possible implementation provided by the present invention, time domain resource information of the second time-frequency resource is indicated by a subframe number of the network system and a frame number of a second transmission time interval frame in the DL in a subframe of the network system; or

time domain resource information of the second time-frequency resource is indicated by an absolute time; or

time domain resource information of the second time-frequency resource is indicated by an absolute number of a second transmission time interval frame in the DL; or

time domain resource information of the second time-frequency resource is indicated by an index value of a second transmission time interval frame in the DL; or

time domain resource information of the second time-frequency resource is indicated by a subframe number of the network system and an index value of a second transmission time interval frame in the DL.

In a sixth possible implementation provided by the present invention, the sending module 803 is further configured to:

send the second time-frequency resource information to the UE.

In a seventh possible implementation of the eighth aspect of the present invention, the second time-frequency resource information is indicated by a subframe number of the network system and a frame number of a second transmission time interval frame in the DL in a subframe of the network system; or

time domain resource information of the second time-frequency resource is indicated by an absolute time; or

time domain resource information of the second time-frequency resource is indicated by an absolute number of a second transmission time interval frame in the DL; or

time domain resource information of the second time-frequency resource is indicated by an index value of a second transmission time interval frame in the DL; or

time domain resource information of the second time-frequency resource is indicated by a subframe number of the network system and an index value of a second transmission time interval frame in the DL.

In an eighth possible implementation provided by the present invention, the sending module 803 is further configured to:

send information carried on a PDCCH to the UE, where the information carried on the PDCCH carries at least the second time-frequency resource information; or

send first scheduling information to the UE, where the first scheduling information carries at least the second transmission time interval frame configuration information, so that the UE determines the second time-frequency resource according to the second transmission time interval frame configuration information.

In a ninth possible implementation provided by the present invention, the PDCCH further carries the first time-frequency resource used for instructing the UE to send information carried in a physical layer uplink shared channel PUSCH, and the PUSCH carries at least the transport block.

In a tenth possible implementation provided by the present invention, the sending module 803 is configured to:

determine a resource location of a physical hybrid repeat indicator channel PHICH of the UE based on a resource location of a physical layer uplink shared channel PUSCH of the UE; and
send the PHICH on the second time-frequency resource in the DL, where the PHICH carries the feedback information.

In an eleventh possible implementation provided by the present invention, if the duration of the first transmission time interval in the DL is longer than the duration of the second transmission time interval in the UL, and transport blocks received in a subframe in the UL are a plurality of transport blocks, and frequency domain resources occupied by the plurality of transport blocks are different from each other, the sending module 803 is configured to send feedback information about the plurality of transport blocks on the second time-frequency resource in the DL.

In a twelfth possible implementation provided by the present invention, the sending module 803 is further configured to:
when the duration of the first transmission time interval in the DL is longer than the duration of the second transmission time interval in the UL, receive, in a subframe in the DL, a plurality of transport blocks sent by the UE, where frequency domain resources occupied by the plurality of transport blocks are different from each other.

In a thirteenth possible implementation provided by the present invention, the apparatus further includes a processing module, where the processing module is configured to: when the duration of the first transmission time interval in the DL is longer than the duration of the second transmission time interval in the UL, if a plurality of transport blocks sent by the UE are received in a subframe in the DL, and frequency domain resources occupied by the plurality of transport blocks are the same, for feedback information about the plurality of transport blocks, perform the step of determining a resource location of a physical hybrid repeat indicator channel PHICH of the UE based on a resource location of a PUSCH of the UE.

In a fourteenth possible implementation provided by the present invention, the sending module 803 is configured to:

according to formulas:

$$n_{PHICH}^{group} = (N_{PRB}^{UL} * (m-1) + I_{PRB\_RA} + n_{DMRS}) \bmod N_{PHICH}^{group} + I_{PHICH} N_{PHICH}^{group}$$

and

$$n_{PHICH}^{seq} = ([(N_{PRB}^{UL} * (m-1) + I_{PRB\_RA}) / N_{PHICH}^{group}] + n_{DMRS}) \bmod 2N_{SF}^{PHICH},$$

where m indicates any one of the plurality of transport blocks sent by the UE in an $m^{th}$ second transmission time interval frame after an $n^{th}$ subframe in the UL, $N_{SF}^{PHICH} = 4$, $n_{PHICH}^{group}$ indicates a group number of the PHICH, $n_{PHICH}^{seq}$ indicates a sequence number of the PHICH, $n_{DMRS}$ indicates a numeric value related to a DMRS, $N_{PHICH}^{group}$ indicates a group number of the PHICH, $I_{PHICH}$ is used to indicate a spreading factor for PHICH modulation, and $N_{PRB}^{UL}$ is an index value of data in a minimum frequency block in a frequency domain.

In a fifteenth possible implementation provided by the present invention, the sending module 803 is further configured to send second scheduling information to the UE, where the second scheduling information includes at least the third time-frequency resource; and
the receiving module 801 is further configured to receive the transport block retransmitted by the UE on the third time-frequency resource.

In a sixteenth possible implementation provided by the present invention, a time interval between the third time-frequency resource and the second time-frequency resource is different from a time interval between the second time-frequency resource and the first time-frequency resource.

In a seventeenth possible implementation provided by the present invention, a value of k is 4 and/or a natural number less than 4.

In an eighteenth possible implementation provided by the present invention, duration of each time interval frame in the UL and the DL is shorter than or equal to 0.5 ms, and each time interval frame includes Z OFDM symbols, where Z is any integer that is greater than or equal to 1 and less than or equal to 7.

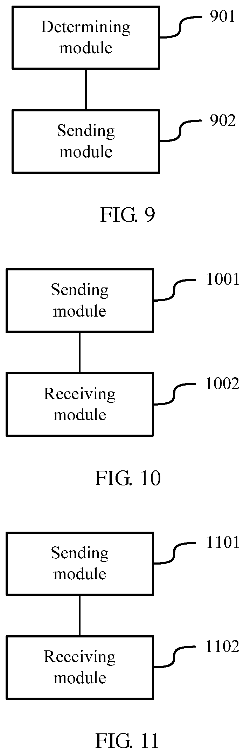

FIG. 9 is a schematic structural diagram of an apparatus for sending feedback information according to an embodiment of the present invention. The apparatus includes a determining module 901 and a sending module 902.

The determining module 901 is configured to receive, by UE, a transport block sent by a base station, and when a first time-frequency resource in a UL on which the UE sends a DMRS collides with a time-frequency resource in the UL on which the UE sends feedback information about the transport block, determine a second time-frequency resource in the UL according to the first time-frequency resource in the UL.

The sending module 902 is configured to send the feedback information on the second time-frequency resource that is in the UL and is determined by the determining module 901 to the base station, where the feedback information is used to indicate a transmission status of the transport block.

In a first possible implementation provided by the present invention, the determining module 901 is configured to:

determine a time-frequency resource that is nearest to the first time-frequency resource in a time domain and in which a PUCCH is located, as the second time-frequency resource; or

determine a time-frequency resource that is specified with the first time-frequency resource in a time domain and in which a PUCCH is located, as the second time-frequency resource; or

determine either of two time-frequency resources adjacent to the first time-frequency resource, as the second time-frequency resource; or

determine a time-frequency resource specified in two time-frequency resources adjacent to the first time-frequency resource, as the second time-frequency resource; or

determine a time-frequency resource in a fixed location previous or next to the first time-frequency resource, as the second time-frequency resource.

In a second possible implementation provided by the present invention, the apparatus further includes:

a feedback information combining module, configured to receive, by the UE, at least two transport blocks sent within a same transmission time interval or adjacent or contiguous transmission time intervals, and when a time-frequency resource for sending feedback information about one transport block in the at least two data blocks collides with the first time-frequency resource, combine the feedback information about the transport block with feedback information about other transport blocks in the at least two transport blocks.

In a third possible implementation provided by the present invention, the determining module 901 is further configured to:

determine a specified time-frequency resource in which a PUCCH is located, as the second time-frequency resource.

In a fourth possible implementation provided by the present invention, the sending module 902 is further configured to:

send, on the first time-frequency resource in the UL, the feedback information to the base station by carrying the feedback information in the DMRS.

In a fifth possible implementation provided by the present invention, the sending module 902 is further configured to:

send, on the first time-frequency resource in the UL, the DMRS carrying the feedback information in a form of bit information or a form of reference signal amplitude information to the base station.

In a sixth possible implementation provided by the present invention, a transmission time interval in the UL is an OFDM symbol.

FIG. 10 is a schematic structural diagram of an apparatus for sending feedback information according to an embodiment of the present invention. The apparatus includes a sending module 1001 and a receiving module 1002.

The sending module 1001 is configured to send a transport block or transport block control information on a first time-frequency resource in a DL to UE.

The receiving module 1002 is configured to receive feedback information sent by the UE on a second time-frequency resource, where the feedback information is used to indicate a receiving status of the transport block sent by the sending module 1001.

In a first possible implementation provided by the present invention, the sending module 1001 is further configured to:

send the transport block on a time-frequency resource indicated by the transport block control information to the UE, where the transport block control information includes at least transmission location information of the transport block or information of a physical layer downlink control channel PDCCH related to the transport block.

In a second possible implementation provided by the present invention, the sending module 1001 is further configured to:

send second transmission time interval frame configuration information to the UE, so that the UE determines a time domain resource of the second time-frequency resource according to the second transmission time interval configuration information, where the second transmission time interval frame configuration information carries time domain resource information of the second time-frequency resource.

In a third possible implementation provided by the present invention, the second transmission time interval frame configuration information includes:

the time domain resource information of the second time-frequency resource, where the time domain resource information of the second time-frequency resource is time domain resource information corresponding to a second transmission time interval frame specified in an $(n+k)^{th}$ subframe location corresponding to the DL, in the UL; or the time domain resource information of the second time-frequency resource, where the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, where "[ ]" indicates a rounding operator, TTI_DL and TTI_UL respectively indicate duration of one transmission time interval in the DL and duration of one transmission time interval in the UL, and m is a natural number; where

n indicates a subframe number of a subframe in which the first time-frequency resource is located.

In a fourth possible implementation provided by the present invention, the sending module 1001 is further configured to:

send information carried on a PDCCH to the UE, where the information carried on the PDCCH includes at least the second transmission time interval frame configuration information; or send Medium Access Control layer MAC signaling to the UE, where the MAC signaling carries the second transmission time interval frame configuration information; or send radio resource control protocol layer RRC signaling to the UE, where the RRC signaling carries the second transmission time interval frame configuration information; or send the second transmission time interval frame configuration information with reference to at least two of the foregoing three methods.

In a fifth possible implementation provided by the present invention, the second time-frequency resource information is indicated by a subframe number of the network system and a subframe number of a second transmission time interval frame in the UL in a subframe of the network system; or the time domain resource information of the second time-frequency resource is indicated by an absolute time; or the time domain resource information of the second time-frequency resource is indicated by an absolute number of a second transmission time interval frame in the UL; or the time domain resource information of the second time-frequency resource is indicated by an index value of a second transmission time interval frame in the UL; or the time domain resource information of the second time-frequency resource is indicated by a subframe number of the network system and an index value of a second transmission time interval frame in the UL.

In a sixth possible implementation provided by the present invention, the sending module 1001 is further configured to:
send first scheduling information to the UE, where the first scheduling information carries the time domain resource information of the second time-frequency resource.

In a seventh possible implementation provided by the present invention, if the transport block is cross-subframe scheduled, the first time-frequency resource is a location in a subframe used for sending a transport block carried in a downlink shared channel PDSCH; or
the first time-frequency resource is a location in a subframe used for sending information carried on a PDCCH.

In an eighth possible implementation provided by the present invention, the receiving module 1002 is further configured to:

when duration of a first transmission time interval in the DL is shorter than or equal to duration of a second transmission time interval in the UL, if a base station sends a plurality of transport blocks in a subframe in the DL, receive, on the second time-frequency resource, a plurality of pieces of feedback information carried in a PUCCH about the plurality of transport blocks and sent by the UE; or when duration of a first transmission time interval in the DL is shorter than or equal to duration of a second transmission time interval in the UL, if the base station sends a finite quantity of transport blocks in a subframe in the DL, receive, on the second time-frequency resource, a finite quantity of pieces of feedback information carried in the PUCCH about the finite quantity of transport blocks and sent by the UE.

In a ninth possible implementation provided by the present invention, the sending module 1001 is further configured to:
send second scheduling information to the UE, where the second scheduling information carries the first time-frequency resource information, and the first time-frequency resource information includes a time-frequency resource location of a first transmission time interval frame.

In a tenth possible implementation provided by the present invention, the sending module 1001 is further configured to:

send information carried on a PDCCH to the UE, where the information carried on the PDCCH includes at least the second transmission time interval frame configuration information; or
send Medium Access Control layer MAC signaling to the UE, where the MAC signaling carries the second transmission time interval frame configuration information; or
send radio resource control protocol layer RRC signaling to the UE, where the RRC signaling carries the second transmission time interval frame configuration information; or
send the second transmission time interval frame configuration information with reference to at least two of the foregoing three methods.

In an eleventh possible implementation provided by the present invention, a time domain resource of the first time-frequency resource is a time domain resource corresponding to an $m^{th}$ first transmission time interval frame of an $n^{th}$ subframe in the DL.

In a twelfth possible implementation provided by the present invention, the sending module 1001 is further configured to:

send information carried on a PDCCH to the UE, where the information carried on the PDCCH includes at least a value of m; or
send Medium Access Control layer MAC signaling to the UE, where the MAC signaling carries a value of m; or
send radio resource control protocol layer RRC signaling to the UE, where the RRC signaling carries a value of m; or
send a value of m with reference to at least two of the foregoing three methods.

In a thirteenth possible implementation provided by the present invention, the sending module 1001 is further configured to:

send third scheduling information to the UE, where the third scheduling information includes at least the third time-frequency resource; and
retransmit the transport block on the third time-frequency resource to the UE.

In a fourteenth possible implementation provided by the present invention, a time domain resource of the third time-frequency resource is a time domain resource corresponding to an $m'^{th}$ first transmission time interval frame of an $(n+k+k')^{th}$ subframe in the DL, where k' is a natural number, and m' is a natural number.

In a fifteenth possible implementation provided by the present invention, the sending module 1001 is further configured to:

send fourth scheduling information to the UE, where the fourth scheduling information carries a value of m'; or
send fifth scheduling information to the UE, so that the UE determines a value of m' according to the fifth scheduling information.

In a sixteenth possible implementation provided by the present invention, the sending module 1001 is further configured to send, in a subframe in the DL, information carried in a plurality of short transmission time interval frames on a shared channel PDSCH to the UE, where the information carried in the plurality of short transmission time interval frames includes at least the plurality of transport blocks.

In a seventeenth possible implementation provided by the present invention, a value of k is 4 and/or a natural number less than 4.

In an eighteenth possible implementation provided by the present invention, duration of each time interval frame in the UL and the DL is shorter than or equal to 0.5 ms, and each time interval frame includes Z OFDM symbols, where Z is any integer that is greater than or equal to 1 and less than or equal to 7.

FIG. 11 is a schematic structural diagram of an apparatus for sending feedback information according to an embodiment of the present invention. The apparatus includes a sending module 1101 and a receiving module 1102.

The sending module 1101 is configured to send a transport block on a first time-frequency resource in a UL to a base station.

The receiving module 1102 is configured to receive feedback information sent by the base station on a second time-frequency resource in a DL, where the feedback information is used to indicate a receiving status of the transport block sent by the sending module 1101.

In a first possible implementation provided by the present invention, the receiving module 1102 is further configured to:

receive physical layer downlink control signaling sent by the base station, and determine the first time-frequency resource in the UL according to the physical layer downlink control signaling.

In a second possible implementation provided by the present invention, a time domain resource of the first time-frequency resource is a time domain resource corresponding to any second transmission time interval frame in an $n^{th}$ subframe location in the UL; or

a time domain resource of the first time-frequency resource is a time domain resource corresponding to any second transmission time interval frame other than a first second transmission time interval frame and/or a last second transmission time interval frame in an $n^{th}$ subframe location in the UL; or

a time domain resource of the first time-frequency resource is a time domain resource corresponding to an $m^{th}$ second transmission time interval frame in an $n^{th}$ subframe location in the UL, where m is a natural number; where

n indicates a subframe number of a subframe in which the first time-frequency resource is located.

In a third possible implementation provided by the present invention, the receiving module 1102 is further configured to:

receive second transmission time interval frame configuration information sent by the base station, where the second transmission time interval frame configuration information carries a time domain resource of the second time-frequency resource, and the second transmission time interval frame configuration information is used to instruct UE to receive, on the second time-frequency resource, the feedback information sent by the base station.

In a fourth possible implementation provided by the present invention, time domain resource information of the second time-frequency resource is indicated by a subframe number of the network system and a frame number of a second transmission time interval frame in the DL in a subframe of the network system; or

time domain resource information of the second time-frequency resource is indicated by an absolute time; or

time domain resource information of the second time-frequency resource is indicated by an absolute number of a second transmission time interval frame in the DL; or

time domain resource information of the second time-frequency resource is indicated by an index value of a second transmission time interval frame in the DL; or

time domain resource information of the second time-frequency resource is indicated by a subframe number of the network system and an index value of a second transmission time interval frame in the DL.

In a fifth possible implementation provided by the present invention, the receiving module 1102 is further configured to:

receive second time-frequency resource information sent by the base station.

In a sixth possible implementation provided by the present invention, the second time-frequency resource information is indicated by a subframe number of the network system and a frame number of a second transmission time interval frame in the DL in a subframe of the network system; or

time domain resource information of the second time-frequency resource is indicated by an absolute time; or

time domain resource information of the second time-frequency resource is indicated by an absolute number of a second transmission time interval frame in the DL; or

time domain resource information of the second time-frequency resource is indicated by an index value of a second transmission time interval frame in the DL; or

time domain resource information of the second time-frequency resource is indicated by a subframe number of the network system and an index value of a second transmission time interval frame in the DL.

In a seventh possible implementation provided by the present invention, the receiving module 1102 is further configured to:

receive information carried on a PDCCH and sent by the base station, where the information carried on the PDCCH carries at least the second time-frequency resource information; or

receive first scheduling information sent by the base station, where the first scheduling information carries at least the second transmission time interval frame configuration information, and determine the second time-frequency resource according to the second transmission time interval frame configuration information.

In an eighth possible implementation provided by the present invention, the PDCCH further carries the first time-frequency resource used for instructing the UE to send information carried in a physical layer uplink shared channel PUSCH, and the PUSCH carries at least the transport block.

In a ninth possible implementation provided by the present invention, the receiving module 1102 is configured to: receive a PHICH sent by the base station on the second time-frequency resource in the DL, where the PHICH carries the feedback information.

In a tenth possible implementation provided by the present invention, the receiving module 1102 is configured to: receive feedback information about the plurality of transport blocks that is sent by the base station on the second time-frequency resource in the DL.

In an eleventh possible implementation provided by the present invention, the sending module 1101 is further configured to: when duration of a first transmission time interval in the DL is longer than duration of a second transmission time interval in the UL, send a plurality of transport blocks in a subframe in the DL to the base station, where frequency domain resources occupied by the plurality of transport blocks are different from each other.

In a twelfth possible implementation provided by the present invention, the receiving module 1102 is further configured to receive second scheduling information sent by the base station, where the second scheduling information includes at least the third time-frequency resource; and

the sending module 1101 is further configured to retransmit the transport block on the third time-frequency resource to the base station.

In a thirteenth possible implementation provided by the present invention, a time interval between the third time-frequency resource and the second time-frequency resource is different from a time interval between the second time-frequency resource and the first time-frequency resource.

In a fourteenth possible implementation provided by the present invention, duration of each time interval frame in the UL and the DL is shorter than or equal to 0.5 ms, and each time interval frame includes Z OFDM symbols, where Z is any integer that is greater than or equal to 1 and less than or equal to 7.

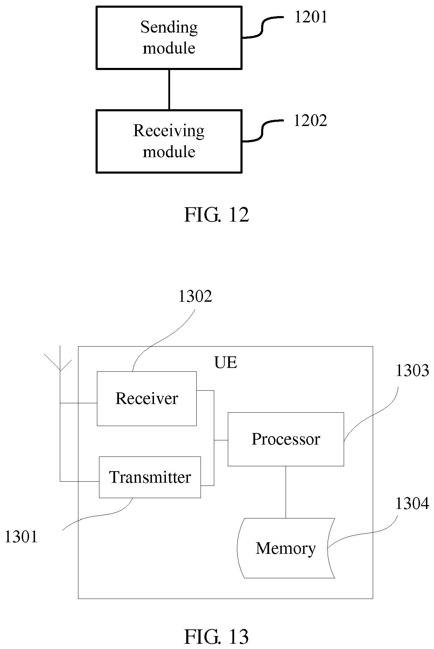

FIG. 12 is a schematic structural diagram of an apparatus for sending feedback information according to an embodiment of the present invention. The apparatus includes a sending module 1201 and a receiving module 1202.

The sending module 1201 is configured to send a transport block to UE.

The receiving module 1202 is configured to receive feedback information sent by the UE on a second time-frequency resource in a UL, where the feedback information is used to indicate a transmission status of the transport block sent by the sending module 1201.

In a first possible implementation provided by the present invention, the sending module 1201 is configured to: send at least two transport blocks within a same transmission time interval or adjacent or contiguous transmission time intervals.

In a second possible implementation provided by the present invention, the receiving module 1202 is further configured to:

receive, on a first time-frequency resource in the UL, a DMRS sent by the UE, where the DMRS carries the feedback information.

In a third possible implementation provided by the present invention, the receiving module 1202 is further configured to:

receive the DMRS, where the DMRS carries the feedback information in a form of bit information or a form of reference signal amplitude information.

In a fourth possible implementation provided by the present invention, a transmission time interval in the UL is an OFDM symbol.

FIG. 13 is a schematic structural diagram of user equipment UE according to an embodiment of the present invention. As shown in the figure, the UE includes a transmitter 1301, a receiver 1302, and a processor 1303 connected to the transmitter 1301 and the receiver 1302 respectively. Certainly, the UE may further include a universal component such as a memory 1304 or an antenna. This is not limited herein in this embodiment of the present invention.

The processor is configured to perform the methods performed on the user equipment side in FIG. 2 to FIG. 6.

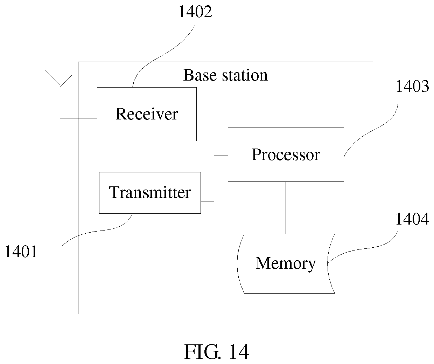

FIG. 14 is a schematic structural diagram of a base station according to an embodiment of the present invention. As shown in the figure, the base station includes a transmitter 1401, a receiver 1402, and a processor 1403 connected to the transmitter 1401 and the receiver 1402 respectively. Certainly, the base station may further include a universal component such as a memory 1404, an antenna, a baseband processing component, an intermediate radio frequency processing component, or an input and output apparatus. This is not limited herein in this embodiment of the present invention.

The processor is configured to perform the methods performed on the base station side in FIG. 2 to FIG. 6.

It should be noted that, in all the embodiments of the present invention, the first transmission time interval may be equal to the second transmission time interval; and the short time interval may also be equal to the first transmission time interval and/or the second transmission time interval. This is not limited in all the embodiments of the present invention.

A person of ordinary skill in the art may understand that all or some of the steps of the embodiments may be implemented by hardware or a program instructing related hardware. The program may be stored in a computer-readable storage medium. The storage medium may include a read-only memory, a magnetic disk, or an optical disc.

The foregoing descriptions are merely example embodiments of the present invention, but are not intended to limit the present invention. Any modification, equivalent replacement, and improvement made without departing from the spirit and principle of the present invention shall fall within the protection scope of the present invention.

**Claims**

**1.** A method for sending feedback information, wherein the method comprises:

receiving a transport block or transport block control information sent by a base station on a first time-frequency resource in a downlink DL;

determining a time domain resource of a second time-frequency resource based on a resource location of the first time-frequency resource, duration of a first transmission time interval in the DL, and duration of a second transmission time interval in an uplink UL; and

sending feedback information on the second time-frequency resource in the UL, wherein the feedback information is used to indicate a receiving status of the transport block.

**2.** The method according to claim 1, wherein after the receiving transport block control information sent by a base station on a first time-frequency resource in a downlink DL, the method further comprises:

receiving, on a time-frequency resource indicated by the transport block control information, the transport block sent by the base station, wherein

the transport block control information comprises at least transmission location information of the transport block or information of a physical layer downlink control channel PDCCH related to the transport block.

**3.** The method according to claim 1, wherein the determining a time domain resource of a second time-frequency resource based on a resource location of the first time-frequency resource, duration of a first transmission time interval in the DL, and duration of a second transmission time interval in an uplink UL comprises:

determining duration of any second transmission time interval frame in an $(n+k)^{th}$ subframe location corresponding to the DL, in the UL as the time domain resource of the second time-frequency resource; or

determining duration of any second transmission time interval frame other than a first second transmission time interval frame and/or a last second transmission time interval frame in an $(n+k)^{th}$ subframe location corresponding to the DL, in the UL as the time domain resource of the second time-frequency resource; or

determining duration of a second transmission time interval frame specified in an $(n+k)^{th}$ subframe location corresponding to the DL, in the UL as the time domain resource of the second time-frequency resource; or

determining duration of an $m^{th}$ second transmission time interval frame after a $[k*(TTI\_DL/TTI\_UL)]^{th}$ second transmission time interval frame after an $n^{th}$ subframe in the UL as the time domain resource of the second time-frequency resource, wherein "[ ]" indicates a rounding operator, TTI_DL and TTI_UL respectively indicate duration of one transmission time interval in the DL and duration of one transmission time interval in the UL, and m is a natural number; wherein

n indicates a subframe number of a subframe in which the first time-frequency resource is located.

**4.** The method according to claim 1, wherein the method further comprises:
receiving second transmission time interval frame configuration information, and determining the time domain resource of the second time-frequency resource according to the second transmission time interval configuration information, wherein the second transmission time interval frame configuration information carries time domain resource information of the second time-frequency resource.

**5.** The method according to claim 4, wherein the time domain resource information of the second time-frequency resource is time domain resource information corresponding to a second transmission time interval frame specified in an $(n+k)^{th}$ subframe location corresponding to the DL, in the UL; or

the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, wherein "[ ]" indicates a rounding operator, TTI_DL and TTI_UL respectively indicate duration of one transmission time interval in the DL and duration of one transmission time interval in the UL, and m is a natural number; wherein

n indicates a subframe number of a subframe in which the first time-frequency resource is located.

**6.** The method according to claim 4, wherein the receiving second transmission time interval frame configuration information comprises:

receiving information carried on a PDCCH and sent by the base station, wherein the information carried on the PDCCH comprises at least the second transmission time interval frame configuration information; or
receiving Medium Access Control layer MAC signaling sent by the base station, wherein the MAC signaling carries the second transmission time interval frame configuration information; or
receiving radio resource control protocol layer RRC signaling sent by the base station, wherein the RRC signaling carries the second transmission time interval frame configuration information; or
receiving the second transmission time interval frame configuration information with reference to at least two of the foregoing three methods.

**7.** The method according to any one of claims 3 to 5, wherein the second time-frequency resource information is indicated by a subframe number of the network system and a subframe number of a second transmission time interval frame in the UL in a subframe of the network system; or
the time domain resource information of the second time-frequency resource is indicated by an absolute time; or
the time domain resource information of the second time-frequency resource is indicated by an absolute number of a second transmission time interval frame in the UL; or
the time domain resource information of the second time-frequency resource is indicated by an index value of a second transmission time interval frame in the UL; or
the time domain resource information of the second time-frequency resource is indicated by a subframe number of the network system and an index value of a second transmission time interval frame in the UL.

**8.** The method according to claim 7, wherein the method further comprises:
receiving first scheduling information sent by the base station, wherein the first scheduling information carries the time domain resource information of the second time-frequency resource.

**9.** The method according to claim 1, wherein if the transport block is cross-subframe scheduled, the first time-frequency resource is a location in a subframe used for the base station to send a transport block carried in a downlink shared channel PDSCH; or
the first time-frequency resource is a location in a subframe used for the base station to send information carried on a PDCCH.

**10.** The method according to claim 1, wherein the method further comprises:

when the duration of the first transmission time interval in the DL is shorter than or equal to the duration of the second transmission time interval in the UL, if a plurality of transport blocks sent by the base station are received in a subframe in the DL, sending, on the second time-frequency resource, a plurality of pieces of feedback information carried in a PUCCH about the plurality of transport blocks; or
when the duration of the first transmission time interval in the DL is shorter than or equal to the duration of the second transmission time interval in the UL, if a finite quantity of transport blocks sent by the base station are received in a subframe in the DL, sending, on the second time-frequency resource, a finite quantity of pieces of feedback information carried in the PUCCH about the finite quantity of transport blocks.

**11.** The method according to claim 10, wherein before the sending, on the second time-frequency resource, a plurality of pieces of feedback information carried in a PUCCH about the plurality of transport blocks, the method further comprises:
receiving second scheduling information sent by the base station, wherein the second scheduling information carries the first time-frequency resource information, and the first time-frequency resource information comprises a time-frequency resource location of a first transmission time interval frame.

**12.** The method according to claim 11, wherein the receiving second scheduling information sent by the base station comprises:

receiving information carried on a PDCCH and sent by the base station, wherein the information carried on the PDCCH carries the second scheduling information; or

receiving MAC signaling sent by the base station, wherein the MAC signaling carries the second scheduling information; or
receiving RRC signaling sent by the base station, wherein the RRC signaling carries the second scheduling information; or
receiving the second scheduling information with reference to at least two of the foregoing three methods.

**13.** The method according to claim 10, wherein the method further comprises:

if a feedback bit is used to indicate the plurality of pieces of feedback information, when the plurality of transport blocks are all received correctly, the feedback bit is 1; or
when at least one of the plurality of transport blocks is not received correctly, the feedback bit is 0.

**14.** The method according to claim 1, 3, 9, or 10, wherein a time domain resource of the first time-frequency resource is a time domain resource corresponding to an $m^{th}$ first transmission time interval frame of an $n^{th}$ subframe in the DL.

**15.** The method according to claim 14, wherein the method further comprises:

receiving the information carried on the PDCCH and sent by the base station, wherein the information carried on the PDCCH comprises at least a value of m; or
receiving Medium Access Control layer MAC signaling sent by the base station, wherein the MAC signaling carries a value of m; or
receiving radio resource control protocol layer RRC signaling sent by the base station, wherein the RRC signaling carries a value of m; or
receiving a value of m with reference to at least two of the foregoing three methods.

**16.** The method according to claim 10, wherein after the plurality of pieces of feedback information carried in the PUCCH about the plurality of transport blocks or the finite quantity of pieces of feedback information carried in the PUCCH about the finite quantity of transport blocks are sent on the second time-frequency resource, the method further comprises:

receiving third scheduling information sent by the base station, wherein the third scheduling information comprises at least the third time-frequency resource; and
receiving the transport block retransmitted by the base station on the third time-frequency resource.

**17.** The method according to claim 16, wherein a time domain resource of the third time-frequency resource is a time domain resource corresponding to an $m'^{th}$ first transmission time interval frame of an $(n+k+k')^{th}$ subframe in the DL, where k' is a natural number, and m' is a natural number.

**18.** The method according to claim 17, wherein the method further comprises:

receiving fourth scheduling information sent by the base station, wherein the fourth scheduling information carries a value of m'; or
receiving fifth scheduling information sent by the base station, and determining a value of m' according to the fifth scheduling information.

**19.** The method according to claim 10, wherein before the sending, on the second time-frequency resource, a plurality of pieces of feedback information carried in a PUCCH about the plurality of transport blocks, the method further comprises:
receiving, in a subframe in the DL, information carried in a plurality of short transmission time interval frames on a shared channel PDSCH and sent by the base station, wherein the information carried in the plurality of short transmission time interval frames comprises at least the plurality of transport blocks.

**20.** The method according to claim 19, wherein the method further comprises:

determining a time domain resource in which information carried in a first short transmission time interval frame in the plurality of short transmission time interval frames is located, as a time domain resource of the first time-frequency resource; or
determining a time domain resource in which information carried in a short transmission time interval frame specified in the plurality of short transmission time interval frames is located, as a time domain resource of the first time-frequency resource; or

determining a time domain resource in which control information corresponding to the plurality of short transmission time interval frames is located, as a time domain resource of the first time-frequency resource.

**21.** The method according to claim 3 or 5, wherein a value of k is 4 and/or a natural number less than 4.

**22.** The method according to any one of claims 1 to 21, wherein duration of each time interval frame in the UL and the DL is shorter than or equal to 0.5 ms, and each time interval frame comprises Z OFDM symbols, wherein Z is any integer that is greater than or equal to 1 and less than or equal to 7.

**23.** A method for sending feedback information, wherein the method comprises:

receiving a transport block sent by user equipment UE on a first time-frequency resource in an uplink UL;

determining a time domain resource of a second time-frequency resource according to a location of the first time-frequency resource, duration of a first transmission time interval in a downlink DL, and duration of a second transmission time interval in the UL; and

sending feedback information on the second time-frequency resource in the DL, wherein the feedback information is used to indicate a receiving status of the transport block.

**24.** The method according to claim 23, wherein before the receiving a transport block sent by user equipment UE on a first time-frequency resource in an uplink UL, the method further comprises:

sending physical layer downlink control signaling to the UE, so that the UE determines the first time-frequency resource in the UL according to the physical layer downlink control signaling.

**25.** The method according to claim 23 or 24, wherein a time domain resource of the first time-frequency resource is a time domain resource corresponding to any second transmission time interval frame in an $n^{th}$ subframe location in the UL; or

a time domain resource of the first time-frequency resource is a time domain resource corresponding to any second transmission time interval frame other than a first second transmission time interval frame and/or a last second transmission time interval frame in an $n^{th}$ subframe location in the UL; or

a time domain resource of the first time-frequency resource is a time domain resource corresponding to an $m^{th}$ second transmission time interval frame in an $n^{th}$ subframe location in the UL, wherein m is a natural number; wherein n indicates a subframe number of a subframe in which the first time-frequency resource is located.

**26.** The method according to claim 17, wherein the determining a time domain resource of a second time-frequency resource according to a location of the first time-frequency resource, duration of a first transmission time interval in a downlink DL, and duration of a second transmission time interval in the UL comprises:

determining duration of any second transmission time interval frame in an $(n+k)^{th}$ subframe location corresponding to the UL, in the DL as the time domain resource of the second time-frequency resource; or

determining duration of any second transmission time interval frame other than a first second transmission time interval frame and/or a last second transmission time interval frame in an $(n+k)^{th}$ subframe location corresponding to the UL, in the DL as the time domain resource of the second time-frequency resource; or

determining duration of a second transmission time interval frame specified in an $(n+k)^{th}$ subframe location corresponding to the UL, in the DL as the time domain resource of the second time-frequency resource; or

determining duration of an $m^{th}$ second transmission time interval frame after a $[k*(TTI\_DL/TTI\_UL)]^{th}$ second transmission time interval frame after an $n^{th}$ subframe in the DL as the time domain resource of the second time-frequency resource, wherein "[ ]" indicates a rounding operator, TTI_DL and TTI_UL respectively indicate duration of one transmission time interval in the DL and duration of one transmission time interval in the UL, and m is greater than or equal to 1 and less than or equal to a quantity of second transmission time interval frames comprised in a subframe in the UL; wherein

n indicates a subframe number of a subframe in which the first time-frequency resource is located.

**27.** The method according to claim 23, wherein the method further comprises:

sending second transmission time interval frame configuration information to the UE, wherein the second transmission time interval frame configuration information carries the time domain resource of the second time-frequency resource, and the second transmission time interval frame configuration information is used to instruct the UE to receive, on the second time-frequency resource, the feedback information sent by a base station.

**28.** The method according to claim 27, wherein time domain resource information of the second time-frequency resource is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or
time domain resource information of the second time-frequency resource is indicated by an index value of a second transmission time interval frame in the DL; or
time domain resource information of the second time-frequency resource is indicated by a subframe number of the network system and an index value of a second transmission time interval frame in the DL.

**29.** The method according to claim 23, wherein after the determining a time domain resource of a second time-frequency resource according to a location of the first time-frequency resource, duration of a first transmission time interval in a downlink DL, and duration of a second transmission time interval in the UL, the method further comprises: sending the second time-frequency resource information to the UE.

**30.** The method according to claim 29, wherein the second time-frequency resource information is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or
time domain resource information of the second time-frequency resource is indicated by an index value of a second transmission time interval frame in the DL; or
time domain resource information of the second time-frequency resource is indicated by a subframe number of the network system and an index value of a second transmission time interval frame in the UL.

**31.** The method according to claim 27, wherein the sending second transmission time interval frame configuration information to the UE comprises:

sending information carried on a PDCCH to the UE, wherein the information carried on the PDCCH carries at least the second time-frequency resource information; or
sending first scheduling information to the UE, wherein the first scheduling information carries at least the second transmission time interval frame configuration information, so that the UE determines the second time-frequency resource according to the second transmission time interval frame configuration information.

**32.** The method according to claim 31, wherein the PDCCH further carries the first time-frequency resource used for instructing the UE to send information carried in a physical layer uplink shared channel PUSCH, and the PUSCH carries at least the transport block.

**33.** The method according to claim 23, wherein the sending feedback information on the second time-frequency resource in the DL comprises:

determining a resource location of a physical hybrid repeat indicator channel PHICH of the UE based on a resource location of a physical layer uplink shared channel PUSCH of the UE; and
sending the PHICH on the second time-frequency resource in the DL, wherein the PHICH carries the feedback information.

**34.** The method according to claim 23, wherein if the duration of the first transmission time interval in the DL is longer than the duration of the second transmission time interval in the UL, and transport blocks received in a subframe in the UL are a plurality of transport blocks, and frequency domain resources occupied by the plurality of transport blocks are different from each other, the sending feedback information on the second time-frequency resource in the DL comprises:
sending feedback information about the plurality of transport blocks on the second time-frequency resource in the DL.

**35.** The method according to claim 33, wherein before the sending feedback information on the second time-frequency resource in the DL, the method further comprises:
when the duration of the first transmission time interval in the DL is longer than the duration of the second transmission time interval in the UL, receiving, in a subframe in the DL, a plurality of transport blocks sent by the UE, wherein frequency domain resources occupied by the plurality of transport blocks are different from each other.

**36.** The method according to claim 33, wherein the method further comprises:
when the duration of the first transmission time interval in the DL is longer than the duration of the second transmission time interval in the UL, if a plurality of transport blocks sent by the UE are received in a subframe in the DL, and frequency domain resources occupied by the plurality of transport blocks are the same, for feedback information about the plurality of transport blocks, performing the step of determining a resource location of a physical hybrid repeat indicator channel PHICH of the UE based on a resource location of a PUSCH of the UE.

**37.** The method according to claim 36, wherein the determining a resource location of a physical hybrid repeat indicator channel PHICH of the UE based on a resource location of a PUSCH of the UE comprises:

according to formulas:

$$n_{PHICH}^{group} = (N_{PRB}^{UL} * (m-1) + I_{PRB\_RA} + n_{DMRS}) \bmod N_{PHICH}^{group} + I_{PHICH} N_{PHICH}^{group}$$

and

$$n_{PHICH}^{seq} = ([(N_{PRB}^{UL} * (m-1) + I_{PRB\_RA}) / N_{PHICH}^{group}] + n_{DMRS}) \bmod 2 N_{SF}^{PHICH},$$

wherein m indicates any one of the plurality of transport blocks sent by the UE in an $m^{th}$ second transmission time interval frame after an $n^{th}$ subframe in the UL, $N_{SF}^{PHICH} = 4$, $n_{PHICH}^{group}$ indicates a group number of the PHICH, $n_{PHICH}^{seq}$ indicates a sequence number of the PHICH, $n_{DMRS}$ indicates a numeric value related to a DMRS, $N_{PHICH}^{group}$ indicates a group number of the PHICH, $I_{PHICH}$ is used to indicate a spreading factor for PHICH modulation, and $N_{PRB}^{UL}$ is an index value of data in a minimum frequency block in a frequency domain.

**38.** The method according to claim 23, wherein after the sending feedback information on the second time-frequency resource in the DL, the method further comprises:

sending second scheduling information to the UE, wherein the second scheduling information comprises at least the third time-frequency resource; and
receiving the transport block retransmitted by the UE on the third time-frequency resource.

**39.** The method according to claim 38, wherein a time interval between the third time-frequency resource and the second time-frequency resource is different from a time interval between the second time-frequency resource and the first time-frequency resource.

**40.** The method according to claim 26, wherein a value of k is 4 and/or a natural number less than 4.

**41.** The method according to any one of claims 23 to 39, wherein duration of each time interval frame in the UL and the DL is shorter than or equal to 0.5 ms, and each time interval frame comprises Z OFDM symbols, wherein Z is any integer that is greater than or equal to 1 and less than or equal to 7.

**42.** A method for sending feedback information, wherein the method comprises:

receiving, by UE, a transport block sent by a base station, and when a first time-frequency resource in a UL on which the UE sends a DMRS collides with a time-frequency resource in the UL on which the UE sends feedback information about the transport block, determining a second time-frequency resource in the UL according to the first time-frequency resource in the UL; and
sending the feedback information on the second time-frequency resource in the UL to the base station, wherein the feedback information is used to indicate a transmission status of the transport block.

43. The method according to claim 42, wherein the determining a second time-frequency resource in the UL according to the first time-frequency resource in the UL comprises:

determining a time-frequency resource that is nearest to the first time-frequency resource in a time domain and in which a PUCCH is located, as the second time-frequency resource; or
determining a time-frequency resource that is specified with the first time-frequency resource in a time domain and in which a PUCCH is located, as the second time-frequency resource; or
determining either of two time-frequency resources adjacent to the first time-frequency resource, as the second time-frequency resource; or
determining a time-frequency resource specified in two time-frequency resources adjacent to the first time-frequency resource, as the second time-frequency resource; or
determining a time-frequency resource in a fixed location previous or next to the first time-frequency resource, as the second time-frequency resource.

44. The method according to claim 42, wherein the method further comprises:
receiving, by the UE, at least two transport blocks sent within a same transmission time interval or adjacent or contiguous transmission time intervals, and when a time-frequency resource for sending feedback information about one transport block in the at least two data blocks collides with the first time-frequency resource, combining the feedback information about the transport block with feedback information about other transport blocks in the at least two transport blocks.

45. The method according to claim 42, wherein the method further comprises:
determining a specified time-frequency resource in which a PUCCH is located, as the second time-frequency resource.

46. The method according to claim 42, wherein the method further comprises:
sending, on the first time-frequency resource in the UL, the feedback information to the base station by carrying the feedback information in the DMRS.

47. The method according to claim 46, wherein the sending, on the first time-frequency resource in the UL, the feedback information to the base station by carrying the feedback information in the DMRS comprises:
sending, on the first time-frequency resource in the UL, the DMRS carrying the feedback information in a form of bit information or a form of reference signal amplitude information to the base station.

48. The method according to claim 42, wherein a transmission time interval in the UL is an OFDM symbol.

49. A method for sending feedback information, wherein the method comprises:

sending a transport block or transport block control information on a first time-frequency resource in a DL to UE; and
receiving feedback information sent by the UE on a second time-frequency resource, wherein the feedback information is used to indicate a receiving status of the transport block.

50. The method according to claim 49, wherein after the sending transport block control information on a first time-frequency resource in a DL to UE, the method further comprises:
sending the transport block on a time-frequency resource indicated by the transport block control information to the UE, wherein the transport block control information comprises at least transmission location information of the transport block or information of a physical layer downlink control channel PDCCH related to the transport block.

51. The method according to claim 49, wherein the method further comprises:
sending second transmission time interval frame configuration information to the UE, so that the UE determines a time domain resource of the second time-frequency resource according to the second transmission time interval configuration information, wherein the second transmission time interval frame configuration information carries time domain resource information of the second time-frequency resource.

**52.** The method according to claim 51, wherein the second transmission time interval frame configuration information comprises:

the time domain resource information of the second time-frequency resource, wherein the time domain resource information of the second time-frequency resource is time domain resource information corresponding to a second transmission time interval frame specified in an $(n+k)^{th}$ subframe location corresponding to the DL, in the UL; or
the time domain resource information of the second time-frequency resource, wherein the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, wherein "[ ]" indicates a rounding operator, TTI_DL and TTI_UL respectively indicate duration of one transmission time interval in the DL and duration of one transmission time interval in the UL, and m is a natural number; wherein
n indicates a subframe number of a subframe in which the first time-frequency resource is located.

**53.** The method according to claim 51, wherein the sending second transmission time interval frame configuration information to the UE comprises:

sending information carried on a PDCCH to the UE, wherein the information carried on the PDCCH comprises at least the second transmission time interval frame configuration information; or
sending Medium Access Control layer MAC signaling to the UE, wherein the MAC signaling carries the second transmission time interval frame configuration information; or
sending radio resource control protocol layer RRC signaling to the UE, wherein the RRC signaling carries the second transmission time interval frame configuration information; or
sending the second transmission time interval frame configuration information with reference to at least two of the foregoing three methods.

**54.** The method according to any one of claims 51 to 53, wherein the second time-frequency resource information is indicated by a subframe number of the network system and a subframe number of a second transmission time interval frame in the UL in a subframe of the network system; or
the time domain resource information of the second time-frequency resource is indicated by an absolute time; or
the time domain resource information of the second time-frequency resource is indicated by an absolute number of a second transmission time interval frame in the UL; or
the time domain resource information of the second time-frequency resource is indicated by an index value of a second transmission time interval frame in the UL; or
the time domain resource information of the second time-frequency resource is indicated by a subframe number of the network system and an index value of a second transmission time interval frame in the UL.

**55.** The method according to claim 54, wherein the method further comprises:
sending first scheduling information to the UE, wherein the first scheduling information carries the time domain resource information of the second time-frequency resource.

**56.** The method according to claim 49, wherein if the transport block is cross-subframe scheduled, the first time-frequency resource is a location in a subframe used for sending a transport block carried in a downlink shared channel PDSCH; or
the first time-frequency resource is a location in a subframe used for sending information carried on a PDCCH.

**57.** The method according to claim 49, wherein the method further comprises:

when duration of a first transmission time interval in the DL is shorter than or equal to duration of a second transmission time interval in the UL, if a base station sends a plurality of transport blocks in a subframe in the DL, receiving, on the second time-frequency resource, a plurality of pieces of feedback information carried in a PUCCH about the plurality of transport blocks and sent by the UE; or
when duration of a first transmission time interval in the DL is shorter than or equal to duration of a second transmission time interval in the UL, if the base station sends a finite quantity of transport blocks in a subframe in the DL, receiving, on the second time-frequency resource, a finite quantity of pieces of feedback information carried in the PUCCH about the finite quantity of transport blocks and sent by the UE.

**58.** The method according to claim 49, wherein before the receiving feedback information sent by the UE on a second time-frequency resource, the method further comprises:
sending second scheduling information to the UE, wherein the second scheduling information carries the first time-frequency resource information, and the first time-frequency resource information comprises a time-frequency resource location of a first transmission time interval frame.

**59.** The method according to claim 58, wherein the sending second scheduling information to the UE comprises:

sending information carried on a PDCCH to the UE, wherein the information carried on the PDCCH comprises at least the second transmission time interval frame configuration information; or
sending Medium Access Control layer MAC signaling to the UE, wherein the MAC signaling carries the second transmission time interval frame configuration information; or
sending radio resource control protocol layer RRC signaling to the UE, wherein the RRC signaling carries the second transmission time interval frame configuration information; or
sending the second transmission time interval frame configuration information with reference to at least two of the foregoing three methods.

**60.** The method according to claim 49, wherein a time domain resource of the first time-frequency resource is a time domain resource corresponding to an $m^{th}$ first transmission time interval frame of an $n^{th}$ subframe in the DL.

**61.** The method according to claim 60, wherein the method further comprises:

sending information carried on a PDCCH to the UE, wherein the information carried on the PDCCH comprises at least a value of m; or
sending Medium Access Control layer MAC signaling to the UE, wherein the MAC signaling carries a value of m; or
sending radio resource control protocol layer RRC signaling to the UE, wherein the RRC signaling carries a value of m; or
sending a value of m with reference to at least two of the foregoing three methods.

**62.** The method according to claim 58, wherein after the receiving feedback information sent by the UE on a second time-frequency resource, or after receiving a finite quantity of pieces of feedback information about a finite quantity of transport blocks, the method further comprises:

sending third scheduling information to the UE, wherein the third scheduling information comprises at least the third time-frequency resource; and
retransmitting the transport block on the third time-frequency resource to the UE.

**63.** The method according to claim 62, wherein a time domain resource of the third time-frequency resource is a time domain resource corresponding to an $m'^{th}$ first transmission time interval frame of an $(n+k+k')^{th}$ subframe in the DL, where k' is a natural number, and m' is a natural number.

**64.** The method according to claim 63, wherein the method further comprises:

sending fourth scheduling information to the UE, wherein the fourth scheduling information carries a value of m'; or
sending fifth scheduling information to the UE, so that the UE determines a value of m' according to the fifth scheduling information.

**65.** The method according to claim 57, wherein before the receiving, on the second time-frequency resource, a plurality of pieces of feedback information carried in a PUCCH about the plurality of transport blocks and sent by the UE, the method further comprises:
sending, in a subframe in the DL, information carried in a plurality of short transmission time interval frames on a shared channel PDSCH to the UE, wherein the information carried in the plurality of short transmission time interval frames comprises at least the plurality of transport blocks.

**66.** The method according to claim 52, wherein a value of k is 4 and/or a natural number less than 4.

**67.** The method according to any one of claims 49 to 66, wherein duration of each time interval frame in the UL and the DL is shorter than or equal to 0.5 ms, and each time interval frame comprises Z OFDM symbols, wherein Z is any integer that is greater than or equal to 1 and less than or equal to 7.

**68.** A method for sending feedback information, wherein the method comprises:

sending a transport block on a first time-frequency resource in a UL to a base station; and
receiving feedback information sent by the base station on a second time-frequency resource in a DL, wherein the feedback information is used to indicate a receiving status of the transport block.

**69.** The method according to claim 68, wherein before the sending a transport block on a first time-frequency resource in a UL to a base station, the method further comprises:
receiving physical layer downlink control signaling sent by the base station, and determining the first time-frequency resource in the UL according to the physical layer downlink control signaling.

**70.** The method according to claim 68 or 69, wherein a time domain resource of the first time-frequency resource is a time domain resource corresponding to any second transmission time interval frame in an $n^{th}$ subframe location in the UL; or
a time domain resource of the first time-frequency resource is a time domain resource corresponding to any second transmission time interval frame other than a first second transmission time interval frame and/or a last second transmission time interval frame in an $n^{th}$ subframe location in the UL; or
a time domain resource of the first time-frequency resource is a time domain resource corresponding to an $m^{th}$ second transmission time interval frame in an $n^{th}$ subframe location in the UL, wherein m is a natural number; wherein n indicates a subframe number of a subframe in which the first time-frequency resource is located.

**71.** The method according to claim 68, wherein the method further comprises:
receiving second transmission time interval frame configuration information sent by the base station, wherein the second transmission time interval frame configuration information carries a time domain resource of the second time-frequency resource, and the second transmission time interval frame configuration information is used to instruct UE to receive, on the second time-frequency resource, the feedback information sent by the base station.

**72.** The method according to claim 71, wherein time domain resource information of the second time-frequency resource is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or
time domain resource information of the second time-frequency resource is indicated by an index value of a second transmission time interval frame in the DL; or
time domain resource information of the second time-frequency resource is indicated by a subframe number of the network system and an index value of a second transmission time interval frame in the DL.

**73.** The method according to claim 68, wherein before the receiving feedback information sent by the base station on a second time-frequency resource in a DL, the method further comprises:
receiving second time-frequency resource information sent by the base station.

**74.** The method according to claim 73, wherein the second time-frequency resource information is indicated by a subframe number of the network system and a frame number of a second transmission time interval frame in the DL in a subframe of the network system; or
time domain resource information of the second time-frequency resource is indicated by an absolute time; or
time domain resource information of the second time-frequency resource is indicated by an absolute number of a second transmission time interval frame in the DL; or
time domain resource information of the second time-frequency resource is indicated by an index value of a second transmission time interval frame in the DL; or
time domain resource information of the second time-frequency resource is indicated by a subframe number of the network system and an index value of a second transmission time interval frame in the UL.

**75.** The method according to claim 71, wherein the receiving second transmission time interval frame configuration information sent by the base station comprises:

receiving information carried on a PDCCH and sent by the base station, wherein the information carried on the PDCCH carries at least the second time-frequency resource information; or

receiving first scheduling information sent by the base station, wherein the first scheduling information carries at least the second transmission time interval frame configuration information, and determining the second time-frequency resource according to the second transmission time interval frame configuration information.

**76.** The method according to claim 75, wherein the PDCCH further carries the first time-frequency resource used for instructing the UE to send information carried in a physical layer uplink shared channel PUSCH, and the PUSCH carries at least the transport block.

**77.** The method according to claim 68, wherein the receiving feedback information sent by the base station on a second time-frequency resource in a DL comprises:

receiving a PHICH sent by the base station on the second time-frequency resource in the DL, wherein the PHICH carries the feedback information.

**78.** The method according to claim 68, wherein if duration of a first transmission time interval in the DL is longer than duration of a second transmission time interval in the UL, and transport blocks sent in a subframe in the UL are a plurality of transport blocks, and frequency domain resources occupied by the plurality of transport blocks are different from each other, the receiving feedback information sent by the base station on a second time-frequency resource in a DL comprises:

receiving feedback information about the plurality of transport blocks that is sent by the base station on the second time-frequency resource in the DL.

**79.** The method according to claim 77, wherein before the receiving feedback information sent by the base station on a second time-frequency resource in a DL, the method further comprises:

when duration of a first transmission time interval in the DL is longer than duration of a second transmission time interval in the UL, sending a plurality of transport blocks in a subframe in the DL to the base station, wherein frequency domain resources occupied by the plurality of transport blocks are different from each other.

**80.** The method according to claim 68, wherein after the receiving feedback information sent by the base station on a second time-frequency resource in a DL, the method further comprises:

receiving second scheduling information sent by the base station, wherein the second scheduling information comprises at least the third time-frequency resource; and

retransmitting the transport block on the third time-frequency resource to the base station.

**81.** The method according to claim 80, wherein a time interval between the third time-frequency resource and the second time-frequency resource is different from a time interval between the second time-frequency resource and the first time-frequency resource.

**82.** The method according to any one of claims 68 to 81, wherein duration of each time interval frame in the UL and the DL is shorter than or equal to 0.5 ms, and each time interval frame comprises Z OFDM symbols, wherein Z is any integer that is greater than or equal to 1 and less than or equal to 7.

**83.** A method for sending feedback information, wherein the method comprises:

sending a transport block to UE; and

receiving feedback information sent by the UE on a second time-frequency resource in a UL, wherein the feedback information is used to indicate a transmission status of the transport block.

**84.** The method according to claim 83, wherein the sending a transport block to UE comprises:

sending at least two transport blocks within a same transmission time interval or adjacent or contiguous transmission time intervals.

**85.** The method according to claim 83, wherein the method further comprises:

receiving, on a first time-frequency resource in the UL, a DMRS sent by the UE, wherein the DMRS carries the feedback information.

**86.** The method according to claim 85, wherein that the DMRS carries the feedback information comprises:
the DMRS carries the feedback information in a form of bit information or a form of reference signal amplitude information.

**87.** The method according to claim 83, wherein a transmission time interval in the UL is an OFDM symbol.

**88.** An apparatus for sending feedback information, wherein the apparatus comprises:

a receiving module, configured to receive a transport block or transport block control information sent by a base station on a first time-frequency resource in a downlink DL;
a determining module, configured to determine a time domain resource of a second time-frequency resource based on a resource location of the first time-frequency resource, duration of a first transmission time interval in the DL, and duration of a second transmission time interval in an uplink UL; and
a sending module, configured to send feedback information on the second time-frequency resource that is in the UL and is determined by the determining module, wherein the feedback information is used to indicate a receiving status of the transport block.

**89.** The apparatus according to claim 88, wherein the receiving module is further configured to receive, on a time-frequency resource indicated by the transport block control information, the transport block sent by the base station, wherein the transport block control information comprises at least transmission location information of the transport block or information of a physical layer downlink control channel PDCCH related to the transport block.

**90.** The apparatus according to claim 88, wherein the determining module is configured to:

determine duration of any second transmission time interval frame in an $(n+k)^{th}$ subframe location corresponding to the DL, in the UL as the time domain resource of the second time-frequency resource; or
determine duration of any second transmission time interval frame other than a first second transmission time interval frame and/or a last second transmission time interval frame in an $(n+k)^{th}$ subframe location corresponding to the DL, in the UL as the time domain resource of the second time-frequency resource; or
determine duration of a second transmission time interval frame specified in an $(n+k)^{th}$ subframe location corresponding to the DL, in the UL as the time domain resource of the second time-frequency resource; or
determine duration of an $m^{th}$ second transmission time interval frame after a $[k*(TTI\_DL/TTI\_UL)]^{th}$ second transmission time interval frame after an $n^{th}$ subframe in the UL as the time domain resource of the second time-frequency resource, wherein "[ ]" indicates a rounding operator, TTI_DL and TTI_UL respectively indicate duration of one transmission time interval in the DL and duration of one transmission time interval in the UL, and m is a natural number; wherein
n indicates a subframe number of a subframe in which the first time-frequency resource is located.

**91.** The apparatus according to claim 88, wherein the receiving module is further configured to receive second transmission time interval frame configuration information, and determine the time domain resource of the second time-frequency resource according to the second transmission time interval configuration information, wherein the second transmission time interval frame configuration information carries time domain resource information of the second time-frequency resource.

**92.** The apparatus according to claim 88, wherein the time domain resource information of the second time-frequency resource is time domain resource information corresponding to a second transmission time interval frame specified in an $(n+k)^{th}$ subframe location corresponding to the DL, in the UL; or
the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, wherein "[ ]" indicates a rounding operator, TTI_DL and TTI_UL respectively indicate duration of one transmission time interval in the DL and duration of one transmission time interval in the UL, and m is a natural number; wherein
n indicates a subframe number of a subframe in which the first time-frequency resource is located.

**93.** The apparatus according to claim 88, wherein the second time-frequency resource information is indicated by a subframe number of the network system and a subframe number of a second transmission time interval frame in the UL in a subframe of the network system; or
the time domain resource information of the second time-frequency resource is indicated by an absolute time; or

the time domain resource information of the second time-frequency resource is indicated by an absolute number of a second transmission time interval frame in the UL; or
the time domain resource information of the second time-frequency resource is indicated by an index value of a second transmission time interval frame in the UL; or
the time domain resource information of the second time-frequency resource is indicated by a subframe number of the network system and an index value of a second transmission time interval frame in the UL.

**94.** The apparatus according to claim 88, wherein the receiving module is further configured to:

receive first scheduling information sent by the base station, wherein the first scheduling information carries the time domain resource information of the second time-frequency resource.
In an eighth possible implementation of the seventh aspect of the present invention, if the transport block is cross-subframe scheduled, the first time-frequency resource is a location in a subframe used for the base station to send a transport block carried in a downlink shared channel PDSCH; or
the first time-frequency resource is a location in a subframe used for the base station to send information carried on a PDCCH.

**95.** The apparatus according to claim 88, wherein the sending module is further configured to:

when the duration of the first transmission time interval in the DL is shorter than or equal to the duration of the second transmission time interval in the UL, if a plurality of transport blocks sent by the base station are received in a subframe in the DL, send, on the second time-frequency resource, a plurality of pieces of feedback information carried in a PUCCH about the plurality of transport blocks; or
when the duration of the first transmission time interval in the DL is shorter than or equal to the duration of the second transmission time interval in the UL, if a finite quantity of transport blocks sent by the base station are received in a subframe in the DL, send, on the second time-frequency resource, a finite quantity of pieces of feedback information carried in the PUCCH about the finite quantity of transport blocks.

**96.** The apparatus according to claim 88, wherein the receiving module is further configured to:
receive second scheduling information sent by the base station, wherein the second scheduling information carries the first time-frequency resource information, and the first time-frequency resource information comprises a time-frequency resource location of a first transmission time interval frame.

**97.** The apparatus according to claim 88, wherein that the receiving module is further configured to receive second scheduling information sent by the base station comprises:

receiving information carried on a PDCCH and sent by the base station, wherein the information carried on the PDCCH carries the second scheduling information; or
receiving MAC signaling sent by the base station, wherein the MAC signaling carries the second scheduling information; or
receiving RRC signaling sent by the base station, wherein the RRC signaling carries the second scheduling information; or
receiving the second scheduling information with reference to at least two of the foregoing three methods.

**98.** The apparatus according to claim 88, wherein if a feedback bit is used to indicate the plurality of pieces of feedback information, when the plurality of transport blocks are all received correctly, the feedback bit is 1; or when at least one of the plurality of transport blocks is not received correctly, the feedback bit is 0.

**99.** The apparatus according to claim 88, wherein a time domain resource of the first time-frequency resource is a time domain resource corresponding to an $m^{th}$ first transmission time interval frame of an $n^{th}$ subframe in the DL.
In a fourteenth possible implementation of the seventh aspect of the present invention, the receiving module is further configured to:

receive the information carried on the PDCCH and sent by the base station, wherein the information carried on the PDCCH comprises at least a value of m; or
receive Medium Access Control layer MAC signaling sent by the base station, wherein the MAC signaling carries a value of m; or
receive radio resource control protocol layer RRC signaling sent by the base station, wherein the RRC signaling carries a value of m; or
receive a value of m with reference to at least two of the foregoing three methods.

**100.** The apparatus according to claim 88, wherein the receiving module is further configured to:

receive third scheduling information sent by the base station, wherein the third scheduling information comprises at least the third time-frequency resource; and
receive the transport block retransmitted by the base station on the third time-frequency resource.

**101.** The apparatus according to claim 88, wherein a time domain resource of the third time-frequency resource is a time domain resource corresponding to an m'th first transmission time interval frame of an $(n+k+k')$th subframe in the DL, where k' is a natural number, and m' is a natural number.

**102.** The apparatus according to claim 88, wherein the receiving module is further configured to:

receive fourth scheduling information sent by the base station, wherein the fourth scheduling information carries a value of m'; or
receive fifth scheduling information sent by the base station, and determine a value of m' according to the fifth scheduling information.

**103.** The apparatus according to claim 88, wherein the receiving module is further configured to:
receive, in a subframe in the DL, information carried in a plurality of short transmission time interval frames on a shared channel PDSCH and sent by the base station, wherein the information carried in the plurality of short transmission time interval frames comprises at least the plurality of transport blocks.

**104.** The apparatus according to claim 88, wherein the apparatus further comprises a first time-frequency resource determining module, wherein the first time-frequency resource determining module is configured to:

determine a time domain resource in which information carried in a first short transmission time interval frame in the plurality of short transmission time interval frames is located, as a time domain resource of the first time-frequency resource; or
determine a time domain resource in which information carried in a short transmission time interval frame specified in the plurality of short transmission time interval frames is located, as a time domain resource of the first time-frequency resource; or
determine a time domain resource in which control information corresponding to the plurality of short transmission time interval frames is located, as a time domain resource of the first time-frequency resource.

**105.** The apparatus according to claim 88, wherein a value of k is 4 and/or a natural number less than 4.

**106.** The apparatus according to claim 88, wherein duration of each time interval frame in the UL and the DL is shorter than or equal to 0.5 ms, and each time interval frame comprises Z OFDM symbols, wherein Z is any integer that is greater than or equal to 1 and less than or equal to 7.

**107.** An apparatus for sending feedback information, wherein the apparatus comprises:

a receiving module, configured to receive a transport block sent by user equipment UE on a first time-frequency resource in an uplink UL;
a determining module, configured to determine a time domain resource of a second time-frequency resource according to a location of the first time-frequency resource, duration of a first transmission time interval in a downlink DL, and duration of a second transmission time interval in the UL; and
a sending module, configured to send feedback information on the second time-frequency resource that is in the DL and is determined by the determining module, wherein the feedback information is used to indicate a receiving status of the transport block.

**108.** The apparatus according to claim 107, wherein the sending module is further configured to:
send physical layer downlink control signaling to the UE, so that the UE determines the first time-frequency resource in the UL according to the physical layer downlink control signaling.

**109.** The apparatus according to claim 107, wherein a time domain resource of the first time-frequency resource is a time domain resource corresponding to any second transmission time interval frame in an $n^{th}$ subframe location in the UL; or

a time domain resource of the first time-frequency resource is a time domain resource corresponding to any second transmission time interval frame other than a first second transmission time interval frame and/or a last second transmission time interval frame in an $n^{th}$ subframe location in the UL; or

a time domain resource of the first time-frequency resource is a time domain resource corresponding to an $m^{th}$ second transmission time interval frame in an $n^{th}$ subframe location in the UL, wherein m is a natural number; wherein n indicates a subframe number of a subframe in which the first time-frequency resource is located.

**110.** The apparatus according to claim 107, wherein the determining module is configured to:

determine duration of any second transmission time interval frame in an $(n+k)^{th}$ subframe location corresponding to the UL, in the DL as the time domain resource of the second time-frequency resource; or

determine duration of any second transmission time interval frame other than a first second transmission time interval frame and/or a last second transmission time interval frame in an $(n+k)^{th}$ subframe location corresponding to the UL, in the DL as the time domain resource of the second time-frequency resource; or

determine duration of a second transmission time interval frame specified in an $(n+k)^{th}$ subframe location corresponding to the UL, in the DL as the time domain resource of the second time-frequency resource; or

determine duration of an $m^{th}$ second transmission time interval frame after a $[k*(TTI\_DL/TTI\_UL)]^{th}$ second transmission time interval frame after an $n^{th}$ subframe in the DL as the time domain resource of the second time-frequency resource, wherein "[ ]" indicates a rounding operator, TTI_DL and TTI_UL respectively indicate duration of one transmission time interval in the DL and duration of one transmission time interval in the UL, and m is greater than or equal to 1 and less than or equal to a quantity of second transmission time interval frames comprised in a subframe in the UL; wherein

n indicates a subframe number of a subframe in which the first time-frequency resource is located.

**111.** The apparatus according to claim 107, wherein the sending module is further configured to:
send second transmission time interval frame configuration information to the UE, wherein the second transmission time interval frame configuration information carries the time domain resource of the second time-frequency resource, and the second transmission time interval frame configuration information is used to instruct the UE to receive, on the second time-frequency resource, the feedback information sent by a base station.

**112.** The apparatus according to claim 107, wherein the sending module is configured to:

determine a resource location of a physical hybrid repeat indicator channel PHICH of the UE based on a resource location of a physical layer uplink shared channel PUSCH of the UE; and
send the PHICH on the second time-frequency resource in the DL, wherein the PHICH carries the feedback information.

**113.** The apparatus according to claim 107, wherein if the duration of the first transmission time interval in the DL is longer than the duration of the second transmission time interval in the UL, and transport blocks received in a subframe in the UL are a plurality of transport blocks, and frequency domain resources occupied by the plurality of transport blocks are different from each other, the sending module is configured to send feedback information about the plurality of transport blocks on the second time-frequency resource in the DL.

**114.** The apparatus according to claim 107, wherein the sending module is further configured to:
when the duration of the first transmission time interval in the DL is longer than the duration of the second transmission time interval in the UL, receive, in a subframe in the DL, a plurality of transport blocks sent by the UE, wherein frequency domain resources occupied by the plurality of transport blocks are different from each other.

**115.** The apparatus according to claim 107, wherein the apparatus further comprises a processing module, wherein the processing module is configured to: when the duration of the first transmission time interval in the DL is longer than the duration of the second transmission time interval in the UL, if a plurality of transport blocks sent by the UE are received in a subframe in the DL, and frequency domain resources occupied by the plurality of transport blocks are the same, for feedback information about the plurality of transport blocks, perform the step of determining a resource location of a physical hybrid repeat indicator channel PHICH of the UE based on a resource location of a PUSCH of the UE.

**116.** The apparatus according to claim 107, wherein the sending module is configured to:

according to formulas:

$$n_{\text{PHICH}}^{\text{group}} = (N_{\text{PRB}}^{\text{UL}} * (m-1) + I_{\text{PRB\_RA}} + n_{\text{DMRS}}) \bmod N_{\text{PHICH}}^{\text{group}} + I_{\text{PHICH}} N_{\text{PHICH}}^{\text{group}}$$

and

$$n_{\text{PHICH}}^{\text{seq}} = ([(N_{\text{PRB}}^{\text{UL}} * (m-1) + I_{\text{PRB\_RA}}) / N_{\text{PHICH}}^{\text{group}}] + n_{\text{DMRS}}) \bmod 2N_{\text{SF}}^{\text{PHICH}},$$

wherein m indicates any one of the plurality of transport blocks sent by the UE in an $m^{\text{th}}$ second transmission time interval frame after an $n^{\text{th}}$ subframe in the UL, $N_{\text{SF}}^{\text{PHICH}} = 4$, $n_{\text{PHICH}}^{\text{group}}$ indicates a group number of the PHICH, $n_{\text{PHICH}}^{\text{seq}}$ indicates a sequence number of the PHICH, $n_{\text{DMRS}}$ indicates a numeric value related to a DMRS, $N_{\text{PHICH}}^{\text{group}}$ indicates a group number of the PHICH, $I_{\text{PHICH}}$ is used to indicate a spreading factor for PHICH modulation, and $N_{\text{PRB}}^{\text{UL}}$ is an index value of data in a minimum frequency block in a frequency domain.

**117.** The apparatus according to claim 107, wherein the sending module is further configured to send second scheduling information to the UE, wherein the second scheduling information comprises at least the third time-frequency resource; and
the receiving module is further configured to receive the transport block retransmitted by the UE on the third time-frequency resource.

**118.** The apparatus according to claim 107, wherein a time interval between the third time-frequency resource and the second time-frequency resource is different from a time interval between the second time-frequency resource and the first time-frequency resource.

**119.** The apparatus according to claim 107, wherein a value of k is 4 and/or a natural number less than 4.

**120.** The apparatus according to claim 107, wherein duration of each time interval frame in the UL and the DL is shorter than or equal to 0.5 ms, and each time interval frame comprises Z OFDM symbols, wherein Z is any integer that is greater than or equal to 1 and less than or equal to 7.

**121.** An apparatus for sending feedback information, wherein the apparatus comprises:

a determining module, configured to receive, by UE, a transport block sent by a base station, and when a first time-frequency resource in a UL on which the UE sends a DMRS collides with a time-frequency resource in the UL on which the UE sends feedback information about the transport block, determine a second time-frequency resource in the UL according to the first time-frequency resource in the UL; and
a sending module, configured to send the feedback information on the second time-frequency resource that is in the UL and is determined by the determining module to the base station, wherein the feedback information is used to indicate a transmission status of the transport block.

**122.** The apparatus according to claim 121, wherein the determining module is configured to:

determine a time-frequency resource that is nearest to the first time-frequency resource in a time domain and in which a PUCCH is located, as the second time-frequency resource; or
determine a time-frequency resource that is specified with the first time-frequency resource in a time domain and in which a PUCCH is located, as the second time-frequency resource; or
determine either of two time-frequency resources adjacent to the first time-frequency resource, as the second time-frequency resource; or
determine a time-frequency resource specified in two time-frequency resources adjacent to the first time-frequency resource, as the second time-frequency resource; or
determine a time-frequency resource in a fixed location previous or next to the first time-frequency resource, as the second time-frequency resource.

**123.** The apparatus according to claim 121, wherein the apparatus further comprises:
a feedback information combining module, configured to receive, by the UE, at least two transport blocks sent within a same transmission time interval or adjacent or contiguous transmission time intervals, and when a time-frequency resource for sending feedback information about one transport block in the at least two data blocks collides with the first time-frequency resource, combine the feedback information about the transport block with feedback information about other transport blocks in the at least two transport blocks.

**124.** The apparatus according to claim 121, wherein the sending module is further configured to:
send, on the first time-frequency resource in the UL, the feedback information to the base station by carrying the feedback information in the DMRS.

**125.** An apparatus for sending feedback information, wherein the apparatus comprises:

a sending module, configured to send a transport block or transport block control information on a first time-frequency resource in a DL to UE; and
a receiving module, configured to receive feedback information sent by the UE on a second time-frequency resource, wherein the feedback information is used to indicate a receiving status of the transport block sent by the sending module.

**126.** The apparatus according to claim 125, wherein the sending module is further configured to:
send the transport block on a time-frequency resource indicated by the transport block control information to the UE, wherein the transport block control information comprises at least transmission location information of the transport block or information of a physical layer related to the transport block.

**127.** The apparatus according to claim 125, wherein the sending module is further configured to:
send second transmission time interval frame configuration information to the UE, so that the UE determines a time domain resource of the second time-frequency resource according to the second transmission time interval configuration information, wherein the second transmission time interval frame configuration information carries time domain resource information of the second time-frequency resource.

**128.** The apparatus according to claim 127, wherein the second transmission time interval frame configuration information comprises:

the time domain resource information of the second time-frequency resource, wherein the time domain resource information of the second time-frequency resource is time domain resource information corresponding to a second transmission time interval frame specified in an $(n+k)^{th}$ subframe location corresponding to the DL, in the UL; or
the time domain resource information of the second time-frequency resource, wherein the time domain resource information of the second time-frequency resource is time domain resource information corresponding to an $m^{th}$ second transmission time interval frame after a $[k*(TTI\_DL/TTI\_UL)]^{th}$ second transmission time interval frame after an $n^{th}$ subframe in the UL, wherein "[ ]" indicates a rounding operator, TTI_DL and TTI_UL respectively indicate duration of one transmission time interval in the DL and duration of one transmission time interval in the UL, and m is a natural number; wherein
n indicates a subframe number of a subframe in which the first time-frequency resource is located.

**129.** The apparatus according to claim 127, wherein the sending module is further configured to:

send information carried on a PDCCH to the UE, wherein the information carried on the PDCCH comprises at least the second transmission time interval frame configuration information; or
send Medium Access Control layer MAC signaling to the UE, wherein the MAC signaling carries the second transmission time interval frame configuration information; or
send radio resource control protocol layer RRC signaling to the UE, wherein the RRC signaling carries the second transmission time interval frame configuration information; or
send the second transmission time interval frame configuration information with reference to at least two of the foregoing three methods.

**130.** The apparatus according to claim 125, wherein if the transport block is cross-subframe scheduled, the first time-frequency resource is a location in a subframe used for sending a transport block carried in a downlink shared channel PDSCH; or
the first time-frequency resource is a location in a subframe used for sending information carried on a PDCCH.

**131.** The apparatus according to claim 125, wherein the receiving module is further configured to:

when duration of a first transmission time interval in the DL is shorter than or equal to duration of a second transmission time interval in the UL, if a base station sends a plurality of transport blocks in a subframe in the DL, receive, on the second time-frequency resource, a plurality of pieces of feedback information carried in a PUCCH about the plurality of transport blocks and sent by the UE; or
when duration of a first transmission time interval in the DL is shorter than or equal to duration of a second transmission time interval in the UL, if the base station sends a finite quantity of transport blocks in a subframe in the DL, receive, on the second time-frequency resource, a finite quantity of pieces of feedback information carried in the PUCCH about the finite quantity of transport blocks and sent by the UE.

**132.** The apparatus according to claim 125, wherein the sending module is further configured to:
send second scheduling information to the UE, wherein the second scheduling information carries the first time-frequency resource information, and the first time-frequency resource information comprises a time-frequency resource location of a first transmission time interval frame.

**134.** An apparatus for sending feedback information, wherein the apparatus comprises:

a sending module, configured to send a transport block on a first time-frequency resource in a UL to a base station; and
a receiving module, configured to receive feedback information sent by the base station on a second time-frequency resource in a DL, wherein the feedback information is used to indicate a receiving status of the transport block sent by the sending module.

**135.** The apparatus according to claim 134, wherein the receiving module is further configured to:
receive physical layer downlink control signaling sent by the base station, and determine the first time-frequency resource in the UL according to the physical layer downlink control signaling.

**136.** The apparatus according to claim 134, wherein a time domain resource of the first time-frequency resource is a time domain resource corresponding to any second transmission time interval frame in an $n^{th}$ subframe location in the UL; or
a time domain resource of the first time-frequency resource is a time domain resource corresponding to any second transmission time interval frame other than a first second transmission time interval frame and/or a last second transmission time interval frame in an $n^{th}$ subframe location in the UL; or
a time domain resource of the first time-frequency resource is a time domain resource corresponding to an $m^{th}$ second transmission time interval frame in an $n^{th}$ subframe location in the UL, wherein m is a natural number; wherein n indicates a subframe number of a subframe in which the first time-frequency resource is located.

**137.** The apparatus according to claim 134, wherein the receiving module is further configured to:
receive second transmission time interval frame configuration information sent by the base station, wherein the second transmission time interval frame configuration information carries a time domain resource of the second time-frequency resource, and the second transmission time interval frame configuration information is used to instruct UE to receive, on the second time-frequency resource, the feedback information sent by the base station.

**138.** The apparatus according to claim 134, wherein the receiving module is configured to:
receive feedback information about the plurality of transport blocks that is sent by the base station on the second time-frequency resource in the DL.

**139.** An apparatus for sending feedback information, wherein the apparatus comprises:

a sending module, configured to send a transport block to UE; and

a receiving module, configured to receive feedback information sent by the UE on a second time-frequency resource in a UL, wherein the feedback information is used to indicate a transmission status of the transport block sent by the sending module.

**140.** The apparatus according to claim 139, wherein the sending module is configured to:
send at least two transport blocks within a same transmission time interval or adjacent or contiguous transmission time intervals.

**141.** The apparatus according to claim 139, wherein the receiving module is further configured to:
receive, on a first time-frequency resource in the UL, a DMRS sent by the UE, wherein the DMRS carries the feedback information.

**142.** The apparatus according to claim 139, wherein the receiving module is further configured to:
receive the DMRS, wherein the DMRS carries the feedback information in a form of bit information or a form of reference signal amplitude information.

Base station

UE

UE

...

DL

UL

DL

UL

DL

UL

FIG. 1

FIG. 2A

FIG. 2B

EP 3 399 683 A1

First time interval frame

Second time interval frame

FIG. 2C

| Base station | | UE |
|---|---|---|

300. A base station sends second scheduling
information in a DL to UE

301. The UE receives the second
scheduling information sent by the
base station, where the second
scheduling information carries first
time-frequency resource information

302. The base station sends a transport block
or transport block control information on a
first time-frequency resource in the downlink
DL to the UE

303. The UE receives the transport
block or the transport block control
information sent by the base station on
the first time-frequency resource in the
downlink DL

304. The UE determines a time domain
resource of a second time-frequency
resource according to a resource
location of the first time-frequency
resource, duration of a first
transmission time interval in the DL,
and duration of a second transmission
time interval in an uplink UL

TO
FIG. 3B

TO
FIG. 3B

FIG. 3A

CONT.
FROM
FIG. 3A

CONT.
FROM
FIG. 3A

305. The UE sends feedback information on the second time-frequency resource in the UL

306. The base station receives the feedback information on the second time-frequency resource in the UL

307. If the feedback information indicates that the transport block is received successfully, the process ends

308. If the feedback information indicates that the transport block is not received successfully, the base station sends third scheduling information to the UE

309. The UE receives the third scheduling information sent by the base station, where the third scheduling information includes at least a third time-frequency resource

310. The base station retransmits the transport block on the third time-frequency resource to the UE

311. The UE receives the transport block retransmitted by the base station on the third time-frequency resource

FIG. 3B

| Base station | | UE |
|---|---|---|

400. A base station sends physical layer downlink control signaling to UE, so that the UE determines a first time-frequency resource in a UL according to the physical layer downlink control signaling

401. The UE receives the physical layer downlink control signaling, and determines the first time-frequency resource in the UL according to the physical layer downlink control signaling

402. The UE sends a transport block on the first time-frequency resource in the uplink UL to the base station

403. The base station receives the transport block sent by the user equipment UE on the first time-frequency resource in the uplink UL

404. The base station determines a time domain resource of a second time-frequency resource according to a position of the first time-frequency resource, duration of a first transmission time interval in a downlink DL, and duration of a second transmission time interval in the UL

TO
FIG. 4B

TO
FIG. 4B

FIG. 4A

CONT.
FROM
FIG. 4A

CONT.
FROM
FIG. 4A

405. The base station sends feedback
information on the second time-frequency
resource in the DL

406. The UE receives the feedback
information sent by the base station on
the second time-frequency resource in
the UL

407. If the feedback information
indicates that the transport block is
received successfully, the process ends

408. If the feedback information indicates
that the transport block is not received
successfully, the base station sends
scheduling information to the UE, where the
scheduling information includes at least a
third time-frequency resource

409. The UE receives the second
scheduling information sent by the
base station

410. The UE retransmits the transport block
on the third time-frequency resource to the
base station

411. The base station receives the
transport block retransmitted by the UE
on the third time-frequency resource

FIG. 4B

74

```
┌─────────────┐                                    ┌─────────────┐
│ Base station│                                    │     UE      │
└──────┬──────┘                                    └──────┬──────┘
       │                                                  │
       │   500. A base station sends physical layer       │
       │   downlink control signaling to UE, so that the  │
       │   UE determines a first time-frequency           │
       │   resource in a UL according to the physical     │
       │   layer downlink control signaling               │
       │ ────────────────────────────────────────────────>│
       │                                                  │
       │              ┌───────────────────────────────────┴─┐
       │              │ 501. The UE receives the physical    │
       │              │ layer downlink control signaling, and│
       │              │ determines the first time-frequency  │
       │              │ resource in the UL according to the  │
       │              │ physical layer downlink control      │
       │              │ signaling                            │
       │              └───────────────────────────────────┬─┘
       │                                                  │
       │   502. The UE sends a transport block on the     │
       │   first time-frequency resource in the uplink    │
       │   UL to the base station                         │
       │ <────────────────────────────────────────────────│
       │                                                  │
┌──────┴──────────────────────────┐                       │
│ 503. The base station receives the│                     │
│ transport block sent by the user  │                     │
│ equipment UE on the first time-   │                     │
│ frequency resource in the uplink UL│                    │
└──────┬──────────────────────────┘                       │
       │                                                  │
┌──────┴──────────────────────────┐                       │
│ 504. The base station determines a│                     │
│ time-frequency resource of a second│                    │
│ time-frequency resource according to a│                 │
│ location of the first time-frequency│                   │
│ resource, duration of a first     │                     │
│ transmission time interval in a   │                     │
│ downlink DL, and duration of a second│                  │
│ transmission time interval in the UL│                   │
└──────┬──────────────────────────┘                       │
       │                                                  │
       ╰╮                                                 ╰╮

       TO                                                 TO
     FIG. 5B                                            FIG. 5B
```

FIG. 5A

CONT.
FROM
FIG. 5A

CONT.
FROM
FIG. 5A

505. The base station sends feedback information on the second time-frequency resource in the DL

506. The UE receives the feedback information sent by the base station on the second time-frequency resource in the UL

507. If the feedback information indicates that the transport block is received successfully, the process ends

508. If the feedback information indicates that the transport block is not received successfully, the base station sends scheduling information to the UE, where the scheduling information includes at least a third time-frequency resource

509. The UE receives the scheduling information sent by the base station

510. The UE retransmits the transport block on the third time-frequency resource to the base station

511. The base station receives the transport block retransmitted by the UE on the third time-frequency resource

FIG. 5B

| Base station | UE |
|---|---|

600. A base station sends a transport block in a DL to UE

601. The UE receives, in the DL, the transport block sent by the base station

602. The UE receives the transport block sent by the base station, and when a first time-frequency resource in a UL on which the UE sends a DMRS collides with a time-frequency resource in the UL on which the UE sends feedback information about the transport block, the UE determines a second time-frequency resource in the UL according to the first time-frequency resource in the UL

603. The UE sends the feedback information on the second time-frequency resource in the UL to the base station

604. The base station receives the feedback information sent by the UE on the second time-frequency resource in the UL

605. If the feedback information indicates that the transport block is received successfully, the process ends

606. If the feedback information indicates that the transport block is not received successfully, the base station retransmits the transport block on a third time-frequency resource in the DL to the UE

FIG. 6

```
┌─────────────┐
│  Receiving  │ ⌐ 701
│   module    │
└─────────────┘
       │
┌─────────────┐
│ Determining │ ⌐ 702
│   module    │
└─────────────┘
       │
┌─────────────┐
│   Sending   │ ⌐ 703
│   module    │
└─────────────┘
```

FIG. 7

```
┌─────────────┐
│  Receiving  │ ⌐ 801
│   module    │
└─────────────┘
       │
┌─────────────┐
│ Determining │ ⌐ 802
│   module    │
└─────────────┘
       │
┌─────────────┐
│   Sending   │ ⌐ 803
│   module    │
└─────────────┘
```

FIG. 8

Determining module — 901

Sending module — 902

FIG. 9

Sending module — 1001

Receiving module — 1002

FIG. 10

Sending module — 1101

Receiving module — 1102

FIG. 11

Sending module — 1201

Receiving module — 1202

FIG. 12

1302

UE

Receiver

Transmitter

Processor — 1303

Memory — 1304

1301

FIG. 13

1402

Base station

Receiver

1403

Processor

Transmitter

1401

1404

Memory

FIG. 14

<div align="center">

## INTERNATIONAL SEARCH REPORT

</div>

| | |
|---|---|
| | International application No. |
| | **PCT/CN2016/073684** |

### A. CLASSIFICATION OF SUBJECT MATTER

H04L 1/16 (2006.01) i

According to International Patent Classification (IPC) or to both national classification and IPC

### B. FIELDS SEARCHED

Minimum documentation searched (classification system followed by classification symbols)

H04L; H04Q; H04W

Documentation searched other than minimum documentation to the extent that such documents are included in the fields searched

Electronic data base consulted during the international search (name of data base and, where practicable, search terms used)

CNPAT, CNKI, EPODOC, WPI, IEEE, 3GPP: interval, FEEDBACK+, interval length, ACK, feedback information, TTI, DMRS, resource, resource location, conflict, transmission time interval, feedback channel allocation, UPLINK, harq, NACK, DOWNLINK

### C. DOCUMENTS CONSIDERED TO BE RELEVANT

| Category* | Citation of document, with indication, where appropriate, of the relevant passages | Relevant to claim No. |
|---|---|---|
| X | CN 101114868 A (DATANG MOBILE COMMUNICATIONS EQUIPMENT CO., LTD.), 30 January 2008 (30.01.2008), description, page 9, bottom line to page 11, 4th line from the bottom | 49-87, 125-132, 134-142 |
| A | CN 102017507 A (SAMSUNG SDI CO., LTD.), 13 April 2011 (13.04.2011), the whole document | 1-132, 134-142 |
| A | US 2015043433 A1 (TELEFONAKTIEBOLAGET L M ERICSSON), 12 February 2015 (12.02.2015), the whole document | 1-132, 134-142 |

☐ Further documents are listed in the continuation of Box C.  ☒ See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 21 June 2016 (21.06.2016) | **02 August 2016 (02.08.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHENG, Hao** Telephone No.: (86-10) **62413276** |
|---|---|

Form PCT/ISA/210 (second sheet) (July 2009)

# INTERNATIONAL SEARCH REPORT
## Information on patent family members

International application No.

**PCT/CN2016/073684**

| Patent Documents referred in the Report | Publication Date | Patent Family | Publication Date |
|---|---|---|---|
| CN 101114868 A | 30 January 2008 | None | |
| CN 102017507 A | 13 April 2011 | WO 2009134100 A2 | 05 November 2009 |
| | | KR 20090114802 A | 04 November 2009 |
| | | US 2009276676 A1 | 05 November 2009 |
| | | INKOLNP 201004533 E | 11 February 2011 |
| US 2015043433 A1 | 12 February 2015 | WO 2015019277 A1 | 12 February 2015 |
| | | EP 3031163 A1 | 15 June 2016 |

Form PCT/ISA/210 (patent family annex) (July 2009)